(19) Europäisches Patentamt
European Patent Office
Office européen des brevets

(11) **EP 4 361 697 A1**

(12) **EUROPEAN PATENT APPLICATION**
published in accordance with Art. 153(4) EPC

(43) Date of publication:
**01.05.2024 Bulletin 2024/18**

(21) Application number: **22857675.7**

(22) Date of filing: **11.08.2022**

(51) International Patent Classification (IPC):
**G02B 7/00** (2021.01)          **G02B 7/04** (2021.01)
**G03B 17/12** (2021.01)          **G03B 13/32** (2021.01)

(52) Cooperative Patent Classification (CPC):
**G02B 7/00; G02B 7/04; G02B 7/10; G02B 13/00;
G02B 13/18; G03B 13/32; G03B 17/12;
G03B 30/00**

(86) International application number:
**PCT/CN2022/111865**

(87) International publication number:
**WO 2023/020363 (23.02.2023 Gazette 2023/08)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **16.08.2021 CN 202110939346**

(71) Applicant: **Huawei Technologies Co., Ltd.
Longgang
Shenzhen, Guangdong 518129 (CN)**

(72) Inventors:
• **WANG, Wei
  Shenzhen, Guangdong 518129 (CN)**
• **YE, Haishui
  Shenzhen, Guangdong 518129 (CN)**
• **LIU, Chunmin
  Shenzhen, Guangdong 518129 (CN)**
• **LU, Jianlong
  Shenzhen, Guangdong 518129 (CN)**

(74) Representative: **Gill Jennings & Every LLP
The Broadgate Tower
20 Primrose Street
London EC2A 2ES (GB)**

(54) **OPTICAL LENS, CAMERA MODULE AND ELECTRONIC DEVICE**

(57)     An optical lens (10), a camera module (1), and an electronic device (100) are disclosed. The optical lens (10) includes a first lens group (G1) and a second lens group (G2) that are sequentially arranged from an object side to an image side. The first lens group (G1) and the second lens group (G2) each include at least one lens. Both the first lens group (G1) and the second lens group (G2) are capable of moving along an optical axis of the optical lens. When the optical lens (10) is in an operating state, the first lens group (G1) and the second lens group (G2) form a first spacing. When the optical lens (10) switches from the operating state to a non-operating state, the first lens group (G1) moves in a direction toward the second lens group (G2), and a spacing between the first lens group (G1) and the second lens group (G2) is less than the first spacing. When the optical lens (10) is in the non-operating state, the optical lens (10) meets the following relational expression: 0.00 mm ≤ Tv ≤ 10.0 mm, where Tv is the spacing between the first lens group (G1) and the second lens group (G2). An objective is to obtain an optical lens (10), a camera module (1), and an electronic device (100) with small thicknesses while achieving good imaging effect.

FIG. 6A

## Description

This application claims priority to Chinese Patent Application No. 202110939346.8, filed with the China National Intellectual Property Administration on August 16, 2021 and entitled "OPTICAL LENS, CAMERA MODULE, AND ELECTRONIC DEVICE", which is incorporated herein by reference in its entirety.

## TECHNICAL FIELD

This application relates to the field of optical lenses, and in particular, to an optical lens, a camera module, and an electronic device.

## BACKGROUND

With rapid popularization of portable electronic devices, electronic devices play an important role in daily life, and a user increasingly relies on portable electronic devices such as a smartphone and a tablet computer. This also makes camera functions of electronic devices more abundant and complete. To adapt to a development trend of miniaturization of electronic devices, a camera module mounted on an electronic device like a terminal also gradually tends to be designed in a miniaturization manner. How to maintain a compact camera module design and implement miniaturization of an electronic device while ensuring photographing effect of the camera module is one of problems that urgently need to be resolved currently.

## SUMMARY

Embodiments of this application provide an optical lens, a camera module including the optical lens, and an electronic device including the camera module, to obtain an optical lens and a camera module with small thicknesses and an electronic device with a small thickness while achieving good imaging effect.

According to a first aspect, an optical lens is provided. The optical lens includes a first lens group and a second lens group that are sequentially arranged from an object side to an image side. The first lens group and the second lens group each include at least one lens. Both the first lens group and the second lens group are capable of moving along an optical axis of the optical lens. When the optical lens is in an operating state, the first lens group and the second lens group form a first spacing. When the optical lens switches from the operating state to a non-operating state, the first lens group moves in a direction toward the second lens group, and a spacing between the first lens group and the second lens group is less than the first spacing. When the optical lens is in the non-operating state, the optical lens meets the following relational expression: $0.00 \text{ mm} \leq Tv \leq 10.0 \text{ mm}$, where $Tv$ is the spacing between the first lens group and the second lens group.

It can be understood that, when the optical lens is used in a camera module and the camera module is used in an electronic device, during operation of the camera module, the first lens group extends out of a housing of the electronic device, and the first lens group and the second lens group form the first spacing. When the optical lens is not operating, the first lens group moves in the direction toward the second lens group, and the spacing between the first lens group and the second lens group is less than the first spacing, so that the camera module occupies sufficiently small internal space of the housing. It can be understood that, when the first lens group and the second lens group are in a compact state, the spacing between the first lens group and the second lens group is sufficiently small, and the optical lens cannot meet an imaging standard.

During operation of the optical lens, the first lens group and the second lens group can move and expand, and the first lens group sequentially extends out of the housing of the electronic device, so that the optical lens meets the imaging standard, and the optical lens can implement an object-image conjugate relationship. To be specific, after the optical lens is expanded, the first lens group extends out of the housing, and space required after the optical lens is expanded does not need to be reserved inside the electronic device. This saves internal space of the electronic device and implements thinning of the electronic device including the camera module.

It can be understood that, when the optical lens is in the non-operating state, the optical lens is accommodated in the electronic device, and the spacing between the first lens group and the second lens group of the optical lens (a distance between a surface of a lens, closest to the image side, of the first lens group and a surface of a lens, closest to the object side, of the second lens group) is limited to range from 0.00 mm to 10 mm (including 0.00 mm and 10 mm). In this way, when the optical lens is in the non-operating state, there is no spacing or a quite small spacing between the first lens group and the second lens group, to reduce space occupied by the optical lens in the electronic device, and facilitate miniaturization of the electronic device. Certainly, in another embodiment, the distance between the surface of the lens, closest to the image side, of the first lens group and the surface of the lens, closest to the object side, of the second lens group may alternatively not be limited to the foregoing limitation.

In a possible implementation, when the optical lens is in the non-operating state, the optical lens meets the following relational expression:

$$0.00 \text{ mm} \leq Tv \leq 0.10 \text{ mm}.$$

The spacing between the first lens group and the second lens group of the optical lens (the distance between the surface of the lens, closest to the image side, of the first lens group and the surface of the lens, closest to the object side, of the second lens group) is limited to range from 0.00 mm to 0.1 mm (including 0.00 mm and 0.1 mm). In this way, when the optical lens is in the non-operating state, there is no spacing or a quite small spacing between the first lens group and the second lens group, to reduce space occupied by the optical lens in the electronic device, and facilitate miniaturization of the electronic device. Certainly, in another embodiment, the distance between the surface of the lens, closest to the image side, of the first lens group and the surface of the lens, closest to the object side, of the second lens group may alternatively not be limited to the foregoing limitation.

In a possible implementation, when the optical lens is in the non-operating state, the optical lens meets the following relational expression:

$$0.15 \text{ mm} \leq Tv \leq 10.0 \text{ mm}.$$

The spacing between the first lens group and the second lens group of the optical lens (the distance between the surface of the lens, closest to the image side, of the first lens group and the surface of the lens, closest to the object side, of the second lens group) is limited to range from 0.15 mm to 10.0 mm (including 0.15 mm and 10.0 mm). In this way, when the optical lens is in the non-operating state, there is a quite small spacing between the first lens group and the second lens group, to reduce space occupied by the optical lens in the electronic device, and facilitate miniaturization of the electronic device. Certainly, in another embodiment, the distance between the surface of the lens, closest to the image side, of the first lens group and the surface of the lens, closest to the object side, of the second lens group may alternatively not be limited to the foregoing limitation.

In a possible implementation, the optical lens includes a first lens tube, the first lens group is fastened in the first lens tube, and the first lens group partially protrudes from a side, on an image side of the first lens group, of the first lens tube. To be specific, a side, on the image side, of the first lens group is not fully accommodated in the first lens tube or is not accommodated in the first lens tube. In this way, when the first lens group moves close to the second lens group, the first lens tube for fastening the first lens group does not prevent the first lens group from moving close to and getting in contact with the second lens group, to reduce space occupied by the optical lens in the electronic device, and facilitate miniaturization of the electronic device.

In a possible implementation, when the optical lens switches from the operating state to the non-operating state, the second lens group moves toward an imaging plane of the optical lens, so that a distance between the second lens group and a photosensitive element can also be minimized, to effectively implement miniaturization of the electronic device.

In a possible implementation, when the optical lens is in the operating state, for different object distances, a distance between the first lens group and the second lens group remains unchanged, and focusing is performed based on a change of a distance from the first lens group and the second lens group to the imaging plane of the optical lens. To be specific, for different object distances, a relative distance (the first spacing) between the first lens group and the second lens group remains unchanged, and the first lens group and the second lens group perform focusing based on the different object distances.

In a possible implementation, the optical lens meets the following relational expression:

$$1.0 \leq TTLmax/TTLmin \leq 10.0,$$

where
TTL is a total track length of the optical lens, TTLmax is a maximum value of the total track length, and TTLmin is a minimum value of the total track length.

It can be understood that TTLmax is a total track length of the optical lens in the operating (expanded) state, TTLmin is a total track length of the optical lens in the non-operating (compressed) state, and TTLmax/TTLmin is a ratio of the total track length of the optical lens in the operating state to the total track length of the optical lens in the non-operating state. A larger ratio indicates that the optical lens is compressed to be more compact in the non-operating state. TTLmax/TTLmin is limited to a range of 1 to 10 (including 1 and 10), to ensure that the optical lens occupies sufficiently small space of the electronic device, and facilitate miniaturization of the electronic device. Certainly, in another implementation, the ratio of TTLmax/TTLmin may alternatively not be limited to the foregoing limitation.

In a possible implementation, the optical lens meets the following relational expression:

$$0.60 \leq \text{TTLmax}/(2 \times \text{ImgH}) \leq 10,$$

where
ImgH is a diagonal half-length of an effective pixel area of the imaging plane of the optical lens.

In this implementation, TTLmax/(2 × ImgH) is limited to a range of 0.60 to 10 (including 0.60 and 10), to ensure that the optical lens occupies sufficiently small space of the electronic device, and facilitate miniaturization of the electronic device. Certainly, in another implementation, the ratio of TTLmax/(2 × ImgH) may alternatively not be limited to the foregoing limitation.

In a possible implementation, the optical lens meets the following relational expression:

$$0.30 \leq \text{TTLmin}/(2 \times \text{ImgH}) \leq 0.60.$$

In this implementation, TTLmin/(2 × ImgH) is limited to a range of 0.30 to 0.60 (including 0.30 and 0.60), to ensure that the optical lens occupies sufficiently small space of the electronic device, and facilitate miniaturization of the electronic device. Certainly, in another implementation, the ratio of TTLmin/(2 × ImgH) may alternatively not be limited to the foregoing limitation.

In a possible implementation, the optical lens meets the following relational expression:

$$2.0 \leq \text{TTLmax}^2/(\text{ImgH} \times \text{EPD}) \leq 20,$$

where
EPD is an entrance pupil diameter of a lens group of the optical lens.

In this implementation, TTLmax$^2$/(ImgH × EPD) is limited to a range of 2.0 to 20 (including 2.0 and 20), to minimize a thickness of the optical lens on a Z axis, maximize an aperture, and improve imaging quality of the optical lens. Certainly, in another implementation, the ratio of TTLmax$^2$/(ImgH × EPD) may alternatively not be limited to the foregoing limitation.

In a possible implementation, the optical lens meets the following relational expression:

$$1.0 \leq \text{TTLmin}^2/(\text{ImgH} \times \text{EPD}) \leq 2.0.$$

In this implementation, TTLmin$^2$/(ImgH × EPD) is limited to a range of 1.0 to 2.0 (including 1.0 and 2.0), to minimize the thickness of the optical lens on the Z axis, maximize the aperture, and improve imaging quality of the optical lens. Certainly, in another implementation, the ratio of TTLmin$^2$/(ImgH × EPD) may alternatively not be limited to the foregoing limitation.

In a possible implementation, when the optical lens has a maximum total track length, the optical lens meets the following relational expression:

$$1.0 \leq \text{EFL}/\text{EPD} \leq 5.0,$$

where
EFL is a focal length of the optical lens, and EPD is an entrance pupil diameter of a lens group of the optical lens.

The foregoing relational expression specifies a range of a ratio of the focal length of the optical lens to the entrance pupil diameter of the lens group. In this implementation, when the range of the ratio of the focal length of the optical lens to the entrance pupil diameter of the lens group meets the foregoing relational expression, the optical lens can achieve better imaging effect. Certainly, in another implementation, the range of the ratio of the focal length of the optical lens to the entrance pupil diameter of the lens group may alternatively not be limited to the foregoing limitation.

In a possible implementation, the optical lens meets the following relational expression:

$$0.5 < |Fg2/Fg1| < 5.0,$$

where

Fg1 is a focal length of the first lens group, and Fg2 is a focal length of the second lens group.

The foregoing relational expression specifies a range of a ratio of the focal length of the second lens group of the optical lens to the focal length of the first lens group. In this implementation, when the range of the ratio of the focal length of the second lens group of the optical lens to the focal length of the first lens group meets the foregoing relational expression, a focal length of the entire optical lens is ensured, and optical performance of the optical lens can be ensured, so that the optical lens achieves better imaging effect. Certainly, in another implementation, the range of the ratio of the focal length of the second lens group to the focal length of the first lens group may alternatively not be limited to the foregoing limitation. In a possible implementation, the first lens group includes a first lens, a second lens, a third lens, and a fourth lens, and the second lens group includes a fifth lens, a sixth lens, and a seventh lens; or the first lens group includes a first lens, a second lens, a third lens, a fourth lens, a fifth lens, and a sixth lens, and the second lens group includes a seventh lens.

Certainly, in another embodiment, a quantity of lenses of the first lens group may alternatively be a quantity other than four and six, and a quantity of lenses of the second lens group may alternatively be a quantity other than one or three.

In a possible implementation, the optical lens meets the following relational expressions:

$$1.65 \leq Nmax < 1.85;$$

and

$$1.40 \leq Nmin < 1.58,$$

where

Nmax is a maximum refractive index of all lenses of the optical lens, and Nmin is a minimum refractive index of all the lenses of the optical lens.

In this implementation, the maximum refractive index and the minimum refractive index of the lenses of the optical lens are limited. When the maximum refractive index and the minimum refractive index of the lenses of the optical lens meet the foregoing relational expressions, it is ensured that a sufficiently wide range of materials can be used for the lenses. For example, the lenses may be made of a glass material, a resin material, or another material. The lenses are properly made of different materials to facilitate miniaturization of the optical lens and thinning of the electronic device. Certainly, in another implementation, ranges of Nmax and Nmin may alternatively not be limited to the foregoing limitation.

In a possible implementation, the optical lens meets the following relational expressions:

$$Vmin > 15, \text{ and } Vmax < 100,$$

where

Vmin is a minimum dispersion coefficient of all the lenses of the optical lens, and Vmax is a maximum dispersion coefficient of all the lenses of the optical lens.

In this implementation, dispersion coefficients of all the lenses of the optical lens are limited. When the dispersion coefficients of all the lenses of the optical lens meet the foregoing relational expressions, a capability of eliminating chromatic aberration by the optical lens can be effectively improved, to improve imaging quality of the optical lens. Certainly, in another implementation, ranges of Vmin and Vmax may alternatively not be limited to the foregoing limitation.

In a possible implementation, the optical lens meets the following relational expressions:

$$1.0 \leq |CTmax/CT1| \leq 4.0;$$

$$1.0 \leq |CTmax/CT2| \leq 4.0;$$

$$1.0 \leq |CTmax/CT3| \leq 3.0;$$

$$1.0 \leq |CTmax/CT4| \leq 3.0;$$

$$1.0 \leq |CTmax/CT5| \leq 3.0;$$

$$1.0 \leq |CTmax/CT6| \leq 3.0;$$

and

$$1.0 \leq |CTmax/CT7| \leq 3.0,$$

where

CTmax is a maximum value of a thickness of a lens of the optical lens on the optical axis (A), CT1 is a thickness of the first lens on the optical axis, CT2 is a thickness of the second lens on the optical axis, CT3 is a thickness of the third lens on the optical axis, CT4 is a thickness of the fourth lens on the optical axis, CT5 is a thickness of the fifth lens on the optical axis, CT6 is a thickness of the sixth lens on the optical axis, and CT7 is a thickness of the seventh lens on the optical axis.

In this implementation, the thickness of the first lens on the optical axis is a lens with a largest thickness among all the lenses. Therefore, a ratio of the thickness of the first lens to a thickness of another lens on the optical axis is limited. It can be understood that a larger ratio indicates a smaller thickness of the another lens. In this implementation, when a ratio of a thickness of a lens with a largest thickness in the optical lens to a thickness of another lens meets the foregoing relational expressions, a thickness of the optical lens on the optical axis can be reduced. Certainly, in some other implementations, a lens, in the optical lens, that has a largest thickness on the optical axis may alternatively be another lens, and a ratio of the thickness of the lens on the optical axis to a thickness of another lens on the optical axis may be limited. Certainly, in another implementation, a range of a ratio of a thickness of a lens with a largest thickness in the optical lens to a thickness of another lens may alternatively not be limited to the foregoing limitation.

In a possible implementation, when the optical lens has the maximum total track length, the optical lens meets the following relational expressions:

$$|f1/f2| < 1.0;$$

$$|f2/f3| < 2.5;$$

$$|f3/f4| < 1.6;$$

$$|f4/f5| < 3.0;$$

$$|f5/f6| < 4.0;$$

and

$$|f6/f7| < 2.0,$$

where

f1 is a focal length of the first lens, f2 is a focal length of the second lens, f3 is a focal length of the third lens, f4 is a focal length of the fourth lens, f5 is a focal length of the fifth lens, f6 is a focal length of the sixth lens, and f7 is a focal length of the seventh lens.

The foregoing relational expressions specify a range of a ratio of a focal length of the optical lens to the focal length of the fourth lens and a range of a ratio between focal lengths of adjacent lenses in a case in which the optical lens has the maximum total track length. In this implementation, when the range of the ratio of the focal length of the optical lens to the focal length of the fourth lens and the range of the ratio between focal lengths of adjacent lenses in a case in which the optical lens has the maximum total track length meet the foregoing relational expressions, imaging quality of the optical lens can be ensured. Certainly, in another implementation, the range of the ratio of the focal length of the optical lens to the focal length of the fourth lens and the range of the ratio between focal lengths of adjacent lenses may alternatively not be limited to the foregoing limitation.

In a possible implementation, the optical lens meets the following relational expressions:

$$0.2 < |R14/R13| < 1.0;$$

$$1.0 < |R12/R11| < 18.0;$$

$$0.1 < |R10/R9| < 4.0;$$

$$0.1 < |R8/R7| < 1.5;$$

$$0.2 < |R6/R5| < 0.8;$$

$$0.3 < |R4/R3| < 1.0;$$

and

$$3.0 < |R2/R1| < 8.0,$$

where

R1 is a curvature radius of an object-side surface of the first lens, R2 is a curvature radius of an image-side surface of the first lens, R3 is a curvature radius of an object-side surface of the second lens, R4 is a curvature radius of an image-side surface of the second lens, R5 is a curvature radius of an object-side surface of the third lens, R6 is a curvature radius of an image-side surface of the third lens, R7 is a curvature radius of an object-side surface of the fourth lens, R8 is a curvature radius of an image-side surface of the fourth lens, R9 is a curvature radius of an object-side surface of the fifth lens, R10 is a curvature radius of an image-side surface of the fifth lens, R11 is a curvature radius of an object-side surface of the sixth lens, R12 is a curvature radius of an image-side surface of the sixth lens, R13 is a curvature radius of an object-side surface of the seventh lens, and R14 is a curvature radius of an image-side surface of the seventh lens.

The foregoing relational expressions specify a range of a ratio between curvature radii of an image-side surface and an object-side surface of each lens. In this implementation, when the range of the ratio between the curvature radii of the image-side surface and the object-side surface of each lens meets the foregoing relational expressions, the optical lens can achieve better imaging effect. Certainly, in another implementation, the range of the ratio between the curvature radii of the image-side surface and the object-side surface of each lens may alternatively not be limited to the foregoing limitation.

In a possible implementation, the optical lens further includes a stop, and the stop is disposed on an object side or an image side of any lens. The stop in this implementation is configured to limit a width of a beam that passes through the optical lens, to reduce impact of irrelevant light and ensure that the optical lens achieves better imaging effect. Certainly, in another implementation, the stop may alternatively be disposed on an object side or an image side of any lens.

In a possible implementation, an f-number of the stop is adjustable within a range of 1.0 to 4.5. In this implementation, a range of the f-number is adjusted by limiting a size of the stop, to properly configure an amount of light entering the optical lens, and ensure that the optical lens achieves good imaging effect in different scenarios.

In a possible implementation, all surfaces of all the lenses of the optical lens are aspheric surfaces. The aspheric surfaces have higher configuration flexibility and good aberration elimination effect. This reduces a total length of the optical lens and facilitates miniaturization of the optical lens.

According to a second aspect, a camera module is provided. The camera module includes a photosensitive element, an actuator, and the foregoing optical lens. The photosensitive element is located on an image side of the optical lens and is located on an imaging plane of the optical lens. The actuator is configured to drive the first lens group and the second lens group to move. The camera module with the foregoing optical lens has good imaging effect and a smaller thickness.

According to a third aspect, an electronic device is provided. The electronic device includes an image processor and the foregoing camera module. The image processor is communicatively connected to the camera module. The camera module is configured to obtain image data and input the image data to the image processor. The image processor is configured to process the image data output to the image processor. The electronic device with the foregoing camera module has good imaging effect.

In a possible implementation, the electronic device further includes a housing, both the camera module and the image processor are accommodated in the housing, a light transmission hole is provided on the housing, the first lens group of the camera module faces the light transmission hole, and when the actuator drives the first lens group away from the second lens group, the first lens group is capable of extending out of the housing through the light transmission hole. The electronic device with the foregoing camera module has a small thickness.

**BRIEF DESCRIPTION OF DRAWINGS**

To describe technical solutions in embodiments of this application or in the background more clearly, the following describes accompanying drawings used in embodiments of this application or in the background.

FIG. 1 is a schematic rear view of an electronic device according to an implementation of this application;
FIG. 2 is a schematic diagram of a structure in which a structure shown in FIG. 1 is in another state;
FIG. 3 is a schematic diagram of a structure of another implementation of a structure shown in FIG. 1;
FIG. 4 is a schematic diagram of a structure of a camera module of an electronic device shown in FIG. 1;
FIG. 5 is a schematic diagram of a partial structure of a camera module according to this application;
FIG. 6A is a schematic diagram of a structure of a camera module shown in FIG. 4 in another state;
FIG. 6B is a schematic diagram of a structure of a camera module shown in FIG. 6A that includes a first lens tube;
FIG. 6C is a schematic diagram of a structure of another implementation of a structure shown in FIG. 6B;
FIG. 6D is a schematic diagram of a structure of another implementation of a structure shown in FIG. 6B;
FIG. 7 is a schematic diagram of movement of an optical lens with a structure shown in FIG. 4;
FIG. 8 is another schematic diagram of movement of an optical lens with a structure shown in FIG. 4;
FIG. 9A is a schematic top view of a structure of a stop of a structure shown in FIG. 4;
FIG. 9B is a schematic diagram of axial chromatic aberration of an optical lens shown in FIG. 4;
FIG. 10 is a schematic diagram of field curvature and optical distortion of an optical lens shown in FIG. 4;
FIG. 11 is a schematic diagram of a structure of a camera module according to a second implementation of this application;
FIG. 12 is a schematic diagram of a structure of a camera module shown in FIG. 11 in another state;
FIG. 13 is a schematic diagram of movement of an optical lens with a structure shown in FIG. 11;
FIG. 14 is another schematic diagram of movement of an optical lens with a structure shown in FIG. 11;
FIG. 15 is a schematic diagram of axial chromatic aberration of an optical lens shown in FIG. 11;
FIG. 16 is a schematic diagram of field curvature and optical distortion of an optical lens shown in FIG. 11;
FIG. 17 is a schematic diagram of a structure of a camera module according to a third implementation of this application;
FIG. 18 is a schematic diagram of a structure of a camera module shown in FIG. 17 in another state;
FIG. 19 is a schematic diagram of movement of an optical lens with a structure shown in FIG. 17;
FIG. 20 is another schematic diagram of movement of an optical lens with a structure shown in FIG. 17;
FIG. 21 is a schematic diagram of axial chromatic aberration of an optical lens shown in FIG. 17;
FIG. 22 is a schematic diagram of field curvature and optical distortion of an optical lens shown in FIG. 17;
FIG. 23 is a schematic diagram of a structure of a camera module according to a fourth implementation of this application;
FIG. 24 is a schematic diagram of a structure of a camera module shown in FIG. 23 in another state;
FIG. 25 is a schematic diagram of movement of an optical lens with a structure shown in FIG. 23;
FIG. 26 is another schematic diagram of movement of an optical lens with a structure shown in FIG. 23;
FIG. 27 is a schematic diagram of axial chromatic aberration of an optical lens shown in FIG. 23;

FIG. 28 is a schematic diagram of field curvature and optical distortion of an optical lens shown in FIG. 23;

FIG. 29 is a schematic diagram of a structure of a camera module according to a fifth implementation of this application;

FIG. 30 is a schematic diagram of a structure of a camera module shown in FIG. 29 in another state;

FIG. 31 is a schematic diagram of movement of an optical lens with a structure shown in FIG. 29;

FIG. 32 is another schematic diagram of movement of an optical lens with a structure shown in FIG. 29;

FIG. 33 is a schematic diagram of axial chromatic aberration of an optical lens shown in FIG. 29;

FIG. 34 is a schematic diagram of field curvature and optical distortion of an optical lens shown in FIG. 29;

FIG. 35 is a schematic diagram of a structure of a camera module according to a sixth implementation of this application;

FIG. 36 is a schematic diagram of a structure of a camera module shown in FIG. 35 in another state;

FIG. 37 is a schematic diagram of movement of an optical lens with a structure shown in FIG. 35;

FIG. 38 is another schematic diagram of movement of an optical lens with a structure shown in FIG. 35;

FIG. 39 is a schematic diagram of axial chromatic aberration of an optical lens shown in FIG. 35; and

FIG. 40 is a schematic diagram of field curvature and optical distortion of an optical lens shown in FIG. 35.

## DESCRIPTION OF EMBODIMENTS

The following describes embodiments of this application with reference to accompanying drawings in embodiments of this application.

For ease of understanding, the following first describes technical terms in this application.

A focal length (focal length), also referred to as a focal length, is a distance from an image-side principle plane of a lens or a lens group to an image-side focal plane along a direction of an optical axis when a clear image is formed for an object in image-side space through the lens or the lens group.

An optical axis is light that vertically passes through a center of an ideal lens. When light parallel to the optical axis enters a convex lens, in an ideal convex lens, all light should converge at a point behind the lens. The point at which all the light converges is a focal point.

A stop (stop) includes an aperture stop (aperture stop) and a field stop (field stop). The aperture stop can limit a width of an imaging beam, determine a value of an entrance pupil diameter of an optical system and a solid angle of a beam, and affect an amount of light entering the optical system. The field stop limits a field of view in which the optical system can form an image for object space.

An f-number is a relative value (a reciprocal of a relative aperture) obtained by dividing a focal length of a lens by an entrance pupil diameter of the lens. A smaller f-number indicates a larger amount of light entering the lens within unit time. A smaller f-number indicates a smaller depth of field and blurring of background content for photographing.

A back focal length (Back Focal Length, BFL) is a distance from a vertex of an image-side surface of a lens, closest to an image side, in an optical lens to an imaging plane of the optical lens. In an infinity focusing state, the back focal length is the shortest. Usually, a shorter object distance indicates a larger back focal length.

Positive refractive power, also referred to as positive refractive power, indicates that a lens has a positive focal length and has light convergence effect.

Negative refractive power, also referred to as negative refractive power, indicates that a lens has a negative focal length and has light divergence effect.

A total track length (Total Track Length, TTL) is a total length from an object-side surface of a lens, closest to an object side, in an optical lens to an imaging plane, and is a main factor for forming a camera height.

A dispersion coefficient, namely, an Abbe number, indicates a dispersion capability index of a transparent medium. Usually, a larger refractive index of a medium indicates a smaller Abbe number and severer dispersion. On the contrary, a smaller refractive index of a medium indicates a larger Abbe number and slighter dispersion.

Object side: By using a lens as a boundary, a side on which a to-be-imaged scene is located is an object side.

Image side: By using a lens as a boundary, a side on which an image of a to-be-imaged scene is located is an image side.

Object-side surface: A surface, close to an object side, of a lens is referred to as an object-side surface.

Image-side surface: A surface, close to an image side, of a lens is referred to as an image-side surface.

Using a lens as a boundary, a side on which a photographed object is located is an object side, and a surface, close to the object side, of the lens may be referred to as an object-side surface. Using the lens as a boundary, a side on which an image of the photographed object is located is an image side, and a surface, close to the image side, of the lens may be referred to as an image-side surface.

Axial chromatic aberration (axial chromatic aberration): Due to dispersion characteristics of optical materials, light with different wavelengths has different magnifications, and is focused at different points along a horizontal optical axis. The axial chromatic aberration causes blurring of colors before and after a focus location.

Field curvature (Field curvature): After an image is formed through a lens for light transmitted from an object plane perpendicular to a principle optical axis, the entire image cannot be focused on a single plane perpendicular to the optical axis. To be specific, a clear optimal real image plane is not a planar surface but a curved surface.

Distortion (distortion), also referred to as distortion, is a degree at which an image formed by an optical system for an object is distorted relative to the object. Heights of intersection points between chief rays, passing through an optical system, of different fields of view and a Gaussian image plane are not equal to an ideal image height. A difference between the ideal image height and the heights of the intersection points is optical distortion (Optical distortion). The optical distortion changes an imaging location of an off-axis object point on an ideal plane. This causes distortion of a shape of an image without affecting definition of the image.

In descriptions of embodiments of this application, it should be noted that the terms "mount" and "connection" should be understood in a broad sense, unless otherwise specified and limited. For example, the "connection" may be a detachable connection or a non-detachable connection, or may be a direct connection or a connection through an intermediate medium. Orientation terms, such as "above", "left", "right", "inside", and "outside", mentioned in embodiments of this application merely indicate directions based on accompanying drawings. Therefore, the orientation terms are used to better and more clearly describe and understand embodiments of this application, but not to indicate or imply that a specified apparatus or element needs to have a specific orientation or be constructed or operated in a specific orientation. Therefore, this cannot be construed as a limitation on embodiments of this application. "A plurality of" means at least two.

It can be understood that specific embodiments described herein are merely intended to explain a related invention, but not to limit the invention. In addition, it should be further noted that, for ease of description, only parts related to the invention are shown in accompanying drawings.

It should be noted that embodiments of this application and features in embodiments may be combined with each other in the case of no conflict. The following describes this application in detail with reference to accompanying drawings and embodiments.

This application provides an electronic device. The electronic device may be a mobile phone, a tablet computer, a portable computer, a camcorder, a video recorder, a camera, a smart television, a network monitoring device, a somatic game console, an event data recorder, a vehicle reversing assistant apparatus, a wearable electronic device, a small uncrewed aerial vehicle, or a device in another form that has a photographing or video recording function. The electronic device includes at least one optical lens.

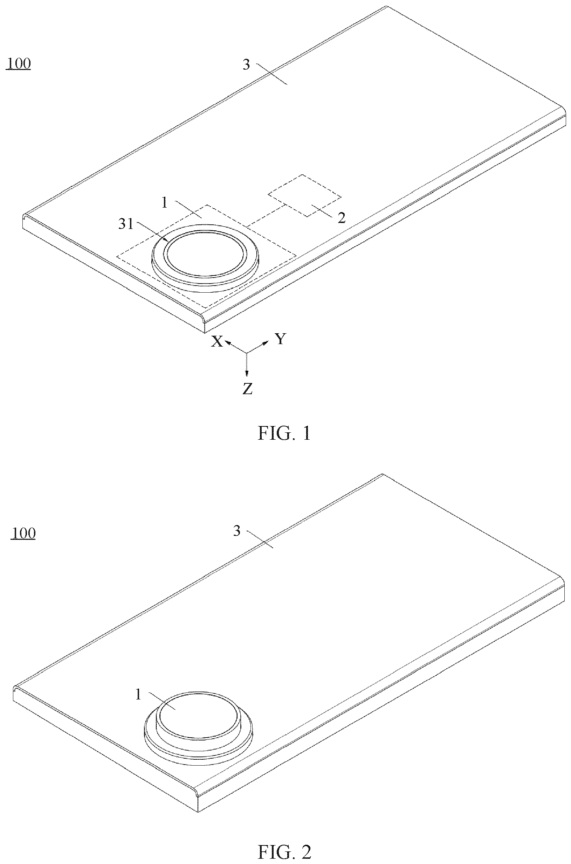

FIG. 1 is a schematic rear view of an electronic device 100 according to an implementation of this application. In this implementation, the electronic device 100 is a mobile phone. An example in which the electronic device 100 is a mobile phone is used for description in this implementation of this application.

For ease of description, a width direction of the electronic device 100 is defined as an X axis, a length direction of the electronic device 100 is defined as a Y axis, and a thickness direction of the electronic device 100 is defined as a Z axis. It can be understood that a coordinate system of the electronic device 100 may be flexibly set according to a specific actual requirement.

The electronic device 100 includes a camera module 1, an image processor 2, and a housing 3. Both the camera module 1 and the image processor 2 are accommodated in the housing 3. A light transmission hole 31 is provided on the housing 3. A light entrance side of the camera module 1 faces the light transmission hole 31 on the housing 3. When the camera module 1 performs photographing, the camera module 1 can partially extend out of the housing 3 through the light transmission hole 31. The image processor 2 is communicatively connected to the camera module 1. The camera module 1 is configured to obtain image data and input the image data to the image processor 2. The image processor 2 is configured to process the image data output to the image processor 2.

The communication connection between the camera module 1 and the image processor 2 may be implemented through electrical connection like wiring or through coupling or the like, for data transmission. It can be understood that the communication connection between the camera module 1 and the image processor 2 may alternatively be implemented in another manner for data transmission.

FIG. 2 is a schematic diagram of a structure in which the structure shown in FIG. 1 is in another state. The camera module of the electronic device is in a non-operating state in FIG. 1, and the camera module of the electronic device is in an operating state in FIG. 2.

When the camera module 1 is used in the electronic device 100, if the camera module 1 is in the non-operating state, all components of the camera module 1 are located in the electronic device 100, and components are in a compact state. To be specific, a distance between components of the camera module 1 is quite small, and a thickness of the camera module 1 in a Z-axis direction is reduced, to ensure that the camera module 1 occupies small internal space of the electronic device 100.

If the camera module 1 is in the operating state, components of the camera module 1 are expanded, and the camera module 1 can partially extend out of the housing 3 through the light transmission hole 31, so that the camera module 1 meets an imaging standard and implements an object-image conjugate relationship, and the camera module 1 can capture an object image. To be specific, an expanded part of the camera module 1 extends out of the housing 3, and space required after the camera module 1 is expanded does not need to be reserved inside the electronic device 100.

It can be understood that the camera module 1 is in a compressed state and is accommodated in the electronic device 100 when the camera module 1 is not performing imaging, and the camera module 1 partially extends out of the housing 3 of the electronic device 100 during imaging. To be specific, space occupied by the camera module 1 in the electronic device 100 is a volume of the camera module 1 in a compressed state, but not a volume of the camera module 1 in an expanded state. This effectively reduces space occupied by the camera module 1 in the electronic device 100, saves internal space of the electronic device 100, and implements thinning of the electronic device 100.

The image processor 2 has a function of optimizing a digital image signal through a series of complex mathematical algorithm operations, and finally transmitting a processed signal to a display. The image processor 2 may be a separate image processing chip or digital signal processing (Digital Signal Processing, DSP) chip, and has a function of quickly transferring data obtained by a photosensitive element of the camera module 1 to a central processing unit in a timely manner and refreshing the photosensitive element. Therefore, quality of the DSP chip directly affects image quality (for example, color saturation and definition). The image processor 2 may alternatively be integrated in another chip (for example, a central processing chip).

In the implementation shown in FIG. 1, the camera module 1 is disposed on a rear side of the electronic device 100, and is a rear-facing lens of the electronic device 100. It can be understood that, in some implementations, the camera module 1 may alternatively be disposed on a front side of the electronic device 100 as a front-facing lens of the electronic device 100. Both the front-facing lens and the rear-facing lens may be configured to take a selfie, and may also be used by a photographer to photograph another object.

In some implementations, there are a plurality of camera modules 1. Different camera modules 1 may have different functions, to adapt to different photographing scenes. For example, in some implementations, the plurality of camera modules 1 include a zoom camera module or a fixed-focus camera module, to implement functions of zoom photographing and fixed-focus photographing respectively. In the implementation shown in FIG. 1, there is one camera module on the rear side of the electronic device 100, and the camera module 1 is a fixed-focus camera module. In some implementations, there are a plurality of camera modules on the rear side of the electronic device, and all of the plurality of different camera modules may be communicatively connected to the image processor 2, so that the image processor 2 processes image data obtained by the camera modules 1 through photographing.

It should be understood that a mounting location of the camera module 1 of the electronic device 100 in the implementation shown in FIG. 1 is merely an example. In some other implementations, the camera module 1 may alternatively be mounted at another location on the mobile phone. For example, the camera module 1 may be mounted in the middle of an upper part or in an upper right corner on the rear side of the mobile phone. Alternatively, the camera module 1 may not be disposed on a body of the mobile phone, but is disposed on a component that can move or rotate relative to the mobile phone. For example, the component may extend, retract, or rotate from the body of the mobile phone. A mounting location of the camera module 1 is not limited in this application.

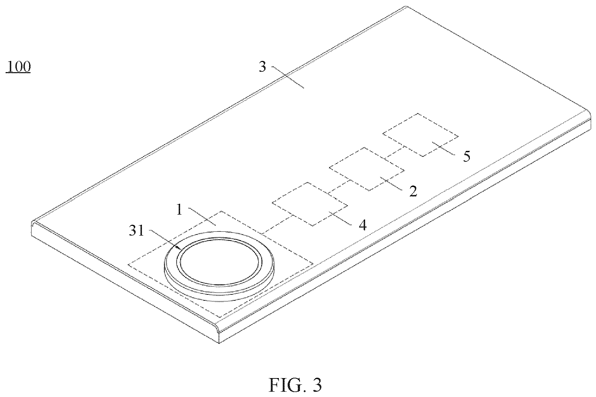

As shown in FIG. 3, in some implementations, the electronic device 100 may further include an analog-to-digital converter 4 (which may also be referred to as an A/D converter). The analog-to-digital converter 4 is connected between the camera module 1 and the image processor 2. The analog-to-digital converter 4 is configured to convert a signal generated by the camera module 1 into a digital image signal, and transmit the digital image signal to the image processor 2. Then the image processor 2 processes the digital image signal. Finally, an image or a video is displayed on a display screen or a display.

In some implementations, the electronic device 100 may further include a memory 5. The memory 5 is communicatively connected to the image processor 2. After processing the digital image signal, the image processor 2 transmits an image to the memory 5. In this way, when the image needs to be viewed subsequently, the image can be searched for in the storage at any time and displayed on the display screen. In some implementations, the image processor 2 further compresses a processed digital image signal, and then stores a compressed digital image signal in the memory 5, to save space of the memory 5. It should be noted that FIG. 3 is merely a schematic diagram of a structure of an implementation of this application, and locations, structures, and the like of the camera module 1, the image processor 2, the analog-to-digital converter 4, and the memory 5 are merely examples.

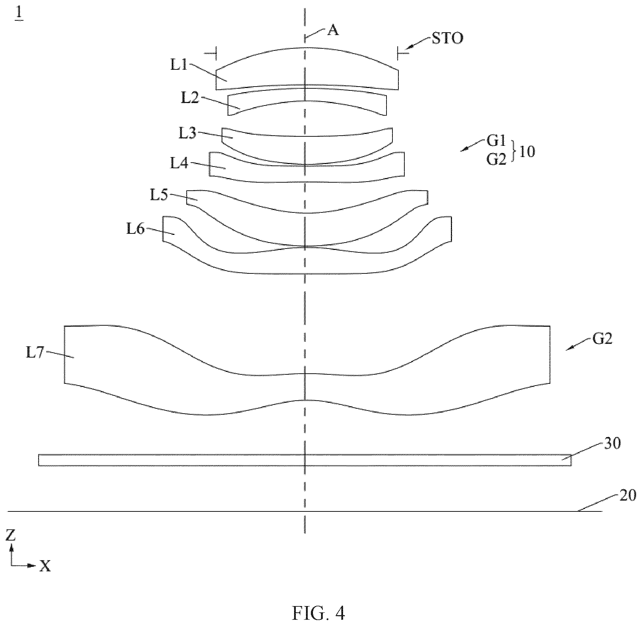

FIG. 4 is a schematic diagram of a structure of the camera module of the electronic device shown in FIG. 1.

The camera module 1 includes an optical lens 10, a photosensitive element 20, an actuator (not shown in the figure), and an enclosure (not shown in the figure). The enclosure includes a through hole and accommodation space. The through hole is connected to the accommodation space. The through hole faces the light transmission hole 31 on the housing 3. The actuator, the photosensitive element 20, and the optical lens 10 are all accommodated in the accommodation space. The photosensitive element 20 is located on an image side of the optical lens 10 and is located on an imaging plane of the optical lens 10. The actuator is configured to drive a component in the optical lens 10 to implement focusing. A light entrance side of the optical lens 10 faces the through hole. During operation of the camera module 1, the optical lens 10 can partially extend out of the accommodating space through the through hole, and then extend out of the housing 3 through the light transmission hole 31. During operation of the camera module 1, an image is formed on the photosensitive element 20 for a to-be-imaged scene through the optical lens 10.

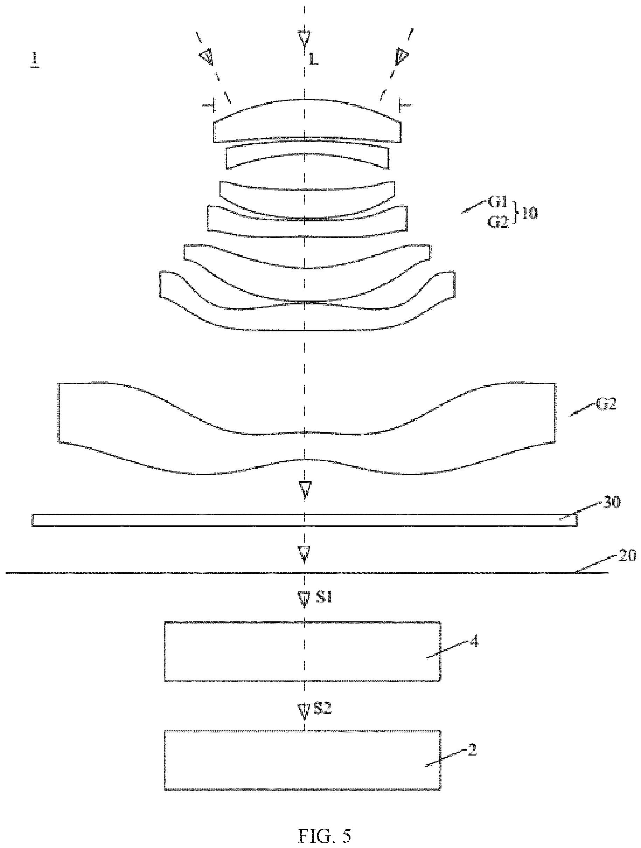

Specifically, as shown in FIG. 5, an operation principle of the camera module 1 is as follows: Light L reflected by a photographed scene generates an optical image through the optical lens 10, and the optical image is projected to a surface of the photosensitive element 20. The photosensitive element 20 converts the optical image into an electrical signal, namely, an analog image signal S1, and transmits the analog image signal S1 obtained through conversion to the analog-to-digital converter 4, so that the analog-to-digital converter 4 converts the analog image signal S1 into a digital image signal S2, and transmits the digital image signal S2 to the image processor 2. Certainly, in another embodiment, the camera module 1 may alternatively have no enclosure, and the photosensitive element 20 is fastened to a support or another structure.

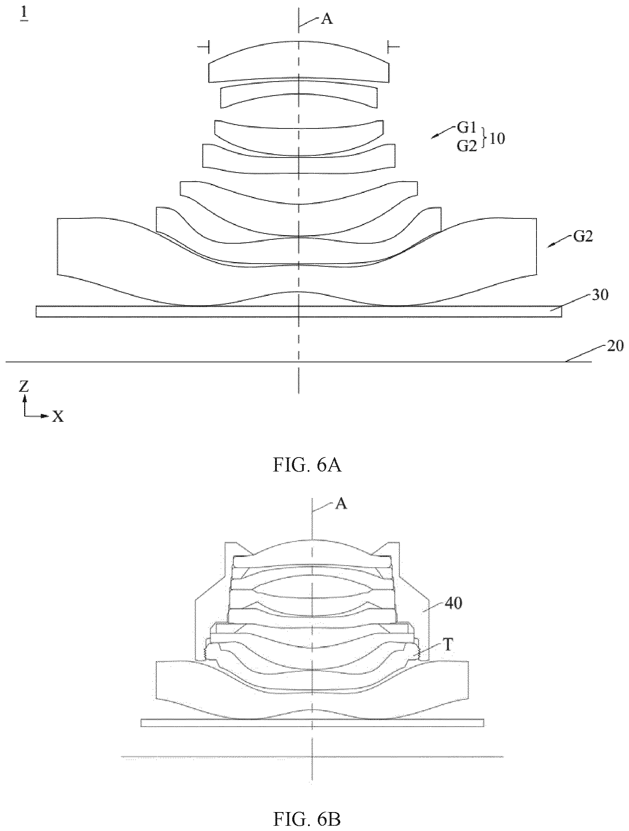

As shown in FIG. 1 and FIG. 6A, when the camera module 1 is not operating (or is in a non-operating state), the entire optical lens 10 of the camera module 1 is located in the electronic device 100, and components of the optical lens 10 are in a compact state. To be specific, a distance between components of the optical lens 10 is quite small, to ensure that the camera module 1 occupies sufficiently small internal space of the electronic device 100.

As shown in FIG. 2 and FIG. 4, when the camera module 1 is operating (in an operating state), components of the optical lens 10 are expanded, and the optical lens 10 can partially extend out of the accommodating space, and then extend out of the housing 3 through the light transmission hole 31, so that the camera module 1 meets an imaging standard and implements an object-image conjugate relationship, and the camera module 1 can capture an object image. To be specific, after the optical lens 10 is expanded, an expanded part extends out of the housing 3, and space required after the optical lens 10 is expanded does not need to be reserved inside the electronic device 100. This saves internal space of the electronic device 100 and implements thinning of the electronic device 100 including the camera module 1.

Specifically, the camera module 1 may further include a circuit board. The photosensitive element 20 is fastened to the circuit board through bonding, surface mounting, or the like, and the analog-to-digital converter 4, the image processor 2, the memory 5, and the like are also fastened to the circuit board through bonding, surface mounting, or the like, to implement a communication connection between the photosensitive element 20, the analog-to-digital converter 4, the image processor 2, the memory 5, and the like through the circuit board. The circuit board may be a flexible printed circuit (flexible printed circuit, FPC) board or a printed circuit board (printed circuit board, PCB), and is configured to transmit an electrical signal. The FPC may be a single-sided flexible board, a double-sided flexible board, a multi-layer flexible board, a rigid flexible board, a flexible circuit board with a hybrid structure, or the like.

The photosensitive element 20 is a semiconductor chip, and a surface of the photosensitive element 20 includes hundreds of thousands to millions of photodiodes. A charge is generated when light is irradiated onto the photodiode. The analog-to-digital converter 4 converts the charge into a digital signal. The photosensitive element 20 may be a charge coupled device (charge coupled device, CCD) or a complementary metal-oxide semiconductor (complementary metal-oxide semiconductor, CMOS). The CCD is made of a high-sensitivity semiconductor material and is capable of converting light into an electric charge. An analog-to-digital converter chip converts the electric charge into a digital signal. The CCD includes many photosensitive units, usually in megapixels. When light is irradiated onto a surface of the CCD, each photosensitive unit reflects an electric charge to a component. Signals generated by all photosensitive units are combined to form a complete image. The CMOS is a semiconductor mainly made of two elements: silicon and germanium. In this way, the CMOS includes a semiconductor with an N pole (with negative charges) and a semiconductor with a P pole (with positive charges). Currents generated by the two semiconductors with complementary effect can be recorded and interpreted as an image by a processing chip.

In this implementation, a photosensitive sensor of the photosensitive element 20 is an ultra-large sensor. To be specific, the photosensitive element 20 in this application may be directly understood as a photosensitive element of a single-lens reflex camera. The photosensitive sensor of the photosensitive element 20 is an ultra-large sensor. This helps improve imaging definition of the camera module and comprehensively improve imaging quality of the electronic device (for example, the mobile phone), to really achieve effect of "mounting a single-lens reflex camera in a mobile phone". This directly improves mobile phone photographing to single-lens reflex photographing, and subverts a current concept of mobile phone photographing.

It can be understood that the photosensitive element with the ultra-large sensor causes an increase in a thickness of the optical lens. In this application, when the optical lens 10 is not operating, the optical lens 10 is compressed to a compact state, to reduce a thickness of the optical lens 10 in the Z-axis direction, and ensure that the camera module 1 occupies sufficiently small internal space of the electronic device 100. During operation, the optical lens 10 can partially extend out of the housing 3 of the electronic device 100 without occupying internal space of the electronic device 100, to avoid a problem that the increase in the thickness of the optical lens due to the use of the photosensitive element with the ultra-large sensor affects thinning of the electronic device 100.

Certainly, in another implementation, the photosensitive sensor of the photosensitive element 20 may alternatively be a small-sized sensor, and photosensitive elements with sensors of different sizes may be selected for the camera module 1 according to a requirement.

The actuator may include a first drive portion and a second drive portion. The first drive portion and the second drive portion each are configured to drive related elements of the optical lens 10, to implement compression and expansion of the optical lens 10 (or the camera module 1). The first drive portion and the second drive portion each include one or more drive portions, and can drive, through drive portions of the first drive portion and the second drive portion, related elements of the optical lens 10 to perform focusing and/or optical image stabilization. When the first drive portion and the second drive portion drive the related elements of the optical lens 10 to perform focusing, the first drive portion and the second drive portion drive the related elements of the optical lens 10 to perform relative movement to implement focusing. When the first drive portion and the second drive portion drive the related elements of the optical lens 10 to perform image stabilization, the related elements of the optical lens 10 are driven to move or rotate relative to the photosensitive element 20, and/or the related elements of the optical lens 10 are driven to move or rotate relative to each other, to implement optical image stabilization. The first drive portion and the second drive portion may be drive structures such as motors.

As shown in FIG. 4, the camera module 1 may further include an infrared filter 30. The infrared filter 30 may be fastened to the circuit board, and is located between the optical lens 10 and the photosensitive element 20. Light passing through the optical lens 10 is irradiated onto the infrared filter 30, and is transmitted to the photosensitive element 20 through the infrared filter 30. The infrared filter 30 may eliminate unnecessary light irradiated onto the photosensitive element 20, to prevent the photosensitive element 20 from generating false colors or ripples, and improve an effective resolution and color reproduction of the photosensitive element 20. In some implementations, the infrared filter 30 may alternatively be fastened to an end, facing the image side, of the optical lens 10. Other elements included in the camera module 1 are not described in detail herein.

Certainly, in another implementation, an image rectification element may be further disposed on a side, close to the imaging plane, of the optical lens 10, to achieve image rectification effect (for example, image curvature).

It can be understood that, as shown in FIG. 6A, when the optical lens 10 is not operating (or is in a non-operating state), components of the optical lens 10 are compressed, and are close to the infrared filter 30, so that the camera module 1 is more compact, and the thickness of the camera module 1 in the Z-axis direction is reduced. This facilitates thinning of the electronic device. As shown in FIG. 4, when the optical lens 10 is operating (or is in an operating state), components of the optical lens 10 are expanded, and the optical lens 10 and the infrared filter 30 are also expanded, so that the camera module 1 meets a photographing requirement.

As shown in FIG. 4, the optical lens 10 affects imaging quality and imaging effect, and performs imaging mainly according to a refraction principle of a lens. To be specific, a clear image is formed for light of a scene on the imaging plane through the optical lens 10, and the image of the scene is recorded by the photosensitive element 20 located on the imaging plane. The imaging plane is a plane on which the image formed for the scene through the optical lens 10 is located. The optical lens 10 includes a plurality of lens groups sequentially arranged from an object side to the image side. Each lens group includes at least one lens. An image with good imaging effect is formed through cooperation between lenses in the lens groups. The object side is a side on which a photographed scene is located, and the image side is a side on which the imaging plane is located.

In this application, the optical lens 10 is a fixed-focus lens. During operation of the camera module 1, the optical lens 10 correspondingly moves to a specified focal length relative to the photosensitive element 20. This can ensure that the optical lens 10 can well perform imaging. Certainly, in another embodiment, the optical lens may alternatively be a zoom lens.

As shown in FIG. 4, in some implementations of this application, the optical lens 10 in this application includes a first lens group G1 and a second lens group G2 that are sequentially arranged from the object side to the image side, and the first lens group G1 and the second lens group G2 each include at least one lens. Lenses in the lens groups are disposed along an optical axis A, and both the first lens group G1 and the second lens group G2 are capable of moving along the optical axis A of the optical lens 10. Each lens includes an object-side surface facing the object side and an image-side surface facing the image side. Specifically, the first lens group G1 and the second lens group G2 are coaxially disposed, the first lens group G1 is away from a side of the second lens group G2 and faces the through hole, and an image side of the second lens group G2 faces the photosensitive element 20. Certainly, in another embodiment, the optical lens may alternatively include a plurality of lens groups, and lens groups of the plurality of lens groups may be coaxially or non-coaxially disposed.

During operation of the camera module 1, the first lens group G1 extends out of the housing 3 through the light transmission hole 31, the first lens group G1 and the second lens group G2 form a first spacing, and light outside the electronic device 100 passes through the first lens group G1 and the second lens group G2 sequentially, and is finally received by the photosensitive element 20. For different object distances, a relative distance (the first spacing) between the first lens group G1 and the second lens group G2 remains unchanged, and the first lens group G1 and the second lens group G2 perform focusing based on the different object distances. To be specific, for different object distances, a distance from the first lens group G1 and the second lens group G2 to the imaging plane (the photosensitive element 20) also varies. It can be understood that each lens in this application is a lens with positive refractive power or negative refractive power.

In an implementation of this application, as shown in FIG. 6A, when the optical lens 10 is not operating, the first lens group G1 and the second lens group G2 can move based on the first drive portion and the second drive portion respectively, so that the camera module 1 is in a compact state. A spacing between the first lens group G1 and the second lens group G2 is less than the first spacing, so that the camera module 1 occupies sufficiently small internal space of the housing 3. It can be understood that, when the first lens group G1 and the second lens group G2 are in the compact state, the spacing between the first lens group G1 and the second lens group G2 is sufficiently small, and the optical lens 10 cannot meet an imaging standard. In some implementations, when the optical lens 10 is in the non-operating state, a distance between the second lens group G2 and the photosensitive element 20 may also be minimized, to effectively implement miniaturization of the electronic device.

As shown in FIG. 4, during operation of the optical lens 10, the first lens group G1 and the second lens group G2 can move and expand based on the first drive portion and the second drive portion respectively, and the first drive portion drives the first lens group G1 to extend out of the housing 3 through the through hole and the light transmission hole 31 sequentially (FIG. 2), so that the optical lens 10 meets the imaging standard, and the optical lens 10 implements an object-image conjugate relationship.

To be specific, after the optical lens 10 is expanded, the first lens group G1 extends out of the housing 3, and space required after the optical lens 10 is expanded does not need to be reserved inside the electronic device 100. This saves internal space of the electronic device 100 and implements thinning of the electronic device 100 including the camera module 1.

Certainly, in another embodiment, during operation of the optical lens 10, both the first lens group G1 and the second lens group G2 may alternatively extend out of the housing 3. Alternatively, in another embodiment, when the first lens group G1 and the second lens group G2 are in the compact state, the spacing between the first lens group G1 and the second lens group G2 is small, but the optical lens 10 can still meet the imaging standard.

It can be understood that, in this application, both the first lens group G1 and the second lens group G2 are capable of moving along the optical axis A of the optical lens 10. In this way, when the optical lens 10 is not operating, compression is implemented between the first lens group G1 and the second lens group G2, so that the entire optical lens 10 is accommodated in the electronic device 100; and during operation of the optical lens, the first lens group G1 extends out of the electronic device 100 without occupying space in the electronic device 100. Miniaturization of the optical lens is implemented through compression. This is easier to implement compared with using a lens with a higher refractive index, has a lower technical risk compared with extremely reducing a thickness of a lens, and ensures an amount of light entering the optical lens and an integration level compared with using a plurality of photosensitive elements with small sensors.

In some implementations of this application, as shown in FIG. 6B, the optical lens 10 includes a first lens tube 40 and a second lens tube (not shown in the figure), a lens of the first lens group G1 is connected and fastened to the first lens tube 40, and a lens of the second lens group G2 is connected and fastened to the second lens tube. The first lens tube 40 and the second lens tube are configured to fasten the first lens group G1 and the second lens group G2 respectively, to keep the first lens group G1 and the second lens group G2 stably fastened in the enclosure of the camera module 1.

In this implementation, the first lens group G1 partially protrudes from a side, on an image side of the first lens group G1, of the first lens tube 40. To be specific, a side, on the image side, of the first lens group G1 is not fully accommodated in the first lens tube 40 or is not accommodated in the first lens tube 40. In this way, when the first lens group G1 moves close to the second lens group G2, the first lens tube 40 for fastening the first lens group G1 does not prevent the first lens group G1 from moving close to and getting in contact with the second lens group G2, to reduce space occupied by the optical lens in the electronic device, and facilitate miniaturization of the electronic device. Certainly, the second lens group G2 may also partially protrude from a side, on an object side of the second lens group G2, of the second lens tube. In this way, the second lens tube does not prevent the second lens group G2 from moving close to and getting in contact with the first lens group G1.

For example, a lens T, close to the second lens group G2, of the first lens group G1 may be fastened to the first lens tube 40 by using a screw. To be specific, the lens T includes an outer thread, an end, close to the image side, of the first lens tube 40 is provided with an inner thread, and the outer thread of the lens T matches the inner thread of the first lens tube 40. In this way, on the basis that the lens T is stably fastened to the first lens tube 40, a length of the first lens tube 40 in a direction of the optical axis can be sufficiently small, to avoid preventing the first lens group G1 from moving close to and getting in contact with the second lens group G2.

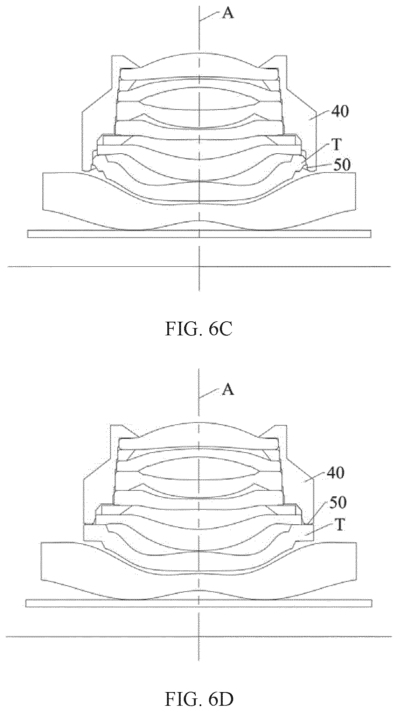

Certainly, as shown in FIG. 6C, the lens T may alternatively be fastened to an end, on the image side, of the first lens tube 40 through bonding by using a colloid 50. In this way, when it is ensured that the lens T is stably fastened to the first lens tube 40, the length of the first lens tube 40 in the direction of the optical axis can be sufficiently small, to avoid preventing the first lens group G1 from moving close to and getting in contact with the second lens group G2.

As shown in FIG. 6D, the lens T may alternatively be fastened to an end face, on the image side, of the first lens tube 40 through bonding by using the colloid 50. In this way, when it is ensured that the lens T is stably fastened to the first lens tube 40, the length of the first lens tube 40 in the direction of the optical axis can be smaller, to more effectively avoid that the first lens tube 40 prevents the first lens group G1 from moving close to and getting in contact with the second lens group G2. Certainly, in another implementation, a manner of fastening the lens T, close to the second lens group G2, of the first lens group G1 to the first lens tube 40 is not limited to the foregoing descriptions. Alternatively, in another implementation, a shape of a lens, close to the second lens group, of the first lens group matches a shape of a lens, close to the first lens group, of the second lens group, to reduce the spacing between the first lens group and the second lens group. For example, an image-side surface of the lens, close to the second lens group, of the first lens group is a concave surface (or a convex surface), and an object-side surface of the lens, close to the first lens group, of the second lens group is a convex surface (or a concave surface).

It can be understood that a manner of fastening a lens, closest to the first lens group, of the second lens group G2 to the second lens tube may be the same as the manner of fastening the lens T, close to the second lens group G2, of the first lens group G1 to the first lens tube 40. Details are not described again.

In some implementations, the first drive portion includes a first motor, a second motor, and a rotating component. The first lens tube is located in the rotating component. An outer thread is provided on an outer periphery of the first lens tube. The rotating component includes an inner thread. The outer thread of the first lens tube matches the inner thread of the rotating component, so that the first lens tube is rotatably connected in the rotating component. The first motor is configured to drive the rotating component to rotate, and the rotating component rotates to drive the first lens tube to move in an axial direction of the rotating component, so that the first lens group G1 moves close to or away from the second lens group G2. The second motor is configured to drive the first lens group G1 to adjust a focus. That is, the first motor cooperates with the second motor to improve imaging quality of the optical lens 10. Certainly, in another implementation, in addition to the foregoing described structure, the first drive portion may alternatively be in another structure, provided that the first drive portion can drive the first lens tube away from or close to the second lens group G2.

In some implementations, the optical lens further includes a sliding rod, and the sliding rod may run through the first lens tube, so that the first lens tube slides along the sliding rod in a process in which the rotating component drives the first lens tube to move away from or close to the second lens group G2, to avoid a deviation of the first lens tube during movement. There may be one or more sliding rods.

Specifically, the first drive portion is connected to the first lens tube to drive the first lens group G1 in the first lens tube to move, and the second drive portion is connected to the second lens tube to drive the second lens group G2 in the second lens tube to move. The first drive portion and the second drive portion adjust locations of the first lens group G1 and the second lens group G2 respectively according to a requirement, so that the optical lens 10 is in the operating state or the non-operating state.

When the first drive portion and the second drive portion respectively drive the first lens group G1 and the second lens group G2 to perform focusing, the first drive portion and the second drive portion respectively drive the first lens group G1 and the second lens group G2 to perform relative movement to implement focusing. When the first drive portion and the second drive portion respectively drive the first lens group G1 and the second lens group G2 to perform image stabilization, the first lens group G1 and the second lens group G2 are driven to move or rotate relative to the photosensitive element 20, and/or the first lens group G1 and the second lens group G2 are driven to move or rotate relative to each other, to implement optical image stabilization.

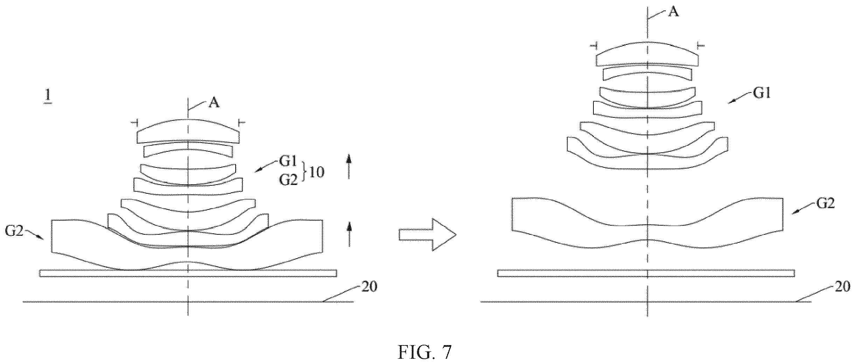

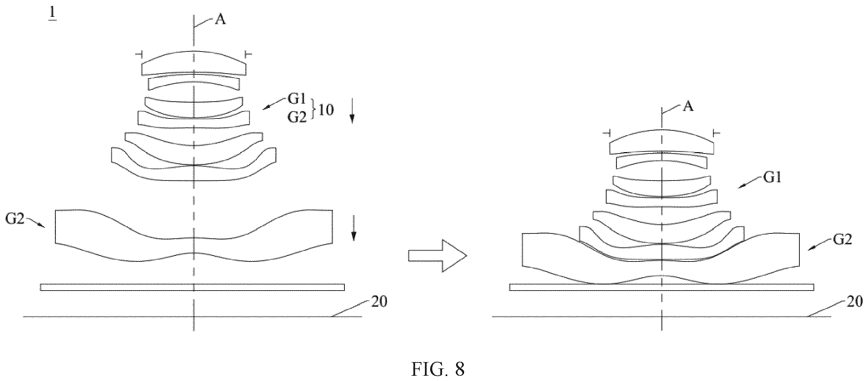

As shown in FIG. 7 and FIG. 8, during operation of the optical lens 10, the first lens group G1 and the second lens group G2 separately move along the optical axis A. Specifically, for example, when the optical lens 10 changes from the non-operating state to the operating state, in other words, when the optical lens 10 changes from a compact state to an expanded state, the first lens group G1 moves toward the object side and extends out of the housing 3 through the through hole and the light transmission hole 31 sequentially, a distance between the first lens group G1 and the second lens group G2 increases to the first spacing, and then the first lens group G1 and the second lens group G2 simultaneously move toward the object side to a target imaging location. When the optical lens 10 is in the operating state, a design spacing (the first spacing) at which imaging can be performed is maintained between the first lens group G1 and the second lens group G2. When focusing is performed at different object distances, a relative distance (the first spacing) between the two lens groups remains unchanged, and the two lens groups simultaneously move forward and backward to optimal locations to focus on the imaging plane (the photosensitive element 20). When the optical lens 10 changes from the operating state to the non-operating state, the first lens group G1 moves toward the second lens group G2 and is close to the second lens group G2, and the second lens group G2 may move toward the photosensitive element 20, so that the camera module 1 is compressed and accommodated in the enclosure. This ensures that the camera module 1 occupies a sufficiently small internal volume of the electronic device 100, and facilitates thinning of the electronic device 100. Certainly, in another embodiment, the first lens group G1 and the second lens group G2 may alternatively simultaneously move toward the object side at the beginning. Alternatively, only the first lens group G1 moves toward the object side, and the second lens group G2 may alternatively remain stationary according to a requirement.

In some implementations of this application, when the optical lens 10 is in the non-operating state, the optical lens 10 meets the following relational expression:

$$0.00 \text{ mm} \le \text{Tv} \le 10.00 \text{ mm},$$

where

Tv is a distance between a surface of a lens, closest to the image side, of the first lens group G1 and a surface of a lens, closest to the object side, of the second lens group G2.

It can be understood that, when the optical lens 10 is in the non-operating state, the optical lens 10 is accommodated in the electronic device 100, and the distance between the surface of the lens, closest to the image side, of the first lens group G1 of the optical lens 10 and the surface of the lens, closest to the object side, of the second lens group G2 is limited to range from 0.00 mm to 10 mm (including 0.00 mm and 10 mm). In this way, when the optical lens 10 is in the non-operating state, there is no spacing or a quite small spacing between the first lens group G1 and the second lens group G2, to reduce space occupied by the optical lens 10 in the electronic device 100, and facilitate miniaturization of the electronic device 100. Certainly, in another embodiment, the distance between the surface of the lens, closest to the image side, of the first lens group G1 and the surface of the lens, closest to the object side, of the second lens group G2 may alternatively not be limited to the foregoing limitation.

In some implementations of this application, when the optical lens is in the non-operating state, the optical lens meets the following relational expression:

$$0.15 \text{ mm} \le \text{Tv} \le 10.0 \text{ mm}.$$

The spacing between the first lens group and the second lens group of the optical lens (the distance between the surface of the lens, closest to the image side, of the first lens group and the surface of the lens, closest to the object side, of the second lens group) is limited to range from 0.15 mm to 10.0 mm (including 0.15 mm and 10.0 mm). In this way, when the optical lens is in the non-operating state, there is a quite small spacing between the first lens group and the second lens group, to reduce space occupied by the optical lens in the electronic device, and facilitate miniaturization of the electronic device. Certainly, in another embodiment, the distance between the surface of the lens, closest to the image side, of the first lens group and the surface of the lens, closest to the object side, of the second lens group may alternatively not be limited to the foregoing limitation.

In some implementations of this application, when the optical lens is in the non-operating state, the optical lens meets the following relational expression:

$$0.00 \text{ mm} \le \text{Tv} \le 0.10 \text{ mm}.$$

The spacing between the first lens group and the second lens group of the optical lens (the distance between the surface of the lens, closest to the image side, of the first lens group and the surface of the lens, closest to the object side, of the second lens group) is limited to range from 0.00 mm to 0.1 mm (including 0.00 mm and 0.1 mm). In this way, when the optical lens is in the non-operating state, there is no spacing or a quite small spacing between the first lens group and the second lens group, to reduce space occupied by the optical lens in the electronic device, and facilitate miniaturization of the electronic device. Certainly, in another embodiment, the distance between the surface of the lens, closest to the image side, of the first lens group and the surface of the lens, closest to the object side, of the second lens group may alternatively not be limited to the foregoing limitation.

In some implementations of this application, the optical lens 10 meets the following relational expression:

$$1.0 \le \text{TTLmax/TTLmin} \le 10.0,$$

where

TTL is a total track length of the optical lens 10, TTLmax is a maximum value of the total track length, and TTLmin is a minimum value of the total track length.

It can be understood that TTLmax is a total track length of the optical lens 10 in the operating (expanded) state, TTLmin is a total track length of the optical lens 10 in the non-operating (compressed) state, and TTLmax/TTLmin is a ratio of the total track length of the optical lens 10 in the operating state to the total track length of the optical lens 10 in the non-operating state. A larger ratio indicates that the optical lens 10 is compressed to be more compact in the non-operating state. TTLmax/TTLmin is limited to a range of 1 to 10 (including 1 and 10), to ensure that the optical lens 10 occupies sufficiently small space of the electronic device 100, and facilitate miniaturization of the electronic device 100. Certainly, in another implementation, the ratio of TTLmax/TTLmin may alternatively not be limited to the foregoing limitation.

In some implementations of this application, the optical lens 10 meets the following relational expression:

$$0.60 \leq TTLmax/(2 \times ImgH) \leq 10,$$

where

ImgH is a diagonal half-length of an effective pixel area of the imaging plane of the optical lens 10.

In this implementation, TTLmax/(2 × ImgH) is limited to a range of 0.60 to 10 (including 0.60 and 10), to ensure that the optical lens 10 occupies sufficiently small space of the electronic device 100, and facilitate miniaturization of the electronic device 100. Certainly, in another implementation, the ratio of TTLmax/(2 × ImgH) may alternatively not be limited to the foregoing limitation.

In some implementations of this application, the optical lens 10 meets the following relational expression:

$$0.30 \leq TTLmin/(2 \times ImgH) \leq 0.60.$$

In this implementation, TTLmin/(2 × ImgH) is limited to a range of 0.30 to 0.60 (including 0.30 and 0.60), to ensure that the optical lens 10 occupies sufficiently small space of the electronic device 100, and facilitate miniaturization of the electronic device 100. Certainly, in another implementation, the ratio of TTLmin/(2 × ImgH) may alternatively not be limited to the foregoing limitation.

In some implementations of this application, the optical lens 10 meets the following relational expression:

$$2.0 \leq TTLmax^2/(ImgH \times EPD) \leq 20,$$

where

EPD is an entrance pupil diameter of a lens group of the optical lens 10.

In this implementation, TTLmax$^2$/(ImgH × EPD) is limited to a range of 2.0 to 20 (including 2.0 and 20), to minimize a thickness of the optical lens 10 on a Z axis, maximize an aperture, and improve imaging quality of the optical lens 10. Certainly, in another implementation, the ratio of TTLmax$^2$/(ImgH × EPD) may alternatively not be limited to the foregoing limitation.

In some implementations of this application, the optical lens 10 meets the following relational expression:

$$1.0 \leq TTLmin^2/(ImgH \times EPD) \leq 2.0.$$

In this implementation, TTLmin$^2$/(ImgH × EPD) is limited to a range of 1.0 to 2.0 (including 1.0 and 2.0), to minimize the thickness of the optical lens 10 on the Z axis, maximize the aperture, and improve imaging quality of the optical lens 10. Certainly, in another implementation, the ratio of TTLmin$^2$/(ImgH × EPD) may alternatively not be limited to the foregoing limitation.

In some implementations of this application, when the optical lens 10 has a maximum total track length, the optical lens 10 meets the following relational expression:

$$1.0 \leq EFL/EPD \leq 5.0,$$

where

EFL is a focal length of the optical lens 10, and EPD is an entrance pupil diameter of a lens group of the optical lens 10.

The foregoing relational expression specifies a range of a ratio of the focal length of the optical lens 10 to the entrance pupil diameter of the lens group. In this implementation, when the range of the ratio of the focal length of the optical lens 10 to the entrance pupil diameter of the lens group meets the foregoing relational expression, the optical lens 10 can achieve better imaging effect. Certainly, in another implementation, the range of the ratio of the focal length of the optical lens 10 to the entrance pupil diameter of the lens group may alternatively not be limited to the foregoing limitation.

In some implementations of this application, the optical lens meets the following relational expression:

$$0.5 < |Fg2/Fg1| < 5.0,$$

where

Fg1 is a focal length of the first lens group, and Fg2 is a focal length of the second lens group.

The foregoing relational expression specifies a range of a ratio of the focal length of the second lens group G2 of the optical lens 10 to the focal length of the first lens group G1. In this implementation, when the range of the ratio of the focal length of the second lens group G2 of the optical lens 10 to the focal length of the first lens group G1 meets the foregoing relational expression, a focal length of the entire optical lens 10 is ensured, and optical performance of the optical lens 10 can be ensured, so that the optical lens 10 achieves better imaging effect. Certainly, in another implementation, the range of the ratio of the focal length of the second lens group G2 to the focal length of the first lens group G1 may alternatively not be limited to the foregoing limitation.

In some implementations of this application, the first lens group G1 includes a first lens, a second lens, a third lens, and a fourth lens, and the second lens group G2 includes a fifth lens, a sixth lens, and a seventh lens; or the first lens group G1 includes a first lens, a second lens, a third lens, a fourth lens, a fifth lens, and a sixth lens, and the second lens group G2 includes a seventh lens.

Certainly, in another embodiment, a quantity of lenses of the first lens group G1 may alternatively be a quantity other than four and six, and a quantity of lenses of the second lens group G2 may alternatively be a quantity other than one or three.

In some implementations of this application, the optical lens 10 meets the following relational expressions:

$$1.65 \le Nmax < 1.85;$$

and

$$1.40 \le Nmin < 1.58,$$

where

Nmax is a maximum refractive index of all lenses of the optical lens 10, and Nmin is a minimum refractive index of all the lenses of the optical lens 10.

In this implementation, the maximum refractive index and the minimum refractive index of the lenses of the optical lens 10 are limited. When the maximum refractive index and the minimum refractive index of the lenses of the optical lens 10 meet the foregoing relational expressions, it is ensured that a sufficiently wide range of materials can be used for the lenses. For example, the lenses may be made of a glass material, a resin material, or another material. The lenses are properly made of different materials to facilitate miniaturization of the optical lens 10 and thinning of the electronic device 100. Certainly, in another implementation, ranges of Nmax and Nmin may alternatively not be limited to the foregoing limitation.

In some implementations of this application, the optical lens 10 meets the following relational expression:

$$Vmin > 15, \text{ and } Vmax < 100,$$

where

Vmin is a minimum dispersion coefficient of all the lenses of the optical lens 10, and Vmax is a maximum dispersion coefficient of all the lenses of the optical lens 10.

In this implementation, dispersion coefficients of all the lenses of the optical lens 10 are limited. When the dispersion coefficients of all the lenses of the optical lens 10 meet the foregoing relational expressions, a capability of eliminating chromatic aberration by the optical lens 10 can be effectively improved, to improve imaging quality of the optical lens 10. Certainly, in another implementation, ranges of Vmin and Vmax may alternatively not be limited to the foregoing limitation.

In some implementations of this application, the optical lens 10 meets the following relational expressions:

$$1.0 \le |CTmax/CT1| \le 4.0;$$

$$1.0 \leq |CTmax/CT2| \leq 4.0;$$

$$1.0 \leq |CTmax/CT3| \leq 3.0;$$

$$1.0 \leq |CTmax/CT4| \leq 3.0;$$

$$1.0 \leq |CTmax/CT5| \leq 3.0;$$

$$1.0 \leq |CTmax/CT6| \leq 3.0;$$

and

$$1.0 \leq |CTmax/CT7| \leq 3.0,$$

where

CTmax is a maximum value of a thickness of a lens of the optical lens on the optical axis (A), CT1 is a thickness of the first lens on the optical axis, CT2 is a thickness of the second lens on the optical axis, CT3 is a thickness of the third lens on the optical axis, CT4 is a thickness of the fourth lens on the optical axis, CT5 is a thickness of the fifth lens on the optical axis, CT6 is a thickness of the sixth lens on the optical axis, and CT7 is a thickness of the seventh lens on the optical axis.

In this implementation, the thickness of the first lens on the optical axis is a lens with a largest thickness among all the lenses. Therefore, a ratio of the thickness of the first lens to a thickness of another lens on the optical axis is limited. It can be understood that a larger ratio indicates a smaller thickness of the another lens. In this implementation, when a ratio of a thickness of a lens with a largest thickness in the optical lens 10 to a thickness of another lens meets the foregoing relational expressions, a thickness of the optical lens 10 on the optical axis can be reduced. Certainly, in some other implementations, a lens, in the optical lens 10, that has a largest thickness on the optical axis may alternatively be another lens, and a ratio of the thickness of the lens on the optical axis to a thickness of another lens on the optical axis may be limited. Certainly, in another implementation, a range of a ratio of a thickness of a lens with a largest thickness in the optical lens 10 to a thickness of another lens may alternatively not be limited to the foregoing limitation.

In some implementations of this application, when the optical lens 10 has a maximum total track length, the optical lens 10 meets the following relational expressions:

$$|f1/f2| < 1.0;$$

$$|f2/f3| < 2.5;$$

$$|f3/f4| < 1.6;$$

$$|f4/f5| < 25;$$

$$|f5/f6| < 4.0;$$

and

$$|f6/f7| < 2.0,$$

where

f1 is a focal length of the first lens, f2 is a focal length of the second lens, f3 is a focal length of the third lens, f4 is a focal length of the fourth lens, f5 is a focal length of the fifth lens, f6 is a focal length of the sixth lens, and f7 is a focal length of the seventh lens.

The foregoing relational expressions specify a range of a ratio of a focal length of the optical lens 10 to the focal length of the fourth lens and a range of a ratio between focal lengths of adjacent lenses in a case in which the optical lens 10 has the maximum total track length. In this implementation, when the range of the ratio of the focal length of the optical lens 10 to the focal length of the fourth lens and the range of the ratio between focal lengths of adjacent lenses in a case in which the optical lens 10 has the maximum total track length meet the foregoing relational expressions, imaging quality of the optical lens 10 can be ensured. Certainly, in another implementation, the range of the ratio of the focal length of the optical lens 10 to the focal length of the fourth lens and the range of the ratio between focal lengths of adjacent lenses may alternatively not be limited to the foregoing limitation.

In some implementations of this application, the optical lens 10 meets the following relational expressions:

$$0.3 < |R14/R13| < 1.0;$$

$$1.0 < |R12/R11| < 18.0;$$

$$0.1 < |R10/R9| < 4.0;$$

$$0.1 < |R8/R7| < 1.5;$$

$$0.2 < |R6/R5| < 0.8;$$

$$0.3 < |R4/R3| < 1.0;$$

and

$$3.0 < |R2/R1| < 8.0,$$

where

R1 is a curvature radius of an object-side surface of the first lens, R2 is a curvature radius of an image-side surface of the first lens, R3 is a curvature radius of an object-side surface of the second lens, R4 is a curvature radius of an image-side surface of the second lens, R5 is a curvature radius of an object-side surface of the third lens, R6 is a curvature radius of an image-side surface of the third lens, R7 is a curvature radius of an object-side surface of the fourth lens, R8 is a curvature radius of an image-side surface of the fourth lens, R9 is a curvature radius of an object-side surface of the fifth lens, R10 is a curvature radius of an image-side surface of the fifth lens, R11 is a curvature radius of an object-side surface of the sixth lens, R12 is a curvature radius of an image-side surface of the sixth lens, R13 is a curvature radius of an object-side surface of the seventh lens, and R14 is a curvature radius of an image-side surface of the seventh lens.

The foregoing relational expressions specify a range of a ratio between curvature radii of an image-side surface and an object-side surface of each lens. In this implementation, when the range of the ratio between the curvature radii of the image-side surface and the object-side surface of each lens meets the foregoing relational expressions, the optical lens 10 can achieve better imaging effect. Certainly, in another implementation, the range of the ratio between the curvature radii of the image-side surface and the object-side surface of each lens may alternatively not be limited to the foregoing limitation.

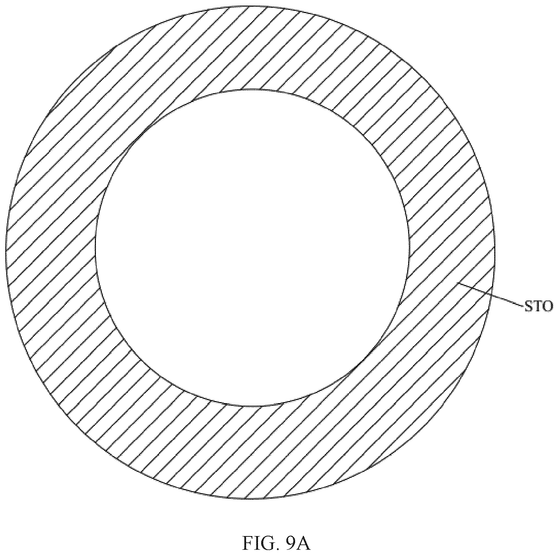

In some implementations of this application, as shown in FIG. 4 and FIG. 9A, the optical lens 10 may further include a stop STO, and the stop STO is disposed on an object side of the first lens. The stop STO in this implementation is configured to limit a width of a beam that passes through the optical lens, to reduce impact of irrelevant light and ensure that the optical lens 10 achieves better imaging effect. Certainly, in another implementation, the stop may alternatively be disposed on an object side or an image side of any lens.

In some implementations of this application, the stop STO is a variable aperture, and an f-number of the stop STO is adjustable within a range of 1.0 to 4.5. In this implementation, a range of the f-number is adjusted by limiting a size of the stop STO, to properly configure an amount of light entering the optical lens, and ensure that the optical lens 10 achieves good imaging effect in different scenarios.

In some implementations of this application, both an image-side surface and an object-side surface of each lens are aspheric surfaces, and the image-side surface and the object-side surface of each lens meet the following formula:

$$z = \frac{cr^2}{1 + \sqrt{1 - (1+k)c^2r^2}} + \sum_{i=1}^{N} \alpha_i \rho^{2i},$$

where

z is a relative distance from a point that is on an aspheric surface and whose distance from the optical axis is r to a tangent plane corresponding to an intersection point between the aspheric surface and the optical axis;
r is a vertical distance between a point on an aspheric curve and the optical axis;
c is a curvature;
k is a conic coefficient; and
$a_i$ is an $i$th-order aspheric coefficient.

Different aspheric lenses are obtained based on the foregoing relational expressions, so that different lenses can implement different optical effect, and good photographing effect is achieved through cooperation between different aspheric lenses. The aspheric surfaces have higher configuration flexibility and good aberration elimination effect. This reduces a total length of the optical lens 10 and facilitates miniaturization of the optical lens 10.

Based on given relational expressions and ranges in some implementations of this application, a configuration mode for lenses in lens groups is combined with lenses with specific optical designs, so that the optical lens 10 has good imaging effect, and thinning of the electronic device 100 is implemented.

The following describes in more detail some specific but not limitative examples of implementations of this application with reference to FIG. 4 and FIG. 6A to FIG. 40.

FIG. 4 is a schematic diagram of a structure of a camera module 1 according to a first implementation of this application.

In this implementation, the optical lens 10 includes two lens groups: a first lens group G1 and a second lens group G2. The first lens group G1 and the second lens group G2 are sequentially disposed from an object side to an image side. Both the first lens group G1 and the second lens group G2 are capable of moving along an optical axis A of the optical lens 10.

As shown in FIG. 4 and FIG. 6A, when the optical lens 10 switches from an operating state to a non-operating state, or switches from a non-operating state to an operating state, a distance between the first lens group G1 and the second lens group G2 (a distance between a surface of a lens, closest to the image side, of the first lens group G1 and a surface of a lens, closest to the object side, of the second lens group G2) changes. For example, when the optical lens 10 is in the operating state (used for imaging), the distance (Tv) between the first lens group G1 and the second lens group G2 is maximized, and the first lens group G1 and the second lens group G2 form a first spacing. In this case, a total track length of the optical lens 10 is TTLmax, and the first lens group G1 and the second lens group G2 implement focusing. When the optical lens 10 is in the non-operating state (not used for imaging), a spacing between the first lens group G1 and the second lens group G2 is less than the first spacing, and the distance (Tv) between the first lens group G1 and the second lens group G2 is minimized. In this case, a total track length of the optical lens 10 is TTLmin, and a compact lens structure is implemented. This facilitates miniaturization of the electronic device 100. In some implementations, when the optical lens 10 is in the non-operating state (not used for imaging), a distance between the second lens group G2 and the photosensitive element 20 may also be minimized, to effectively implement miniaturization of the electronic device.

In some implementations, when the optical lens 10 is in the non-operating state, the distance (Tv) between the first lens group G1 and the second lens group G2 is greater than or equal to 0.00 mm and less than or equal to 10 mm. The foregoing limit values ensure that, when the optical lens 10 is in the non-operating state, there is no spacing or a quite small spacing between the first lens group G1 and the second lens group G2. This effectively reduces space occupied by the optical lens 10 in the electronic device 100, and helps implement miniaturization of the electronic device 100 and improve user experience.

A ratio (TTLmax/TTLmin) of the total track length of the optical lens 10 in the operating state to the total track length of the optical lens 10 in the non-operating state is 1.37. A ratio (TTLmax/(2 × ImgH)) of the total track length of the optical lens 10 in the operating state to twice a diagonal half-length of an effective pixel area of an imaging plane is 0.72. A ratio (TTLmin/(2 × ImgH)) of the total track length of the optical lens 10 in the non-operating state to twice the diagonal half-length of the effective pixel area of the imaging plane is 0.52. The foregoing limit values ensure that a thickness of the optical lens 10 in the non-operating state is sufficiently small. This effectively reduces space occupied by the optical lens 10 in the electronic device 100, and helps implement miniaturization of the electronic device 100 and improve user experience. In addition, this ensures that the total track length of the optical lens 10 in the operating state is sufficiently large, to achieve good imaging quality.

A ratio (TTLmax$^2$/(ImgH × EPD)) of a square of the total track length of the optical lens 10 in the operating state to a product of the diagonal half-length of the effective pixel area of the imaging plane and an entrance pupil diameter of a lens group of the optical lens 10 is 3.06. A ratio (TTLmin$^2$/(ImgH × EPD)) of a square of the total track length of the optical lens 10 in the non-operating state to the product of the diagonal half-length of the effective pixel area of the imaging plane and the entrance pupil diameter of the lens group of the optical lens 10 is 1.62. The foregoing limit values ensure that a thickness of the optical lens 10 on a Z axis is minimized, and an aperture is maximized, to improve imaging quality of the optical lens 10.

When the optical lens 10 is in the operating state, in other words, when the optical lens 10 has a largest total track length, a ratio (EFL/EPD) of a focal length of the optical lens 10 to the entrance pupil diameter of the lens group of the optical lens 10 is 1.66. The foregoing limit value ensures that the optical lens 10 can achieve better imaging effect. A ratio (|Fg2/Fg1|) of a focal length of the second lens group G2 to a focal length of the first lens group G1 is 1.41. The foregoing limit value ensures a focal length of the entire optical lens 10, and ensures optical performance of the optical lens 10, so that the optical lens 10 achieves better imaging effect.

The optical lens 10 includes seven lenses. Specifically, the first lens group G1 includes a first lens L1, a second lens L2, a third lens L3, a fourth lens L4, a fifth lens L5, and a sixth lens L6, and the second lens group G2 includes a seventh lens L7. In this implementation, a refractive index (Nmax) of a lens with a largest refractive index among all lenses of the optical lens 10 is 1.81, and a refractive index (Nmin) of a lens with a smallest refractive index among all the lenses is 1.54. The foregoing limit values ensure that a sufficiently wide range of materials can be used for the lenses. For example, the lenses may be made of a glass material, a resin material, or another material. The lenses are properly made of different materials to facilitate miniaturization of the optical lens 10 and thinning of the electronic device 100. Certainly, in another implementation, a quantity of lenses of the optical lens 10 may alternatively be a quantity other than seven.

The first lens L1 has positive refractive power, and a part, near the optical axis, of an object-side surface of the first lens L1 is a convex surface, to improve a light convergence capability of the optical lens 10 on the object side, and reduce a total length of the optical lens 10. This facilitates miniaturization of the optical lens 10. A part, near the optical axis, of an image-side surface of the first lens L1 is a concave surface, so that spherical aberration and axial chromatic aberration can be corrected.

The second lens L2 has negative refractive power. A part, near the optical axis, of an object-side surface of the second lens L2 is a convex surface. A part, near the optical axis, of an image-side surface of the second lens L2 is a concave surface. The second lens L2 helps correct aberration of the optical lens 10, to further balance spherical aberration and chromatic aberration caused by the first lens L1.

The third lens L3 has positive refractive power. A part, near the optical axis, of an object-side surface of the third lens L3 is a concave surface. A part, near the optical axis, of an image-side surface of the third lens L3 is a convex surface. The third lens L3 helps correct aberration of the optical lens 10, to further balance spherical aberration and chromatic aberration caused by the first lens L1.

The fourth lens L4 has negative refractive power. A part, near the optical axis, of an object-side surface of the fourth lens L4 is a concave surface. A part, near the optical axis, of an image-side surface of the fourth lens L4 is a concave surface. The fourth lens L4 can balance distribution of negative refractive power of the optical lens 10, reduce sensitivity of the optical lens 10, and reduce coma, to effectively shorten a back focal length and a total length.

The fifth lens L5 has negative refractive power. A part, near the optical axis, of an object-side surface of the fifth lens L5 is a concave surface. A part, near the optical axis, of an image-side surface of the fifth lens L5 is a convex surface. The fifth lens L5 can balance distribution of negative refractive power of the optical lens 10, reduce sensitivity of the optical lens 10, and reduce spherical aberration.

The sixth lens L6 has positive refractive power. A part, near the optical axis, of an object-side surface of the sixth lens L6 is a convex surface. A part, near the optical axis, of an image-side surface of the sixth lens L6 is a convex surface. The sixth lens L6 helps correct distortion, astigmatism, and coma for the optical lens 10, to effectively shorten a back focal length and a total track length.

The seventh lens L7 has negative refractive power. A part, near the optical axis, of an object-side surface of the seventh lens L7 is a convex surface. A part, near the optical axis, of an image-side surface of the seventh lens L7 is a concave surface. The seventh lens L7 helps move a principal point of the optical lens 10 toward a side of a photographed object, to effectively shorten a back focal length and a total track length, and help correct aberration of an off-axis field of view. In this implementation, an off-axis part of the object-side surface of the first lens L1 includes at least one concave surface, and an off-axis part of the image-side surface of the seventh lens L7 includes at least one convex surface. To be specific, both the object-side surface and the image-side surface of the seventh lens L7 include at least one inflection point, to correct the aberration of the off-axis field of view. The inflection point is a transition point at which a curvature center of a curve on a lens surface moves from the object side to the image side (or from the image side to the object side), where the lens surface extends from a part, near the optical axis, of a lens to an off-axis part of the lens.

In this implementation, different lenses cooperate with each other, so that the optical lens 10 has good imaging effect, and thinning of the electronic device 100 is implemented.

In this implementation, all surfaces of the lenses of the optical lens 10 are aspheric surfaces. To be specific, the image-side surfaces and the object-side surfaces of the first lens L1, the second lens L2, the third lens L3, the fourth lens L4, the fifth lens L5, the sixth lens L6, and the seventh lens L7 are all aspheric surfaces. The aspheric surfaces have higher configuration flexibility and good aberration elimination effect. This reduces a total length of the optical lens 10 and facilitates miniaturization of the optical lens 10.

A dispersion coefficient (Vmax) of a lens with a largest dispersion coefficient among all the lenses is 55.95, and a dispersion coefficient (Vmin) of a lens with a smallest dispersion coefficient among all the lenses is 19.23. The foregoing limit values ensure a capability of eliminating chromatic aberration by the optical lens 10, and improve imaging quality of the optical lens 10.

A thickness of the first lens L1 on the optical axis is CT1, a thickness of the second lens L2 on the optical axis is CT2, a thickness of the third lens L3 on the optical axis is CT3, a thickness of the fourth lens L4 on the optical axis is CT4, a thickness of the fifth lens L5 on the optical axis is CT5, a thickness of the sixth lens L6 on the optical axis is CT6, and a thickness of the seventh lens L7 on the optical axis is CT7. CTmax is a maximum value of a thickness of a lens of the optical lens 10 on the optical axis, where |CTmax/CT1| = 1.0, ICTmax/CT21 = 2.88, ICTmax/CT31 = 1.33, |CTmax/CT4| = 2.33, |CTmax/CT5| = 1.14, |CTmax/CT6| = 1.40, and |CTmax/CT7| = 1.39.

In this implementation, the thickness of the first lens L1 on the optical axis is a lens with a largest thickness among all the lenses. Therefore, a ratio of the thickness of the first lens L1 to a thickness of another lens on the optical axis is limited. It can be understood that a larger ratio indicates a smaller thickness of the another lens. The foregoing limit values ensure that a thickness of the optical lens 10 on the optical axis is sufficiently small. Certainly, in some other implementations, a lens, in the optical lens 10, that has a largest thickness on the optical axis may alternatively be another lens, and a ratio of the thickness of the lens on the optical axis to a thickness of another lens on the optical axis may be limited.

A focal length of the first lens L1 is f1, a focal length of the second lens L2 is f2, a focal length of the third lens L3 is f3, a focal length of the fourth lens L4 is f4, a focal length of the fifth lens L5 is f5, a focal length of the sixth lens L6 is f6, and a focal length of the seventh lens L7 is f7. When the optical lens 10 has a maximum total track length, in other words, when the optical lens 10 is in the operating state, |f1/f2| = 0.51, |f2/f3| = 1.10, |f3/f4| = 0.57, |f4/f5| = 1.54, |f5/f6| = 1.99, and |f6/f7| = 0.75. It can be understood that the ratio being closer to 1.0 indicates the focal lengths of the lenses being closer to each other. The foregoing limit values ensure that the focal lengths of the lenses are allocated as evenly as possible, and ensure imaging quality of the optical lens 10.

A curvature radius of the object-side surface of the first lens L1 is R1, a curvature radius of the image-side surface of the first lens L1 is R2, a curvature radius of the object-side surface of the second lens L2 is R3, a curvature radius of the image-side surface of the second lens L2 is R4, a curvature radius of the object-side surface of the third lens L3 is R5, a curvature radius of the image-side surface of the third lens L3 is R6, a curvature radius of the object-side surface of the fourth lens L4 is R7, a curvature radius of the image-side surface of the fourth lens L4 is R8, a curvature radius of the object-side surface of the fifth lens L5 is R9, a curvature radius of the image-side surface of the fifth lens L5 is R10, a curvature radius of the object-side surface of the sixth lens L6 is R11, a curvature radius of the image-side surface of the sixth lens L6 is R12, a curvature radius of the object-side surface of the seventh lens L7 is R13, and a curvature radius of the image-side surface of the seventh lens L7 is R14, where |R14/R13| = 0.45, |R12/R11| = 15.54, |R10/R9| = 1.76, |R8/R7| = 0.21, |R6/R5| = 0.27, |R4/R3| = 0.52, and |R2/R1| = 3.95. The foregoing limit values ensure that the optical lens 10 can achieve better imaging effect.

As shown in FIG. 7 and FIG. 8, when the optical lens 10 changes from the non-operating state to the operating state, in other words, when the optical lens 10 changes from a compact state to an expanded state, the first lens group G1 moves toward the object side and extends out of the housing 3 through the through hole and the light transmission hole 31 sequentially, a distance between the first lens group G1 and the second lens group G2 increases to the first spacing, and then the first lens group G1 and the second lens group G2 simultaneously move toward the object side to a target imaging location. When the optical lens 10 is in the operating state, a design spacing (the first spacing) at which imaging can be performed is maintained between the first lens group G1 and the second lens group G2. When focusing is performed at different object distances, a relative distance (the first spacing) between the two lens groups remains unchanged, and the two lens groups simultaneously move forward and backward to optimal locations to focus on the imaging plane (the photosensitive element 20). When the optical lens 10 changes from the operating state to the non-operating state, the first lens group G1 moves toward the second lens group G2 and is close to the second lens group G2, and the second lens group G2 may move toward the photosensitive element 20, so that the camera module 1 is compressed and accommodated in the enclosure. This ensures that the camera module 1 occupies a sufficiently small internal volume of the electronic device 100, and facilitates thinning of the electronic device 100. Certainly, in another embodiment, when the optical lens 10 changes from the compact state to the expanded state, the first lens group G1 and the second lens group G2 may alternatively simultaneously move toward the object side at the beginning. Alternatively, only the first lens group G1 moves toward the object side, and the second lens group G2 may alternatively remain stationary according to a requirement.

Based on the foregoing relational expressions, basic parameters of the optical lens 10 in the operating state in the first implementation of this application are shown in Table 1.

**Table 1 Basic parameters of the optical lens 10 in the operating state in the first implementation**

| Param | TTL | Img | EFL | f1 | f2 | f3 | f4 | f5 | f6 | f7 | Fg1 | Fg2 |
|---|---|---|---|---|---|---|---|---|---|---|---|---|
| eter (mm) | | H | | | | | | | | | | |
| Value | 11.4975 8 | 8.0 | 8.9628 88 | 8.2910 23 | -16.4 | 14.87 9 | - 25.968 739 | - 16.902 167 | 8.504 206 | - 11.282 433 | 7.79 | -11.28 |

Detailed structural data of compositions of the camera module 1 in the first implementation of this application is shown in Table 2.

**Table 2 Detailed structural data of compositions of the camera module 1**

| Surface number | Description | Surface type | Curvature radius/(mm) | Thickness/ (mm) | Material | Refractive index | Dispersion coefficient |
|---|---|---|---|---|---|---|---|
| OBJ | Photographed object | Planar surface | Unlimited | Unlimited | | | |
| STO | STO | Aspheric surface | Unlimited | -0.28 | | | |
| S1 | L1 | Aspheric surface | 5.162 | 1.007 | Glass | 1.81 | 41.00 |
| S2 | | Aspheric surface | 20.366 | 0.091 | | | |
| S3 | L2 | Aspheric surface | 10.026 | 0.35 | Resin | 1.68 | 19.23 |
| S4 | | Aspheric surface | 5.194 | 0.958 | | | |
| S5 | L3 | Aspheric surface | -22.691 | 0.755 | Resin | 1.55 | 55.95 |
| S6 | | Aspheric surface | -6.053 | 0.05 | | | |
| S7 | L4 | Aspheric surface | -102.79 | 0.432 | Resin | 1.68 | 19.23 |
| S8 | | Aspheric surface | 21.242 | 0.847 | | | |
| S9 | L5 | Aspheric surface | -3.678 | 0.887 | Resin | 1.57 | 37.52 |
| S10 | | Aspheric surface | -6.475 | 0.04 | | | |
| S11 | L6 | Aspheric surface | 4.841 | 0.72 | Resin | 1.54 | 55.70 |
| S12 | | Aspheric surface | -75.242 | 2.7 | | | |
| S13 | L7 | Aspheric surface | 7.005 | 0.725 | Resin | 1.54 | 55.70 |
| S14 | | Aspheric surface | 3.13 | 0.398 | | | |
| S15 | Infrared filter | Planar surface | Unlimited | 0.3 | Glass | 1.52 | 64.20 |
| S16 | | Planar surface | Unlimited | 1.208 | | | |
| S17 | Imaging plane | Planar surface | Unlimited | 0.03 | | | |

Meanings of the symbols in the foregoing table are as follows:

OBJ: an object distance;

STO: a stop;
L1: the first lens L1;
L2: the second lens L2;
L3: the third lens L3;
L4: the fourth lens L4;
L5: the fifth lens L5;
L6: the sixth lens L6;
L7: the seventh lens L7;
S1: the object-side surface of the first lens L1;
S2: the image-side surface of the first lens L1;
S3: the object-side surface of the second lens L2;
S4: the image-side surface of the second lens L2;
S5: the object-side surface of the third lens L3;
S6: the image-side surface of the third lens L3;
S7: the object-side surface of the fourth lens L4;
S8: the image-side surface of the fourth lens L4;
S9: the object-side surface of the fifth lens L5;
S10: the image-side surface of the fifth lens L5;
S11: the object-side surface of the sixth lens L6;
S12: the image-side surface of the sixth lens L6;
S13: the object-side surface of the seventh lens L7;
S14: the image-side surface of the seventh lens L7;
S15: an object-side surface of the infrared filter;
S16: an image-side surface of the infrared filter; and
S17: the imaging plane.

It should be noted that the foregoing symbols in this application represent the same meanings when appearing again subsequently, unless otherwise specified. Details are not described again.

Table 3 shows aspheric coefficients of the optical lens 10 in this implementation. A quantity of aspheric surfaces in the optical lens 10 in this embodiment is 14. Details are shown in Table 3.

**Table 3 Aspheric coefficients of the optical lens 10 in the first implementation**

| Surface number | K | A4 | A6 | A8 | A10 |
|---|---|---|---|---|---|
| S1 | -7.49E-01 | 1.80E-03 | -1.14E-03 | 8.89E-04 | -4.39E-04 |
| S2 | 9.16E-01 | 3.67E-03 | -5.50E-03 | 4.51E-03 | -2.14E-03 |
| S3 | 1.00E+01 | -8.46E-04 | -9.34E-03 | 8.86E-03 | -4.48E-03 |
| S4 | 2.86E+00 | -5.36E-03 | -6.52E-03 | 7.39E-03 | -4.45E-03 |
| S5 | 0.00E+00 | -1.82E-03 | -2.74E-04 | -8.51E-04 | 5.34E-04 |
| S6 | -2.46E+00 | 9.13E-03 | -1.37E-02 | 6.37E-03 | -1.34E-03 |
| S7 | 0.00E+00 | -3.95E-03 | -8.61E-03 | 1.18E-03 | 2.35E-03 |
| S8 | 0.00E+00 | -8.75E-03 | -2.14E-03 | 5.61E-04 | 3.15E-04 |
| S9 | -1.29E-01 | 2.38E-02 | -7.66E-03 | 1.63E-03 | 1.46E-04 |
| S10 | 3.49E-01 | -6.89E-03 | -3.59E-03 | 2.19E-03 | -5.17E-04 |
| S11 | -6.89E-01 | -1.98E-02 | 1.33E-03 | -5.33E-04 | 2.58E-04 |
| S12 | 0.00E+00 | 6.09E-03 | -3.09E-03 | 1.40E-04 | 1.07E-04 |
| S13 | 9.59E-02 | -2.63E-02 | 2.30E-03 | -1.51E-04 | 9.00E-06 |
| S14 | -4.61E+00 | -1.40E-02 | 1.44E-03 | -1.10E-04 | 6.00E-06 |
| Surface number | A12 | A14 | A16 | A18 | A20 |
| S1 | 1.42E-04 | -3.00E-05 | 4.00E-06 | 0.00E+00 | 0.00E+00 |
| S2 | 6.32E-04 | -1.18E-04 | 1.40E-05 | -1.00E-06 | 0.00E+00 |

(continued)

| Surface number | A12 | A14 | A16 | A18 | A20 |
|---|---|---|---|---|---|
| S3 | 1.39E-03 | -2.74E-04 | 3.30E-05 | -2.00E-06 | 0.00E+00 |
| S4 | 1.65E-03 | -3.82E-04 | 5.50E-05 | -4.00E-06 | 0.00E+00 |
| S5 | -1.66E-04 | 1.90E-05 | 2.00E-06 | -1.00E-06 | 0.00E+00 |
| S6 | -1.34E-04 | 1.36E-04 | -2.90E-05 | 3.00E-06 | 0.00E+00 |
| S7 | -1.72E-03 | 5.55E-04 | -9.60E-05 | 9.00E-06 | 0.00E+00 |
| S8 | -2.47E-04 | 7.10E-05 | -1.00E-05 | 1.00E-06 | 0.00E+00 |
| S9 | -1.82E-04 | 4.60E-05 | -6.00E-06 | 0.00E+00 | 0.00E+00 |
| S10 | 5.90E-05 | -2.00E-06 | 0.00E+00 | 0.00E+00 | 0.00E+00 |
| S11 | -6.90E-05 | 1.00E-05 | -1.00E-06 | 0.00E+00 | 0.00E+00 |
| S12 | -2.90E-05 | 3.00E-06 | 0.00E+00 | 0.00E+00 | 0.00E+00 |
| S13 | 0.00E+00 | 0.00E+00 | 0.00E+00 | 0.00E+00 | 0.00E+00 |
| S14 | 0.00E+00 | 0.00E+00 | 0.00E+00 | 0.00E+00 | 0.00E+00 |

K represents a conic coefficient in an aspheric curve equation. A4, A6, A8, A10, A12, A14, A16, A19, and A20 represent an 4th-order aspheric coefficient, a 6th-order aspheric coefficient, an 8th-order aspheric coefficient, a 10th-order aspheric coefficient, a 12th-order aspheric coefficient, a 14th-order aspheric coefficient, a 16th-order aspheric coefficient, an 18th-order aspheric coefficient, and a 20th-order aspheric coefficient of each surface. It should be noted that the parameters in the table are represented through scientific notation. For example, -1.07E-01 indicates $-1.07 \times 10^{-1}$, and -4.11E-02 indicates $-4.11 \times 10^{-2}$. It should be noted that symbols such as K, A4, A6, A8, A10, A12, A14, A16, A19, and A20 in this application represent the same meanings as those herein when appearing again subsequently, unless otherwise specified. Details are not described again subsequently.

The foregoing parameters are substituted into the following formula:

$$z = \frac{cr^2}{1 + \sqrt{1 - (1+k)c^2 r^2}} + \sum_{i=1}^{N} \alpha_i \rho^{2i}$$

In this way, the lenses of the optical lens 10 in this implementation can be designed, where z is a relative distance from a point that is on an aspheric surface and whose distance from the optical axis is r to a tangent plane corresponding to an intersection point between the aspheric surface and the optical axis, r is a vertical distance between a point on an aspheric curve and the optical axis, c is a curvature, k is a conic coefficient, and $a_i$ is an $i$th-order aspheric coefficient.

In this implementation, different lenses of the optical lens 10 that are designed based on the foregoing parameters can perform different functions, so that the optical lens 10 with good imaging quality is obtained through cooperation between the lenses.

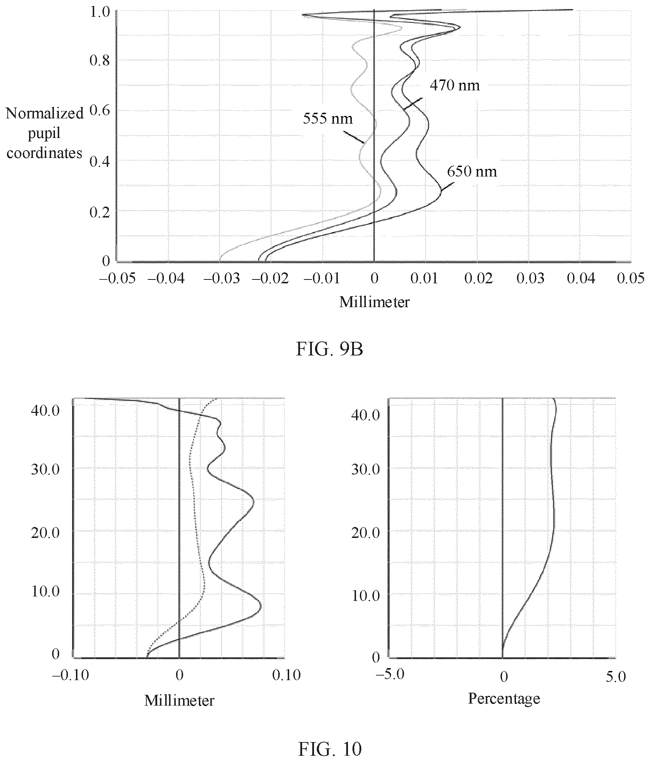

FIG. 9B and FIG. 10 are diagrams representing optical performance of the optical lens 10 in the first implementation.

Specifically, FIG. 9B shows axial chromatic aberration of light with wavelengths of 650 nm, 555 nm, and 470 nm for the optical lens 10 after the light passes through the optical lens 10 in the first implementation. In FIG. 9B, vertical coordinates represent normalized pupil coordinates, and horizontal coordinates represent axial chromatic aberration measured in millimeters. It can be learned from FIG. 9B that, in this implementation, axial chromatic aberration of the optical lens 10 in each state is controlled within a quite small range.

In FIG. 10, a diagram on the left is a schematic diagram of field curvature of the optical lens 10, and a diagram on the right is a schematic diagram of optical distortion of the optical lens 10. In the diagram on the left, a solid line is a schematic diagram of field curvature in a meridional direction after the 555-nm light passes through the optical lens 10, and a dashed line is a schematic diagram of field curvature in a sagittal direction after the 555-nm light passes through the optical lens 10. The diagram on the right is a schematic diagram of optical distortion of the 555-nm light after the 555-nm light passes through the optical lens 10 in the first implementation. Vertical coordinates in both diagrams indicate object angles. Horizontal coordinates in the diagram on the left represent astigmatism values, measured in millimeters, in the meridional direction (the dashed line) and the sagittal direction (the solid line). The diagram on the right shows optical distortion values that correspond to different fields of view and that are measured in percentages. It can be learned from FIG. 10 that, in this implementation, an optical system controls distortion within a range that cannot be clearly identified by naked eyes.

In the optical lens 10 provided in this implementation, a configuration mode for lenses in lens groups is combined with lenses with specific optical designs, so that the camera module 1 can be miniaturized, the optical lens 10 has good imaging effect, and thinning of the electronic device 100 is implemented.

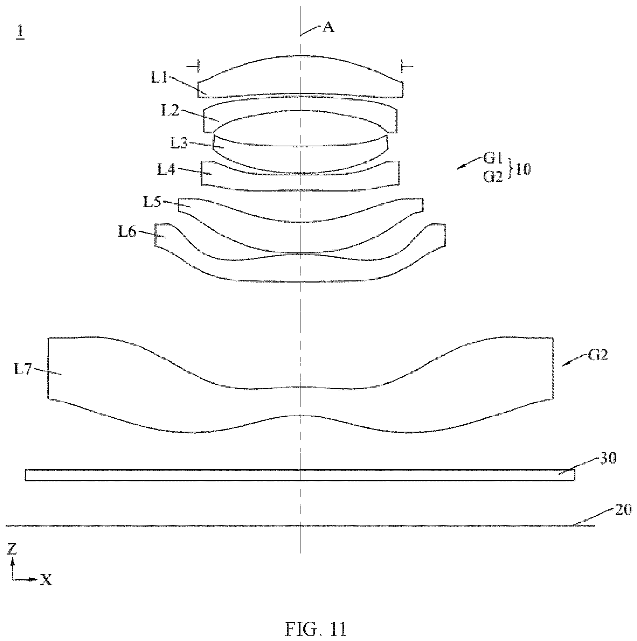

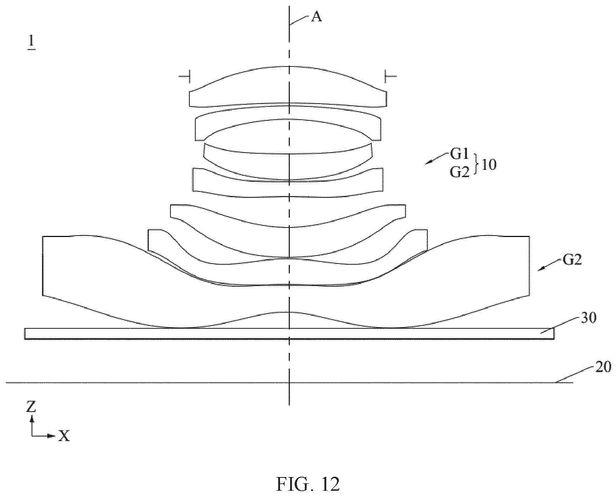

FIG. 11 is a schematic diagram of a structure of a camera module 1 according to a second implementation of this application. FIG. 12 is a schematic diagram of a structure of the camera module shown in FIG. 11 in another state. An optical lens of the camera module shown in FIG. 11 is in an operating state, and the optical lens of the camera module shown in FIG. 12 is in a non-operating state.

In this implementation, the optical lens 10 includes two lens groups: a first lens group G1 and a second lens group G2. The first lens group G1 and the second lens group G2 are sequentially disposed from an object side to an image side. Both the first lens group G1 and the second lens group G2 are capable of moving along an optical axis A of the optical lens 10.

When the optical lens 10 switches from the operating state to the non-operating state, or switches from the non-operating state to the operating state, a distance between the first lens group G1 and the second lens group G2 changes. For example, when the optical lens 10 is in the operating state (used for imaging), the distance (Tv) between the first lens group G1 and the second lens group G2 is maximized, and the first lens group G1 and the second lens group G2 form a first spacing. In this case, a total track length of the optical lens 10 is TTLmax, and the first lens group G1 and the second lens group G2 implement focusing. When the optical lens 10 is in the non-operating state (not used for imaging), a spacing between the first lens group G1 and the second lens group G2 is less than the first spacing, and the distance (Tv) between the first lens group G1 and the second lens group G2 is minimized. In this case, a total track length of the optical lens 10 is TTLmin, and a compact lens structure is implemented. This facilitates miniaturization of the electronic device 100. In some implementations, when the optical lens 10 is in the non-operating state, a distance between the second lens group G2 and the photosensitive element 20 may also be minimized, to effectively implement miniaturization of the electronic device.

In some implementations, when the optical lens 10 is in the non-operating state, the distance (Tv) between the first lens group G1 and the second lens group G2 is greater than or equal to 0.00 mm and less than or equal to 10 mm. The foregoing limit values ensure that, when the optical lens 10 is in the non-operating state, there is no spacing or a quite small spacing between the first lens group G1 and the second lens group G2. This effectively reduces space occupied by the optical lens 10 in the electronic device 100, and helps implement miniaturization of the electronic device 100 and improve user experience.

A ratio (TTLmax/TTLmin) of the total track length of the optical lens 10 in the operating state to the total track length of the optical lens 10 in the non-operating state is 1.41. A ratio (TTLmax/(2 × ImgH)) of the total track length of the optical lens 10 in the operating state to twice a diagonal half-length of an effective pixel area of an imaging plane is 0.72. A ratio (TTLmin/(2 × ImgH)) of the total track length of the optical lens 10 in the non-operating state to twice the diagonal half-length of the effective pixel area of the imaging plane is 0.51. The foregoing limit values ensure that a thickness of the optical lens 10 in the non-operating state is sufficiently small. This effectively reduces space occupied by the optical lens 10 in the electronic device 100, and helps implement miniaturization of the electronic device 100 and improve user experience. In addition, this ensures that the total track length of the optical lens 10 in the operating state is sufficiently large, to achieve good imaging quality.

A ratio (TTLmax$^2$/(ImgH × EPD)) of a square of the total track length of the optical lens 10 in the operating state to a product of the diagonal half-length of the effective pixel area of the imaging plane and an entrance pupil diameter of a lens group of the optical lens 10 is 3.01. A ratio (TTLmin$^2$/(ImgH × EPD)) of a square of the total track length of the optical lens 10 in the non-operating state to the product of the diagonal half-length of the effective pixel area of the imaging plane and the entrance pupil diameter of the lens group of the optical lens 10 is 1.52. The foregoing limit values ensure that a thickness of the optical lens 10 on a Z axis is minimized, and an aperture is maximized, to improve imaging quality of the optical lens 10.

When the optical lens 10 is in the operating state, in other words, when the optical lens 10 has a largest total track length, a ratio (EFL/EPD) of a focal length of the optical lens 10 to the entrance pupil diameter of the lens group of the optical lens 10 is 1.60. The foregoing limit value ensures that the optical lens 10 can achieve better imaging effect. A ratio (|Fg2/Fg1|) of a focal length of the second lens group G2 to a focal length of the first lens group G1 is 1.39. The foregoing limit value ensures a focal length of the entire optical lens 10, and ensures optical performance of the optical lens 10, so that the optical lens 10 achieves better imaging effect.

The optical lens 10 includes seven lenses. Specifically, the first lens group G1 includes a first lens L1, a second lens L2, a third lens L3, a fourth lens L4, a fifth lens L5, and a sixth lens L6, and the second lens group G2 includes a seventh lens L7. In this implementation, a refractive index (Nmax) of a lens with a largest refractive index among all lenses of the optical lens 10 is 1.81, and a refractive index (Nmin) of a lens with a smallest refractive index among all the lenses is 1.54. The foregoing limit values ensure that a sufficiently wide range of materials can be used for the lenses. For example, the lenses may be made of a glass material, a resin material, or another material. The lenses are properly made of different materials to facilitate miniaturization of the optical lens 10 and thinning of the electronic device 100. Certainly, in another implementation, a quantity of lenses of the optical lens 10 may alternatively be a quantity other than seven.

The first lens L1 has positive refractive power, and a part, near the optical axis, of an object-side surface of the first lens L1 is a convex surface, to improve a light convergence capability of the optical lens 10 on the object side, and reduce a total length of the optical lens 10. This facilitates miniaturization of the optical lens 10. A part, near the optical axis, of an image-side surface of the first lens L1 is a concave surface, so that spherical aberration and axial chromatic aberration can be corrected.

The second lens L2 has negative refractive power. A part, near the optical axis, of an object-side surface of the second lens L2 is a convex surface. A part, near the optical axis, of an image-side surface of the second lens L2 is a concave surface. The second lens L2 helps correct aberration of the optical lens 10, to further balance spherical aberration and chromatic aberration caused by the first lens L1.

The third lens L3 has positive refractive power. A part, near the optical axis, of an object-side surface of the third lens L3 is a concave surface. A part, near the optical axis, of an image-side surface of the third lens L3 is a convex surface. The third lens L3 helps correct aberration of the optical lens 10, to further balance spherical aberration and chromatic aberration caused by the first lens L1.

The fourth lens L4 has negative refractive power. A part, near the optical axis, of an object-side surface of the fourth lens L4 is a concave surface. A part, near the optical axis, of an image-side surface of the fourth lens L4 is a concave surface. The fourth lens L4 can balance distribution of negative refractive power of the optical lens 10, reduce sensitivity of the optical lens 10, and reduce coma, to effectively shorten a back focal length and a total length.

The fifth lens L5 has negative refractive power. A part, near the optical axis, of an object-side surface of the fifth lens L5 is a concave surface. A part, near the optical axis, of an image-side surface of the fifth lens L5 is a convex surface. The fifth lens L5 can balance distribution of negative refractive power of the optical lens 10, reduce sensitivity of the optical lens 10, and reduce spherical aberration.

The sixth lens L6 has positive refractive power. A part, near the optical axis, of an object-side surface of the sixth lens L6 is a convex surface. A part, near the optical axis, of an image-side surface of the sixth lens L6 is a convex surface. The sixth lens L6 helps correct distortion, astigmatism, and coma, to effectively shorten a back focal length and a total track length.

The seventh lens L7 has negative refractive power. A part, near the optical axis, of an object-side surface of the seventh lens L7 is a convex surface. A part, near the optical axis, of an image-side surface of the seventh lens L7 is a concave surface. The seventh lens L7 helps move a principal point of the optical lens 10 toward a side of a photographed object, to effectively shorten a back focal length and a total track length, and help correct aberration of an off-axis field of view. In this implementation, an off-axis part of the object-side surface of the first lens L1 includes at least one concave surface, and an off-axis part of the image-side surface of the seventh lens L7 includes at least one convex surface. To be specific, both the object-side surface and the image-side surface of the seventh lens L7 include at least one inflection point, to correct the aberration of the off-axis field of view.

In this implementation, different lenses cooperate with each other, so that the optical lens 10 has good imaging effect, and thinning of the electronic device 100 is implemented.

In this implementation, all surfaces of the lenses of the optical lens 10 are aspheric surfaces. To be specific, the image-side surfaces and the object-side surfaces of the first lens L1, the second lens L2, the third lens L3, the fourth lens L4, the fifth lens L5, the sixth lens L6, and the seventh lens L7 are all aspheric surfaces. The aspheric surfaces have higher configuration flexibility and good aberration elimination effect. This reduces a total length of the optical lens 10 and facilitates miniaturization of the optical lens 10.

A dispersion coefficient (Vmax) of a lens with a largest dispersion coefficient among all the lenses is 55.95, and a dispersion coefficient (Vmin) of a lens with a smallest dispersion coefficient among all the lenses is 19.23. The foregoing limit values ensure a capability of eliminating chromatic aberration by the optical lens 10, and improve imaging quality of the optical lens 10.

A thickness of the first lens L1 on the optical axis is CT1, a thickness of the second lens L2 on the optical axis is CT2, a thickness of the third lens L3 on the optical axis is CT3, a thickness of the fourth lens L4 on the optical axis is CT4, a thickness of the fifth lens L5 on the optical axis is CT5, a thickness of the sixth lens L6 on the optical axis is CT6, and a thickness of the seventh lens L7 on the optical axis is CT7, CTmax is a maximum thickness value of the lens in the optical lens 10 on the optical axis, where |CTmax/CT₁|=1.0, |CTmax/CT2|=2.72, |CTmax/CT3|=1.39, |CTmax/CT4|=2.39, |CTmax/CT5|=1.21, |CTmax/CT6|=1.36, and |CTmax/CT7|=1.31.

In this implementation, the thickness of the first lens L1 on the optical axis is a lens with a largest thickness among all the lenses. Therefore, a ratio of the thickness of the first lens L1 to a thickness of another lens on the optical axis is limited. It can be understood that a larger ratio indicates a smaller thickness of the another lens. The foregoing limit values ensure that a thickness of the optical lens 10 on the optical axis is sufficiently small. Certainly, in some other implementations, a lens, in the optical lens 10, that has a largest thickness on the optical axis may alternatively be another lens, and a ratio of the thickness of the lens on the optical axis to a thickness of another lens on the optical axis may be limited.

A focal length of the first lens L1 is f1, a focal length of the second lens L2 is f2, a focal length of the third lens L3 is f3, a focal length of the fourth lens L4 is f4, a focal length of the fifth lens L5 is f5, a focal length of the sixth lens L6 is f6, and a focal length of the seventh lens L7 is f7. When the optical lens 10 has a maximum total track length, in other words, when the optical lens 10 is in the operating state, $|f1/f2| = 0.50$, $|f2/f3| = 1.10$, $|f3/f4| = 0.57$, $|f4/f5| = 1.64$, $|f5/f6| = 1.95$, and $|f6/f7| = 0.75$. It can be understood that the ratio being closer to 1.0 indicates the focal lengths of the lenses being closer to each other. The foregoing limit values ensure that the focal lengths of the lenses are allocated as evenly as possible, and ensure imaging quality of the optical lens 10.

A curvature radius of the object-side surface of the first lens L1 is R1, a curvature radius of the image-side surface of the first lens L1 is R2, a curvature radius of the object-side surface of the second lens L2 is R3, a curvature radius of the image-side surface of the second lens L2 is R4, a curvature radius of the object-side surface of the third lens L3 is R5, a curvature radius of the image-side surface of the third lens L3 is R6, a curvature radius of the object-side surface of the fourth lens L4 is R7, a curvature radius of the image-side surface of the fourth lens L4 is R8, a curvature radius of the object-side surface of the fifth lens L5 is R9, a curvature radius of the image-side surface of the fifth lens L5 is R10, a curvature radius of the object-side surface of the sixth lens L6 is R11, a curvature radius of the image-side surface of the sixth lens L6 is R12, a curvature radius of the object-side surface of the seventh lens L7 is R13, and a curvature radius of the image-side surface of the seventh lens L7 is R14, where $|R14/R13| = 0.44$, $|R12/R11| = 8.94$, $|R10/R9| = 1.81$, $|R8/R7| = 0.13$, $|R6/R5| = 0.26$, $|R4/R3| = 0.51$, and $|R2/R1| = 4.15$. The foregoing limit values ensure that the optical lens 10 can achieve better imaging effect.

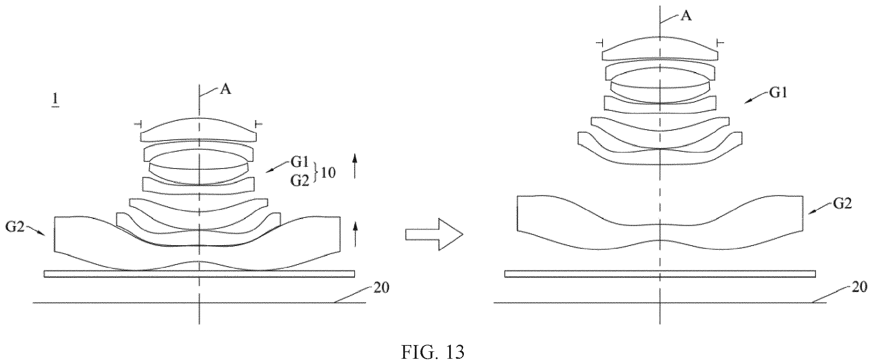

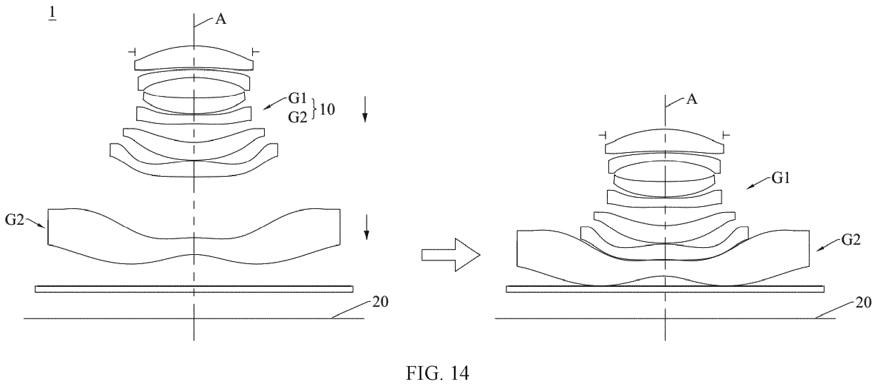

As shown in FIG. 13 and FIG. 14, when the optical lens 10 changes from the non-operating state to the operating state, in other words, when the optical lens 10 changes from a compact state to an expanded state, the first lens group G1 moves toward the object side and extends out of the housing 3 through the through hole and the light transmission hole 31 sequentially, a distance between the first lens group G1 and the second lens group G2 increases to the first spacing, and then the first lens group G1 and the second lens group G2 simultaneously move toward the object side to a target imaging location. When the optical lens 10 is in the operating state, a design spacing (the first spacing) at which imaging can be performed is maintained between the first lens group G1 and the second lens group G2. When focusing is performed at different object distances, a relative distance (the first spacing) between the two lens groups remains unchanged, and the two lens groups simultaneously move forward and backward to optimal locations to focus on the imaging plane (the photosensitive element 20). When the optical lens 10 changes from the operating state to the non-operating state, the first lens group G1 moves toward the second lens group G2 and is close to the second lens group G2, and the second lens group G2 may move toward the photosensitive element 20, so that the camera module 1 is compressed and accommodated in the enclosure. This ensures that the camera module 1 occupies a sufficiently small internal volume of the electronic device 100, and facilitates thinning of the electronic device 100. Certainly, in another embodiment, when the optical lens 10 changes from the compact state to the expanded state, the first lens group G1 and the second lens group G2 may alternatively simultaneously move toward the object side at the beginning. Alternatively, only the first lens group G1 moves toward the object side, and the second lens group G2 may alternatively remain stationary according to a requirement.

Based on the foregoing relational expressions, basic parameters of the optical lens 10 in the operating state in the second implementation of this application are shown in Table 4.

**Table 4 Basic parameters of the optical lens 10 in the operating state in the second implementation**

| Paramet er (mm) | TTL | ImgH | EFL | f1 | f2 | f3 | f4 | f5 | f6 | f7 | Fg1 | Fg2 |
|---|---|---|---|---|---|---|---|---|---|---|---|---|
| Value | 11.491 | 8.000 | 8.788 | 8.391 | - 16.760 | 15.201 | 26.496 | - 16.135 | 8.290 | - 11.082 | 8.00 | -11.08 |

Detailed structural data of compositions of the camera module 1 in the second implementation of this application is shown in Table 5.

**Table 5 Detailed structural data of compositions of the camera module 1**

| Surface number | Description | Surface type | Curvature radius/(mm) | Thickness/ (mm) | Material | Refractive index | Dispersion coefficient |
|---|---|---|---|---|---|---|---|
| OBJ | Photographed object | Planar surface | Unlimited | Unlimited | | | |
| STO | STO | Aspheric surface | Unlimited | -0.280 | | | |
| S1 | L1 | Aspheric surface | 5.299 | 1.021 | Glass | 1.81 | 41.00 |
| S2 | | Aspheric surface | 21.979 | 0.084 | | | |
| S3 | L2 | Aspheric surface | 10.529 | 0.375 | Resin | 1.68 | 19.23 |
| S4 | | Aspheric surface | 5.382 | 0.985 | | | |
| S5 | L3 | Aspheric surface | -23.407 | 0.733 | Resin | 1.55 | 55.95 |
| S6 | | Aspheric surface | -6.196 | 0.050 | | | |
| S7 | L4 | Aspheric surface | -155.171 | 0.428 | Resin | 1.68 | 19.23 |
| S8 | | Aspheric surface | 20.303 | 0.866 | | | |
| S9 | L5 | Aspheric surface | -3.701 | 0.843 | Resin | 1.57 | 37.52 |
| S10 | | Aspheric surface | -6.711 | 0.040 | | | |
| S11 | L6 | Aspheric surface | 4.919 | 0.750 | Resin | 1.54 | 55.70 |
| S12 | | Aspheric surface | -43.985 | 2.883 | | | |
| S13 | L7 | Aspheric surface | 7.075 | 0.782 | Resin | 1.54 | 55.70 |
| S14 | | Aspheric surface | 3.106 | 0.449 | | | |
| S15 | Infrared filter | Planar surface | Unlimited | 0.300 | Glass | 1.52 | 64.20 |
| S16 | | Planar surface | Unlimited | 0.873 | | | |
| S17 | Imaging plane | Planar surface | Unlimited | 0.030 | | | |

Table 6 shows aspheric coefficients of the optical lens 10 in this implementation. A quantity of aspheric surfaces in the optical lens 10 in this embodiment is 14. Details are shown in Table 6.

**Table 6 Aspheric coefficients of the optical lens 10 in the second implementation**

| Surface number | K | A4 | A6 | A8 | A10 |
|---|---|---|---|---|---|
| S1 | -7.53E-01 | 1.12E-03 | -1.36E-04 | 8.90E-05 | -4.50E-05 |
| S2 | 1.09E+00 | 1.07E-03 | -2.60E-05 | -2.61E-04 | 1.59E-04 |
| S3 | 1.01E+01 | -4.17E-03 | -6.06E-04 | 3.86E-04 | -2.00E-05 |
| S4 | 2.85E+00 | -7.90E-03 | 4.43E-04 | -4.00E-04 | 4.85E-04 |
| S5 | 0.00E+00 | -1.37E-03 | -1.52E-03 | 8.54E-04 | -7.38E-04 |
| S6 | -2.43E+00 | 1.05E-02 | -1.78E-02 | 1.24E-02 | -5.92E-03 |
| S7 | 0.00E+00 | -2.98E-03 | -1.22E-02 | 7.10E-03 | -2.26E-03 |
| S8 | 0.00E+00 | -7.84E-03 | -4.55E-03 | 3.37E-03 | -1.37E-03 |
| S9 | -1.26E-01 | 2.32E-02 | -7.55E-03 | 1.67E-03 | 5.90E-05 |
| S10 | 3.51E-01 | -4.76E-03 | -4.63E-03 | 2.44E-03 | -5.65E-04 |
| S11 | -6.90E-01 | -1.95E-02 | 1.48E-03 | -5.71E-04 | 2.49E-04 |
| S12 | 0.00E+00 | 4.39E-03 | -2.03E-03 | -1.45E-04 | 1.48E-04 |
| S13 | 1.71E-01 | -2.58E-02 | 2.38E-03 | -1.78E-04 | 1.20E-05 |
| S14 | -4.89E+00 | -1.19E-02 | 1.18E-03 | -8.50E-05 | 4.00E-06 |
| Surface number | A12 | A14 | A16 | A18 | A20 |
| S1 | 1.60E-05 | -4.00E-06 | 1.00E-06 | 0.00E+00 | 0.00E+00 |
| S2 | -5.50E-05 | 1.20E-05 | -2.00E-06 | 0.00E+00 | 0.00E+00 |
| S3 | -4.20E-05 | 1.90E-05 | -4.00E-06 | 0.00E+00 | 0.00E+00 |
| S4 | -2.80E-04 | 9.30E-05 | -1.70E-05 | 2.00E-06 | 0.00E+00 |
| S5 | 3.82E-04 | -1.19E-04 | 2.20E-05 | -2.00E-06 | 0.00E+00 |
| S6 | 1.84E-03 | -3.68E-04 | 4.70E-05 | -3.00E-06 | 0.00E+00 |
| S7 | 3.04E-04 | 2.80E-05 | -1.50E-05 | 2.00E-06 | 0.00E+00 |
| S8 | 3.47E-04 | -5.60E-05 | 6.00E-06 | 0.00E+00 | 0.00E+00 |
| S9 | -1.34E-04 | 3.40E-05 | -4.00E-06 | 0.00E+00 | 0.00E+00 |
| S10 | 6.90E-05 | -4.00E-06 | 0.00E+00 | 0.00E+00 | 0.00E+00 |
| S11 | -6.30E-05 | 9.00E-06 | -1.00E-06 | 0.00E+00 | 0.00E+00 |
| S12 | -3.20E-05 | 3.00E-06 | 0.00E+00 | 0.00E+00 | 0.00E+00 |
| S13 | -1.00E-06 | 0.00E+00 | 0.00E+00 | 0.00E+00 | 0.00E+00 |
| S14 | 0.00E+00 | 0.00E+00 | 0.00E+00 | 0.00E+00 | 0.00E+00 |

The foregoing parameters are substituted into the following formula:

$$z = \frac{cr^2}{1 + \sqrt{1 - (1+k)c^2 r^2}} + \sum_{i=1}^{N} \alpha_i \rho^{2i}$$

In this way, the lenses of the optical lens 10 in this implementation can be designed, where z is a relative distance from a point that is on an aspheric surface and whose distance from the optical axis is r to a tangent plane corresponding to an intersection point between the aspheric surface and the optical axis, r is a vertical distance between a point on an aspheric curve and the optical axis, c is a curvature, k is a conic coefficient, and $a_i$ is an $i$th-order aspheric coefficient.

In this implementation, different lenses of the optical lens 10 that are designed based on the foregoing parameters can perform different functions, so that the optical lens 10 with good imaging quality is obtained through cooperation between the lenses.

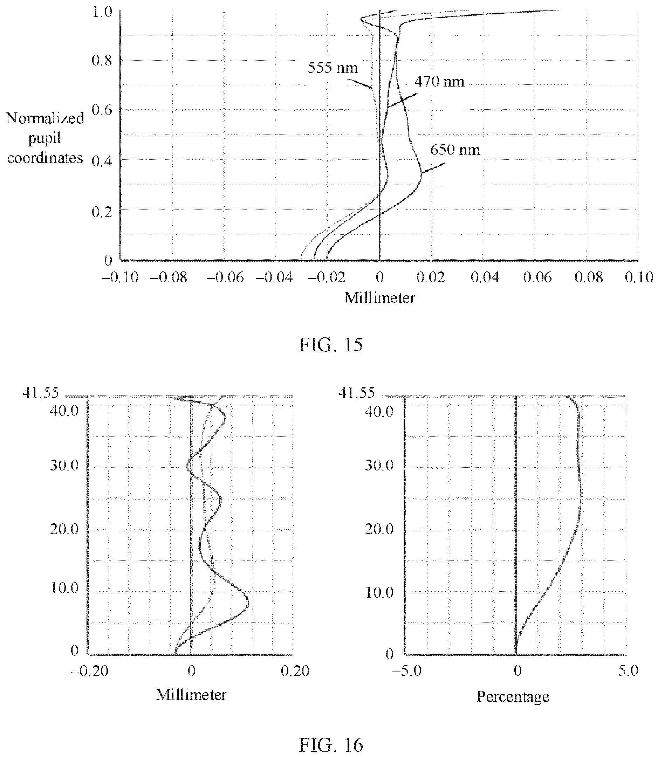

FIG. 15 and FIG. 16 are diagrams representing optical performance of the optical lens 10 in the second implementation.

Specifically, FIG. 15 shows axial chromatic aberration of light with wavelengths of 650 nm, 555 nm, and 470 nm for the optical lens 10 after the light passes through the optical lens 10 in the second implementation. In FIG. 15, vertical coordinates represent normalized pupil coordinates, and horizontal coordinates represent axial chromatic aberration measured in millimeters. It can be learned from FIG. 15 that, in this implementation, axial chromatic aberration of the optical lens 10 in each state is controlled within a quite small range.

In FIG. 16, a diagram on the left is a schematic diagram of field curvature of the optical lens 10, and a diagram on the right is a schematic diagram of optical distortion of the optical lens 10. In the diagram on the left, a solid line is a schematic diagram of field curvature in a meridional direction after the 555-nm light passes through the optical lens 10, and a dashed line is a schematic diagram of field curvature in a sagittal direction after the 555-nm light passes through the optical lens 10. The diagram on the right is a schematic diagram of optical distortion of the 555-nm light after the 555-nm light passes through the optical lens 10 in the second implementation. Vertical coordinates in both diagrams indicate object angles. Horizontal coordinates in the diagram on the left represent astigmatism values, measured in millimeters, in the meridional direction (the dashed line) and the sagittal direction (the solid line). The diagram on the right shows optical distortion values that correspond to different fields of view and that are measured in percentages. It can be learned from FIG. 16 that, in this implementation, an optical system controls distortion within a range that cannot be clearly identified by naked eyes.

In the optical lens 10 provided in this implementation, a configuration mode for lenses in lens groups is combined with lenses with specific optical designs, so that the camera module 1 can be miniaturized, the optical lens 10 has good imaging effect, and thinning of the electronic device 100 is implemented.

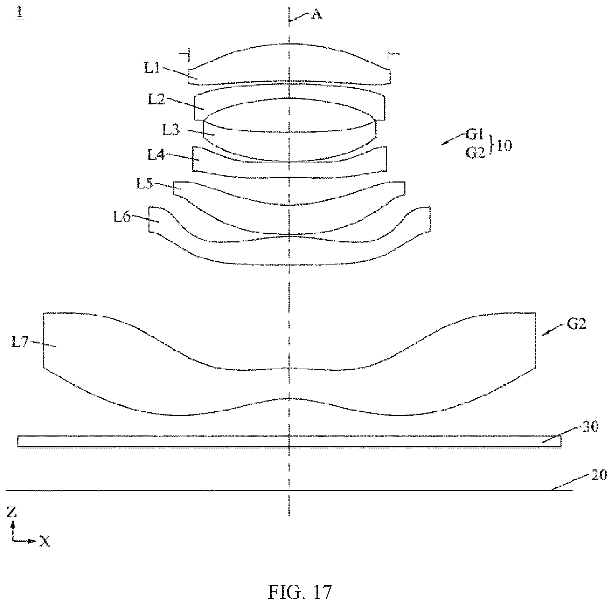

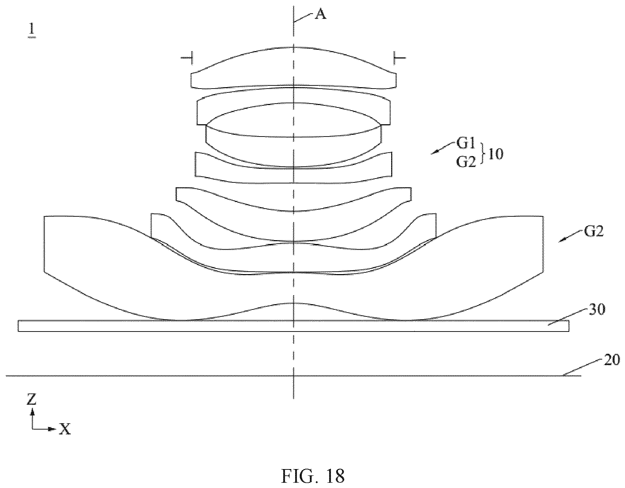

FIG. 17 is a schematic diagram of a structure of a camera module 1 according to a third implementation of this application. FIG. 18 is a schematic diagram of a structure of the camera module shown in FIG. 17 in another state. An optical lens of the camera module shown in FIG. 17 is in an operating state, and the optical lens of the camera module shown in FIG. 18 is in a non-operating state.

In this implementation, the optical lens 10 includes two lens groups: a first lens group G1 and a second lens group G2. The first lens group G1 and the second lens group G2 are sequentially disposed from an object side to an image side. Both the first lens group G1 and the second lens group G2 are capable of moving along an optical axis A of the optical lens 10.

When the optical lens 10 switches from the operating state to the non-operating state, or switches from the non-operating state to the operating state, a distance between the first lens group G1 and the second lens group G2 changes. For example, when the optical lens 10 is in the operating state (used for imaging), the distance (Tv) between the first lens group G1 and the second lens group G2 is maximized, and the first lens group G1 and the second lens group G2 form a first spacing. In this case, a total track length of the optical lens 10 is TTLmax, and the first lens group G1 and the second lens group G2 implement focusing. When the optical lens 10 is in the non-operating state (not used for imaging), a spacing between the first lens group G1 and the second lens group G2 is less than the first spacing, and the distance (Tv) between the first lens group G1 and the second lens group G2 is minimized. In this case, a total track length of the optical lens 10 is TTLmin, and a compact lens structure is implemented. This facilitates miniaturization of the electronic device 100. In some implementations, when the optical lens 10 is in the non-operating state, a distance between the second lens group G2 and the photosensitive element 20 may also be minimized, to effectively implement miniaturization of the electronic device.

In some implementations, when the optical lens 10 is in the non-operating state, the distance (Tv) between the first lens group G1 and the second lens group G2 is greater than or equal to 0.00 mm and less than or equal to 10 mm. The foregoing limit values ensure that, when the optical lens 10 is in the non-operating state, there is no spacing or a quite small spacing between the first lens group G1 and the second lens group G2. This effectively reduces space occupied by the optical lens 10 in the electronic device 100, and helps implement miniaturization of the electronic device 100 and improve user experience.

A ratio (TTLmax/TTLmin) of the total track length of the optical lens 10 in the operating state to the total track length of the optical lens 10 in the non-operating state is 1.41. A ratio (TTLmax/(2 × ImgH)) of the total track length of the optical lens 10 in the operating state to twice a diagonal half-length of an effective pixel area of an imaging plane is 0.72. A ratio (TTLmin/(2 × ImgH)) of the total track length of the optical lens 10 in the non-operating state to twice the diagonal half-length of the effective pixel area of the imaging plane is 0.51. The foregoing limit values ensure that a thickness of the optical lens 10 in the non-operating state is sufficiently small. This effectively reduces space occupied by the optical lens 10 in the electronic device 100, and helps implement miniaturization of the electronic device 100 and improve user experience. In addition, this ensures that the total track length of the optical lens 10 in the operating state is sufficiently large, to achieve good imaging quality.

A ratio ($TTLmax^2/(ImgH \times EPD)$) of a square of the total track length of the optical lens 10 in the operating state to a product of the diagonal half-length of the effective pixel area of the imaging plane and an entrance pupil diameter of a lens group of the optical lens 10 is 2.94. A ratio ($TTLmin^2/(ImgH \times EPD)$) of a square of the total track length of the optical lens 10 in the non-operating state to the product of the diagonal half-length of the effective pixel area of the imaging plane and the entrance pupil diameter of the lens group of the optical lens 10 is 1.47. The foregoing limit values ensure that a thickness of the optical lens 10 on a Z axis is minimized, and an aperture is maximized, to improve imaging quality of the optical lens 10.

When the optical lens 10 is in the operating state, in other words, when the optical lens 10 has a largest total track length, a ratio (EFL/EPD) of a focal length of the optical lens 10 to the entrance pupil diameter of the lens group of the optical lens 10 is 1.54. The foregoing limit value ensures that the optical lens 10 can achieve better imaging effect. A ratio (|Fg2/Fg1|) of a focal length of the second lens group G2 to a focal length of the first lens group G1 is 1.33. The foregoing limit value ensures a focal length of the entire optical lens 10, and ensures optical performance of the optical lens 10, so that the optical lens 10 achieves better imaging effect.

The optical lens 10 includes seven lenses. Specifically, the first lens group G1 includes a first lens L1, a second lens L2, a third lens L3, a fourth lens L4, a fifth lens L5, and a sixth lens L6, and the second lens group G2 includes a seventh lens L7. In this implementation, a refractive index (Nmax) of a lens with a largest refractive index among all lenses of the optical lens 10 is 1.81, and a refractive index (Nmin) of a lens with a smallest refractive index among all the lenses is 1.54. The foregoing limit values ensure that a sufficiently wide range of materials can be used for the lenses. For example, the lenses may be made of a glass material, a resin material, or another material. The lenses are properly made of different materials to facilitate miniaturization of the optical lens 10 and thinning of the electronic device 100. Certainly, in another implementation, a quantity of lenses of the optical lens 10 may alternatively be a quantity other than seven.

The first lens L1 has positive refractive power, and a part, near the optical axis, of an object-side surface of the first lens L1 is a convex surface, to improve a light convergence capability of the optical lens 10 on the object side, and reduce a total length of the optical lens 10. This facilitates miniaturization of the optical lens 10. Apart, near the optical axis, of an image-side surface of the first lens L1 is a concave surface, so that spherical aberration and axial chromatic aberration can be corrected.

The second lens L2 has negative refractive power. A part, near the optical axis, of an object-side surface of the second lens L2 is a convex surface. A part, near the optical axis, of an image-side surface of the second lens L2 is a concave surface. The second lens L2 helps correct aberration of the optical lens 10, to further balance spherical aberration and chromatic aberration caused by the first lens L1.

The third lens L3 has positive refractive power. A part, near the optical axis, of an object-side surface of the third lens L3 is a concave surface. A part, near the optical axis, of an image-side surface of the third lens L3 is a convex surface. The third lens L3 helps correct aberration of the optical lens 10, to further balance spherical aberration and chromatic aberration caused by the first lens L1.

The fourth lens L4 has negative refractive power. A part, near the optical axis, of an object-side surface of the fourth lens L4 is a concave surface. A part, near the optical axis, of an image-side surface of the fourth lens L4 is a concave surface. The fourth lens L4 can balance distribution of negative refractive power of the optical lens 10, reduce sensitivity of the optical lens 10, and reduce coma, to effectively shorten a back focal length and a total length.

The fifth lens L5 has negative refractive power. A part, near the optical axis, of an object-side surface of the fifth lens L5 is a concave surface. A part, near the optical axis, of an image-side surface of the fifth lens L5 is a convex surface. The fifth lens L5 can balance distribution of negative refractive power of the optical lens 10, reduce sensitivity of the optical lens 10, and reduce spherical aberration.

The sixth lens L6 has positive refractive power. A part, near the optical axis, of an object-side surface of the sixth lens L6 is a convex surface. A part, near the optical axis, of an image-side surface of the sixth lens L6 is a convex surface. The sixth lens L6 helps correct distortion, astigmatism, and coma, to effectively shorten a back focal length and a total track length.

The seventh lens L7 has negative refractive power. A part, near the optical axis, of an object-side surface of the seventh lens L7 is a convex surface. A part, near the optical axis, of an image-side surface of the seventh lens L7 is a concave surface. The seventh lens L7 helps move a principal point of the optical lens 10 toward a side of a photographed object, to effectively shorten a back focal length and a total track length, and help correct aberration of an off-axis field of view. In this implementation, an off-axis part of the object-side surface of the first lens L1 includes at least one concave surface, and an off-axis part of the image-side surface of the seventh lens L7 includes at least one convex surface. To be specific, both the object-side surface and the image-side surface of the seventh lens L7 include at least one inflection point, to correct the aberration of the off-axis field of view.

In this implementation, different lenses cooperate with each other, so that the optical lens 10 has good imaging effect, and thinning of the electronic device 100 is implemented.

In this implementation, all surfaces of the lenses of the optical lens 10 are aspheric surfaces. To be specific, the image-side surfaces and the object-side surfaces of the first lens L1, the second lens L2, the third lens L3, the fourth lens L4, the fifth lens L5, the sixth lens L6, and the seventh lens L7 are all aspheric surfaces. The aspheric surfaces have higher configuration flexibility and good aberration elimination effect. This reduces a total length of the optical lens 10 and facilitates miniaturization of the optical lens 10.

A dispersion coefficient (Vmax) of a lens with a largest dispersion coefficient among all the lenses is 55.95, and a dispersion coefficient (Vmin) of a lens with a smallest dispersion coefficient among all the lenses is 19.23. The foregoing limit values ensure a capability of eliminating chromatic aberration by the optical lens 10, and improve imaging quality of the optical lens 10.

A thickness of the first lens L1 on the optical axis is CT1, a thickness of the second lens L2 on the optical axis is CT2, a thickness of the third lens L3 on the optical axis is CT3, a thickness of the fourth lens L4 on the optical axis is CT4, a thickness of the fifth lens L5 on the optical axis is CT5, a thickness of the sixth lens L6 on the optical axis is CT6, and a thickness of the seventh lens L7 on the optical axis is CT7. CTmax is a maximum value of a thickness of a lens of the optical lens 10 on the optical axis, where |CTmax/CT1| = 1.0, |CTmax/CT2| = 2.50, |CTmax/CT3| = 1.27, |CTmax/CT4| = 2.62, |CTmax/CT5| = 1.25, |CTmax/CT6| = 1.31, and |CTmax/CT7| = 1.23.

In this implementation, the thickness of the first lens L1 on the optical axis is a lens with a largest thickness among all the lenses. Therefore, a ratio of the thickness of the first lens L1 to a thickness of another lens on the optical axis is limited. It can be understood that a larger ratio indicates a smaller thickness of the another lens. The foregoing limit values ensure that a thickness of the optical lens 10 on the optical axis is sufficiently small. Certainly, in some other implementations, a lens, in the optical lens 10, that has a largest thickness on the optical axis may alternatively be another lens, and a ratio of the thickness of the lens on the optical axis to a thickness of another lens on the optical axis may be limited.

A focal length of the first lens L1 is f1, a focal length of the second lens L2 is f2, a focal length of the third lens L3 is f3, a focal length of the fourth lens L4 is f4, a focal length of the fifth lens L5 is f5, a focal length of the sixth lens L6 is f6, and a focal length of the seventh lens L7 is f7. When the optical lens 10 has a maximum total track length, in other words, when the optical lens 10 is in the operating state, |f1/f2| = 0.49, |f2/f3| = 1.11, |f3/f4| = 0.63, |f4/f5| = 1.52, |f5/f6| = 1.94, and |f6/f7| = 0.78. It can be understood that the ratio being closer to 1.0 indicates the focal lengths of the lenses being closer to each other. The foregoing limit values ensure that the focal lengths of the lenses are allocated as evenly as possible, and ensure imaging quality of the optical lens 10.

A curvature radius of the object-side surface of the first lens L1 is R1, a curvature radius of the image-side surface of the first lens L1 is R2, a curvature radius of the object-side surface of the second lens L2 is R3, a curvature radius of the image-side surface of the second lens L2 is R4, a curvature radius of the object-side surface of the third lens L3 is R5, a curvature radius of the image-side surface of the third lens L3 is R6, a curvature radius of the object-side surface of the fourth lens L4 is R7, a curvature radius of the image-side surface of the fourth lens L4 is R8, a curvature radius of the object-side surface of the fifth lens L5 is R9, a curvature radius of the image-side surface of the fifth lens L5 is R10, a curvature radius of the object-side surface of the sixth lens L6 is R11, a curvature radius of the image-side surface of the sixth lens L6 is R12, a curvature radius of the object-side surface of the seventh lens L7 is R13, and a curvature radius of the image-side surface of the seventh lens L7 is R14, where |R14/R13| = 0.43, |R12/R11| = 11.8, |R10/R9| = 1.83, |R8/R7| = 0.4, |R6/R5| = 0.24, |R4/R3| = 0.51, and |R2/R1| = 5.09. The foregoing limit values ensure that the optical lens 10 can achieve better imaging effect.

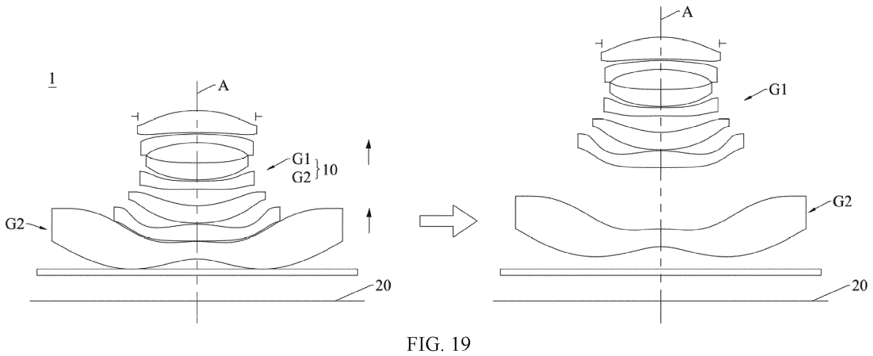

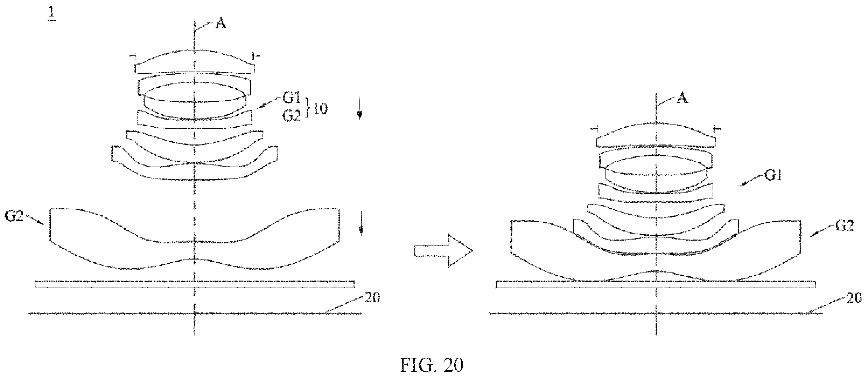

As shown in FIG. 19 and FIG. 20, when the optical lens 10 changes from the non-operating state to the operating state, in other words, when the optical lens 10 changes from a compact state to an expanded state, the first lens group G1 moves toward the object side and extends out of the housing 3 through the through hole and the light transmission hole 31 sequentially, a distance between the first lens group G1 and the second lens group G2 increases to the first spacing, and then the first lens group G1 and the second lens group G2 simultaneously move toward the object side to a target imaging location. When the optical lens 10 is in the operating state, a design spacing (the first spacing) at which imaging can be performed is maintained between the first lens group G1 and the second lens group G2. When focusing is performed at different object distances, a relative distance (the first spacing) between the two lens groups remains unchanged, and the two lens groups simultaneously move forward and backward to optimal locations to focus on the imaging plane (the photosensitive element 20). When the optical lens 10 changes from the operating state to the non-operating state, the first lens group G1 moves toward the second lens group G2 and is close to the second lens group G2, and the second lens group G2 may move toward the photosensitive element 20, so that the camera module 1 is compressed and accommodated in the enclosure. This ensures that the camera module 1 occupies a sufficiently small internal volume of the electronic device 100, and facilitates thinning of the electronic device 100. Certainly, in another embodiment, when the optical lens 10 changes from the compact state to the expanded state, the first lens group G1 and the second lens group G2 may alternatively simultaneously move toward the object side at the beginning. Alternatively, only the first lens group G1 moves toward the object side, and the second lens group G2 may alternatively remain stationary according to a requirement.

Based on the foregoing relational expressions, basic parameters of the optical lens 10 in the operating state in the third implementation of this application are shown in Table 7.

**Table 7 Basic parameters of the optical lens 10 in the operating state in the third implementation**

| Param eter (mm) | TTL | ImgH | EFL | f1 | f2 | f3 | f4 | f5 | f6 | f7 | Fg1 | Fg2 |
|---|---|---|---|---|---|---|---|---|---|---|---|---|
| Value | 11.522 | 8.000 | 8.689 | 8.239 | - 16.838 | 15.210 | - 24.307 | - 16.035 | 8.252 | - 10.613 | 8.00 | -10.61 |

Detailed structural data of compositions of the camera module 1 in the third implementation of this application is shown in Table 8.

**Table 8 Detailed structural data of compositions of the camera module 1**

| Surface number | Description | Surface type | Curvature radius/(mm) | Thickness/ (mm) | Material | Refractive index | Dispersion coefficient |
|---|---|---|---|---|---|---|---|
| OBJ | Photographed object | Planar surface | Unlimited | Unlimited | | | |
| STO | STO | Aspheric surface | Unlimited | -0.28 | | | |
| S1 | L1 | Aspheric surface | 5.475 | 1.046 | Glass | 1.810 | 41.000 |
| S2 | | Aspheric surface | 27.880 | 0.070 | | | |
| S3 | L2 | Aspheric surface | 10.748 | 0.418 | Resin | 1.677 | 19.235 |
| S4 | | Aspheric surface | 5.445 | 0.962 | | | |
| S5 | L3 | Aspheric surface | -27.009 | 0.824 | Resin | 1.546 | 55.953 |
| S6 | | Aspheric surface | -6.421 | 0.050 | | | |
| S7 | L4 | Aspheric surface | -57.555 | 0.400 | Resin | 1.677 | 19.235 |
| S8 | | Aspheric surface | 23.106 | 0.785 | | | |
| S9 | L5 | Aspheric surface | -3.729 | 0.840 | Resin | 1.569 | 37.518 |
| S10 | | Aspheric surface | -6.821 | 0.053 | | | |
| S11 | L6 | Aspheric surface | 4.781 | 0.800 | Resin | 1.537 | 55.704 |
| S12 | | Aspheric surface | -56.409 | 2.944 | | | |
| S13 | L7 | Aspheric surface | 7.139 | 0.849 | Resin | 1.537 | 55.704 |
| S14 | | Aspheric surface | 3.036 | 0.481 | | | |
| S15 | Infrared filter | Planar surface | Unlimited | 0.300 | Glass | 1.518 | 64.197 |
| S16 | | Planar surface | Unlimited | 0.670 | | | |
| S17 | Imaging plane | Planar surface | Unlimited | 0.03 | | | |

Table 9 shows aspheric coefficients of the optical lens 10 in this implementation. A quantity of aspheric surfaces in the optical lens 10 in this embodiment is 14. Details are shown in Table 9.

**Table 9 Aspheric coefficients of the optical lens 10 in the third implementation**

| Surface number | K | A4 | A6 | A8 | A10 |
|---|---|---|---|---|---|
| S1 | -7.61E-01 | 7.24E-04 | 1.99E-04 | -1.39E-04 | 6.04E-05 |
| S2 | 2.21E+01 | -3.20E-04 | 1.56E-03 | -1.23E-03 | 5.75E-04 |
| S3 | 9.79E+00 | -6.50E-03 | 2.83E-03 | -1.75E-03 | 8.07E-04 |
| S4 | 3.30E+00 | -8.42E-03 | 6.10E-04 | -1.46E-04 | 7.52E-05 |
| S5 | 0.00E+00 | -2.05E-03 | -1.45E-03 | 6.96E-04 | -4.18E-04 |
| S6 | -2.39E+00 | 1.14E-02 | -2.36E-02 | 1.92E-02 | -9.68E-03 |
| S7 | 0.00E+00 | 3.01E-04 | -2.12E-02 | 1.63E-02 | -7.15E-03 |
| S8 | 0.00E+00 | -5.54E-03 | -8.04E-03 | 5.71E-03 | -2.24E-03 |
| S9 | -1.17E-01 | 2.79E-02 | -1.21E-02 | 3.98E-03 | -7.76E-04 |
| S10 | 4.62E-01 | -5.90E-03 | -8.02E-04 | -2.32E-04 | 3.76E-04 |
| S11 | -7.04E-01 | -2.57E-02 | 7.24E-03 | -3.03E-03 | 8.85E-04 |
| S12 | 0.00E+00 | -7.42E-04 | 7.39E-04 | -8.23E-04 | 2.38E-04 |
| S13 | 1.86E-01 | -2.71E-02 | 3.07E-03 | -2.97E-04 | 2.23E-05 |
| S14 | -5.50E+00 | -1.10E-02 | 1.21E-03 | -9.30E-05 | 4.71E-06 |
| Surface number | A12 | A14 | A16 | A18 | A20 |
| S1 | -1.56E-05 | 2.31E-06 | -1.92E-07 | 7.00E-09 | -4.58E-11 |
| S2 | -1.74E-04 | 3.30E-05 | -3.75E-06 | 2.33E-07 | -6.06E-09 |
| S3 | -2.45E-04 | 4.69E-05 | -5.30E-06 | 3.18E-07 | -7.73E-09 |
| S4 | -5.69E-05 | 2.59E-05 | -6.20E-06 | 7.74E-07 | -3.96E-08 |
| S5 | 1.61E-04 | -4.15E-05 | 7.04E-06 | -6.77E-07 | 2.65E-08 |
| S6 | 3.05E-03 | -6.08E-04 | 7.55E-05 | -5.37E-06 | 1.67E-07 |
| S7 | 1.88E-03 | -2.98E-04 | 2.74E-05 | -1.32E-06 | 2.49E-08 |
| S8 | 5.45E-04 | -8.47E-05 | 8.35E-06 | -4.82E-07 | 1.25E-08 |
| S9 | 8.01E-05 | -1.98E-06 | -4.06E-07 | 3.99E-08 | -1.15E-09 |
| S10 | -1.31E-04 | 2.34E-05 | -2.37E-06 | 1.29E-07 | -2.95E-09 |
| S11 | -1.70E-04 | 2.07E-05 | -1.54E-06 | 6.44E-08 | -1.14E-09 |
| S12 | -3.80E-05 | 3.58E-06 | -1.95E-07 | 5.65E-09 | -6.73E-11 |
| S13 | -1.12E-06 | 3.63E-08 | -7.20E-10 | 8.03E-12 | -3.86E-14 |
| S14 | -1.58E-07 | 3.54E-09 | -5.16E-11 | 4.45E-13 | -1.73E-15 |

The foregoing parameters are substituted into the following formula:

$$z = \frac{cr^2}{1 + \sqrt{1 - (1+k)c^2 r^2}} + \sum_{i=1}^{N} \alpha_i \rho^{2i}$$

In this way, the lenses of the optical lens 10 in this implementation can be designed, where z is a relative distance from a point that is on an aspheric surface and whose distance from the optical axis is r to a tangent plane corresponding to an intersection point between the aspheric surface and the optical axis, r is a vertical distance between a point on an aspheric curve and the optical axis, c is a curvature, k is a conic coefficient, and $a_i$ is an $i$th-order aspheric coefficient.

In this implementation, different lenses of the optical lens 10 that are designed based on the foregoing parameters can perform different functions, so that the optical lens 10 with good imaging quality is obtained through cooperation between the lenses.

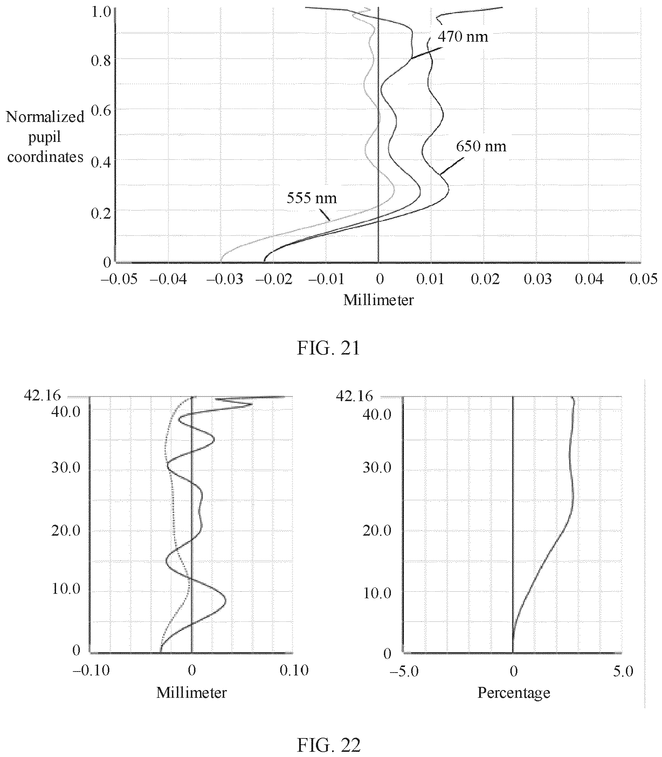

FIG. 21 and FIG. 22 are diagrams representing optical performance of the optical lens 10 in the third implementation.

Specifically, FIG. 21 shows axial chromatic aberration of light with wavelengths of 650 nm, 555 nm, and 470 nm for the optical lens 10 after the light passes through the optical lens 10 in the third implementation. In FIG. 21, vertical coordinates represent normalized pupil coordinates, and horizontal coordinates represent axial chromatic aberration measured in millimeters. It can be learned from FIG. 21 that, in this implementation, axial chromatic aberration of the optical lens 10 in each state is controlled within a quite small range.

In FIG. 22, a diagram on the left is a schematic diagram of field curvature of the optical lens 10, and a diagram on the right is a schematic diagram of optical distortion of the optical lens 10. In the diagram on the left, a solid line is a schematic diagram of field curvature in a meridional direction after the 555-nm light passes through the optical lens 10, and a dashed line is a schematic diagram of field curvature in a sagittal direction after the 555-nm light passes through the optical lens 10. The diagram on the right is a schematic diagram of optical distortion of the 555-nm light after the 555-nm light passes through the optical lens 10 in the third implementation. Vertical coordinates in both diagrams indicate object angles. Horizontal coordinates in the diagram on the left represent astigmatism values, measured in millimeters, in the meridional direction (the dashed line) and the sagittal direction (the solid line). The diagram on the right shows optical distortion values that correspond to different fields of view and that are measured in percentages. It can be learned from FIG. 22 that, in this implementation, an optical system controls distortion within a range that cannot be clearly identified by naked eyes.

In the optical lens 10 provided in this implementation, a configuration mode for lenses in lens groups is combined with lenses with specific optical designs, so that the camera module 1 can be miniaturized, the optical lens 10 has good imaging effect, and thinning of the electronic device 100 is implemented.

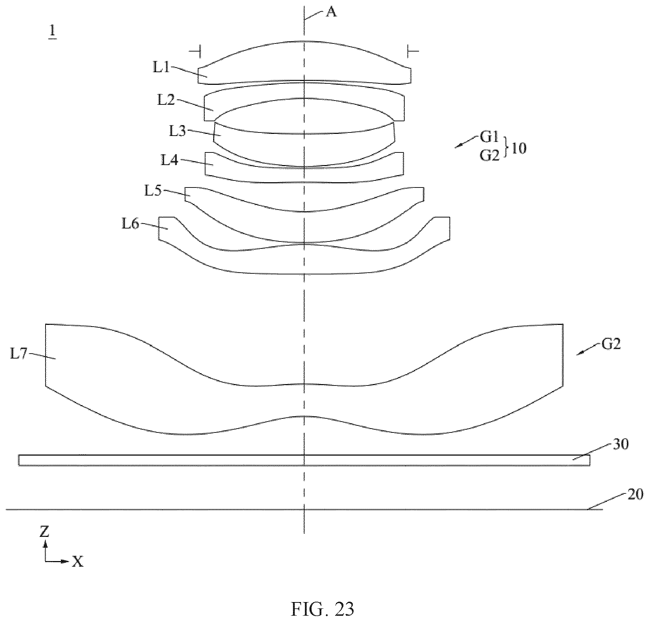

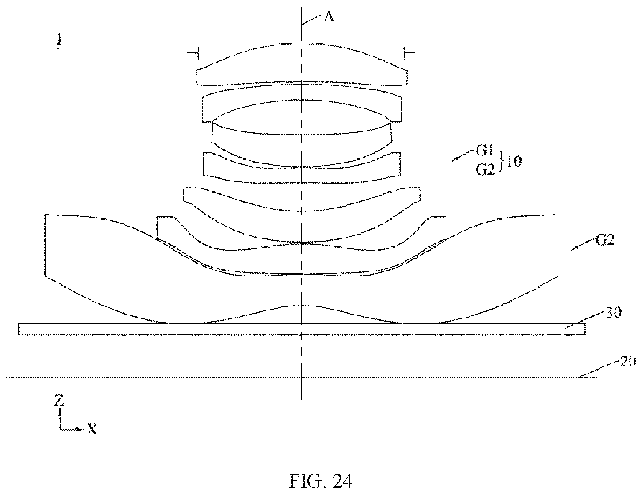

FIG. 23 is a schematic diagram of a structure of a camera module 1 according to a fourth implementation of this application. FIG. 24 is a schematic diagram of a structure of the camera module shown in FIG. 23 in another state. An optical lens of the camera module shown in FIG. 23 is in an operating state, and the optical lens of the camera module shown in FIG. 24 is in a non-operating state.

In this implementation, the optical lens 10 includes two lens groups: a first lens group G1 and a second lens group G2. The first lens group G1 and the second lens group G2 are sequentially disposed from an object side to an image side. Both the first lens group G1 and the second lens group G2 are capable of moving along an optical axis A of the optical lens 10.

When the optical lens 10 switches from the operating state to the non-operating state, or switches from the non-operating state to the operating state, a distance between the first lens group G1 and the second lens group G2 changes. For example, when the optical lens 10 is in the operating state (used for imaging), the distance (Tv) between the first lens group G1 and the second lens group G2 is maximized, and the first lens group G1 and the second lens group G2 form a first spacing. In this case, a total track length of the optical lens 10 is TTLmax, and the first lens group G1 and the second lens group G2 implement focusing. When the optical lens 10 is in the non-operating state (not used for imaging), a spacing between the first lens group G1 and the second lens group G2 is less than the first spacing, and the distance (Tv) between the first lens group G1 and the second lens group G2 is minimized. In this case, a total track length of the optical lens 10 is TTLmin, and a compact lens structure is implemented. This facilitates miniaturization of the electronic device 100. In some implementations, when the optical lens 10 is in the non-operating state, a distance between the second lens group G2 and the photosensitive element 20 may also be minimized, to effectively implement miniaturization of the electronic device.

In some implementations, when the optical lens 10 is in the non-operating state, the distance (Tv) between the first lens group G1 and the second lens group G2 is greater than or equal to 0.00 mm and less than or equal to 10 mm. The foregoing limit values ensure that, when the optical lens 10 is in the non-operating state, there is no spacing or a quite small spacing between the first lens group G1 and the second lens group G2. This effectively reduces space occupied by the optical lens 10 in the electronic device 100, and helps implement miniaturization of the electronic device 100 and improve user experience.

A ratio (TTLmax/TTLmin) of the total track length of the optical lens 10 in the operating state to the total track length of the optical lens 10 in the non-operating state is 1.41. A ratio (TTLmax/(2 × ImgH)) of the total track length of the optical lens 10 in the operating state to twice a diagonal half-length of an effective pixel area of an imaging plane is 0.72. A ratio (TTLmin/(2 × ImgH)) of the total track length of the optical lens 10 in the non-operating state to twice the diagonal half-length of the effective pixel area of the imaging plane is 0.51. The foregoing limit values ensure that a thickness of the optical lens 10 in the non-operating state is sufficiently small. This effectively reduces space occupied by the optical lens 10 in the electronic device 100, and helps implement miniaturization of the electronic device 100 and improve user experience. In addition, this ensures that the total track length of the optical lens 10 in the operating state is sufficiently large, to achieve good imaging quality.

A ratio (TTLmax$^2$/(ImgH × EPD)) of a square of the total track length of the optical lens 10 in the operating state to a product of the diagonal half-length of the effective pixel area of the imaging plane and an entrance pupil diameter of a lens group of the optical lens 10 is 2.96. A ratio (TTLmin$^2$/(ImgH × EPD)) of a square of the total track length of the optical lens 10 in the non-operating state to the product of the diagonal half-length of the effective pixel area of the imaging plane and the entrance pupil diameter of the lens group of the optical lens 10 is 1.49. The foregoing limit values ensure that a thickness of the optical lens 10 on a Z axis is minimized, and an aperture is maximized, to improve imaging quality of the optical lens 10.

When the optical lens 10 is in the operating state, in other words, when the optical lens 10 has a largest total track length, a ratio (EFL/EPD) of a focal length of the optical lens 10 to the entrance pupil diameter of the lens group of the optical lens 10 is 1.54. The foregoing limit value ensures that the optical lens 10 can achieve better imaging effect. A ratio (|Fg2/Fg1|) of a focal length of the second lens group G2 to a focal length of the first lens group G1 is 1.32. The foregoing limit value ensures a focal length of the entire optical lens 10, and ensures optical performance of the optical lens 10, so that the optical lens 10 achieves better imaging effect.

The optical lens 10 includes seven lenses. Specifically, the first lens group G1 includes a first lens L1, a second lens L2, a third lens L3, a fourth lens L4, a fifth lens L5, and a sixth lens L6, and the second lens group G2 includes a seventh lens L7. In this implementation, a refractive index (Nmax) of a lens with a largest refractive index among all lenses of the optical lens 10 is 1.81, and a refractive index (Nmin) of a lens with a smallest refractive index among all the lenses is 1.54. The foregoing limit values ensure that a sufficiently wide range of materials can be used for the lenses. For example, the lenses may be made of a glass material, a resin material, or another material. The lenses are properly made of different materials to facilitate miniaturization of the optical lens 10 and thinning of the electronic device 100. Certainly, in another implementation, a quantity of lenses of the optical lens 10 may alternatively be a quantity other than seven.

The first lens L1 has positive refractive power, and a part, near the optical axis, of an object-side surface of the first lens L1 is a convex surface, to improve a light convergence capability of the optical lens 10 on the object side, and reduce a total length of the optical lens 10. This facilitates miniaturization of the optical lens 10. Apart, near the optical axis, of an image-side surface of the first lens L1 is a concave surface, so that spherical aberration and axial chromatic aberration can be corrected.

The second lens L2 has negative refractive power. A part, near the optical axis, of an object-side surface of the second lens L2 is a convex surface. A part, near the optical axis, of an image-side surface of the second lens L2 is a concave surface. The second lens L2 helps correct aberration of the optical lens 10, to further balance spherical aberration and chromatic aberration caused by the first lens L1.

The third lens L3 has positive refractive power. A part, near the optical axis, of an object-side surface of the third lens L3 is a concave surface. A part, near the optical axis, of an image-side surface of the third lens L3 is a convex surface. The third lens L3 helps correct aberration of the optical lens 10, to further balance spherical aberration and chromatic aberration caused by the first lens L1.

The fourth lens L4 has negative refractive power. A part, near the optical axis, of an object-side surface of the fourth lens L4 is a concave surface. A part, near the optical axis, of an image-side surface of the fourth lens L4 is a concave surface. The fourth lens L4 can balance distribution of negative refractive power of the optical lens 10, reduce sensitivity of the optical lens 10, and reduce coma, to effectively shorten a back focal length and a total length.

The fifth lens L5 has negative refractive power. A part, near the optical axis, of an object-side surface of the fifth lens L5 is a concave surface. A part, near the optical axis, of an image-side surface of the fifth lens L5 is a convex surface. The fifth lens L5 can balance distribution of negative refractive power of the optical lens 10, reduce sensitivity of the optical lens 10, and reduce spherical aberration.

The sixth lens L6 has positive refractive power. A part, near the optical axis, of an object-side surface of the sixth lens L6 is a convex surface. A part, near the optical axis, of an image-side surface of the sixth lens L6 is a convex surface. The sixth lens L6 helps correct distortion, astigmatism, and coma, to effectively shorten a back focal length and a total track length.

The seventh lens L7 has negative refractive power. A part, near the optical axis, of an object-side surface of the seventh lens L7 is a convex surface. A part, near the optical axis, of an image-side surface of the seventh lens L7 is a concave surface. The seventh lens L7 helps move a principal point of the optical lens 10 toward a side of a photographed object, to effectively shorten a back focal length and a total track length, and help correct aberration of an off-axis field of view. In this implementation, an off-axis part of the object-side surface of the first lens L1 includes at least one concave surface, and an off-axis part of the image-side surface of the seventh lens L7 includes at least one convex surface. To be specific, both the object-side surface and the image-side surface of the seventh lens L7 include at least one inflection point, to correct the aberration of the off-axis field of view.

In this implementation, different lenses cooperate with each other, so that the optical lens 10 has good imaging effect, and thinning of the electronic device 100 is implemented.

In this implementation, all surfaces of the lenses of the optical lens 10 are aspheric surfaces. To be specific, the image-side surfaces and the object-side surfaces of the first lens L1, the second lens L2, the third lens L3, the fourth lens L4, the fifth lens L5, the sixth lens L6, and the seventh lens L7 are all aspheric surfaces. The aspheric surfaces have higher configuration flexibility and good aberration elimination effect. This reduces a total length of the optical lens 10 and facilitates miniaturization of the optical lens 10.

A dispersion coefficient (Vmax) of a lens with a largest dispersion coefficient among all the lenses is 55.95, and a dispersion coefficient (Vmin) of a lens with a smallest dispersion coefficient among all the lenses is 19.23. The foregoing limit values ensure a capability of eliminating chromatic aberration by the optical lens 10, and improve imaging quality of the optical lens 10.

A thickness of the first lens L1 on the optical axis is CT1, a thickness of the second lens L2 on the optical axis is CT2, a thickness of the third lens L3 on the optical axis is CT3, a thickness of the fourth lens L4 on the optical axis is CT4, a thickness of the fifth lens L5 on the optical axis is CT5, a thickness of the sixth lens L6 on the optical axis is CT6, and a thickness of the seventh lens L7 on the optical axis is CT7. CTmax is a maximum value of a thickness of a lens of the optical lens 10 on the optical axis, where $|CTmax/CT1| = 1.0$, $|CTmax/CT2| = 2.49$, $|CTmax/CT3| = 1.20$, $|CTmax/CT4| = 2.75$, $|CTmax/CT5| = 1.25$, $|CTmax/CT6| = 1.30$, and $|CTmax/CT7| = 1.21$.

In this implementation, the thickness of the first lens L1 on the optical axis is a lens with a largest thickness among all the lenses. Therefore, a ratio of the thickness of the first lens L1 to a thickness of another lens on the optical axis is limited. It can be understood that a larger ratio indicates a smaller thickness of the another lens. The foregoing limit values ensure that a thickness of the optical lens 10 on the optical axis is sufficiently small. Certainly, in some other implementations, a lens, in the optical lens 10, that has a largest thickness on the optical axis may alternatively be another lens, and a ratio of the thickness of the lens on the optical axis to a thickness of another lens on the optical axis may be limited.

A focal length of the first lens L1 is f1, a focal length of the second lens L2 is f2, a focal length of the third lens L3 is f3, a focal length of the fourth lens L4 is f4, a focal length of the fifth lens L5 is f5, a focal length of the sixth lens L6 is f6, and a focal length of the seventh lens L7 is f7. When the optical lens 10 has a maximum total track length, in other words, when the optical lens 10 is in the operating state, $|f1/f2| = 0.49$, $|f2/f3| = 1.11$, $|f3/f4| = 0.62$, $|f4/f5| = 1.53$, $|f5/f6| = 1.93$, and $|f6/f7| = 0.78$. It can be understood that the ratio being closer to 1.0 indicates the focal lengths of the lenses being closer to each other. The foregoing limit values ensure that the focal lengths of the lenses are allocated as evenly as possible, and ensure imaging quality of the optical lens 10.

A curvature radius of the object-side surface of the first lens L1 is R1, a curvature radius of the image-side surface of the first lens L1 is R2, a curvature radius of the object-side surface of the second lens L2 is R3, a curvature radius of the image-side surface of the second lens L2 is R4, a curvature radius of the object-side surface of the third lens L3 is R5, a curvature radius of the image-side surface of the third lens L3 is R6, a curvature radius of the object-side surface of the fourth lens L4 is R7, a curvature radius of the image-side surface of the fourth lens L4 is R8, a curvature radius of the object-side surface of the fifth lens L5 is R9, a curvature radius of the image-side surface of the fifth lens L5 is R10, a curvature radius of the object-side surface of the sixth lens L6 is R11, a curvature radius of the image-side surface of the sixth lens L6 is R12, a curvature radius of the object-side surface of the seventh lens L7 is R13, and a curvature radius of the image-side surface of the seventh lens L7 is R14, where $|R14/R13| = 0.42$, $|R12/R11| = 11.81$, $|R10/R9| = 1.84$, $|R8/R7| = 0.48$, $|R6/R5| = 0.24$, $|R4/R3| = 0.50$, and $|R2/R1| = 5.17$. The foregoing limit values ensure that the optical lens 10 can achieve better imaging effect.

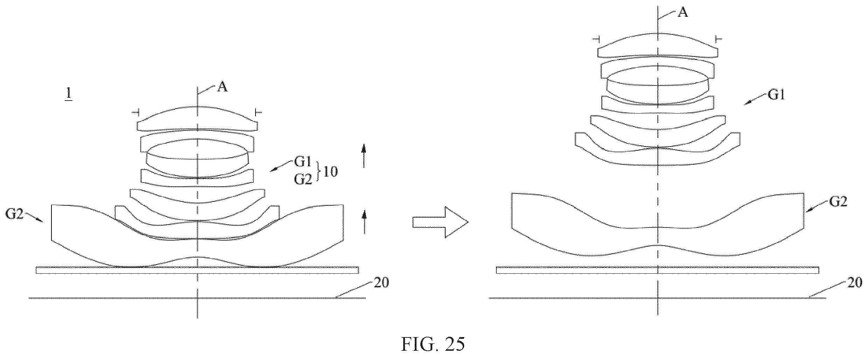

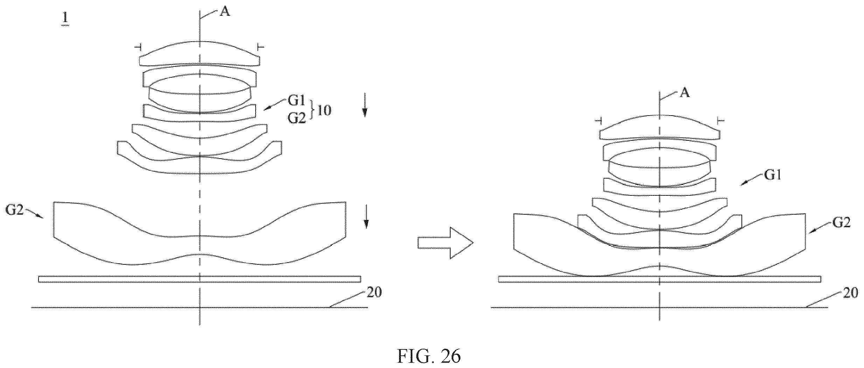

As shown in FIG. 25 and FIG. 26, when the optical lens 10 changes from the non-operating state to the operating state, in other words, when the optical lens 10 changes from a compact state to an expanded state, the first lens group G1 moves toward the object side and extends out of the housing 3 through the through hole and the light transmission hole 31 sequentially, a distance between the first lens group G1 and the second lens group G2 increases to the first spacing, and then the first lens group G1 and the second lens group G2 simultaneously move toward the object side to a target imaging location. When the optical lens 10 is in the operating state, a design spacing (the first spacing) at which imaging can be performed is maintained between the first lens group G1 and the second lens group G2. When focusing is performed at different object distances, a relative distance (the first spacing) between the two lens groups remains unchanged, and the two lens groups simultaneously move forward and backward to optimal locations to focus on the imaging plane (the photosensitive element 20). When the optical lens 10 changes from the operating state to the non-operating state, the first lens group G1 moves toward the second lens group G2 and is close to the second lens group G2, and the second lens group G2 may move toward the photosensitive element 20, so that the camera module 1 is compressed and accommodated in the enclosure. This ensures that the camera module 1 occupies a sufficiently small internal volume of the electronic device 100, and facilitates thinning of the electronic device 100. Certainly, in another embodiment, when the optical lens 10 changes from the compact state to the expanded state, the first lens group G1 and the second lens group G2 may alternatively simultaneously move toward the object side at the beginning. Alternatively, only the first lens group G1 moves toward the object side, and the second lens group G2 may alternatively remain stationary according to a requirement.

Based on the foregoing relational expressions, basic parameters of the optical lens 10 in the operating state in the fourth implementation of this application are shown in Table 10.

**Table 10 Basic parameters of the optical lens 10 in the operating state in the fourth implementation**

| Parameter (mm) | TTL | ImgH | EFL | f1 | f2 | f3 | f4 | f5 | f6 | f7 | Fg1 | Fg2 |
|---|---|---|---|---|---|---|---|---|---|---|---|---|
| Value | 12.131 | 8.400 | 9.122 | 8.638 | - 17.587 | 15.882 | 25.530 | - 16.731 | 8.660 | - 11.070 | 8.42 | -11.07 |

Detailed structural data of compositions of the camera module 1 in the fourth implementation of this application is shown in Table 11.

Table 11 Detailed structural data of compositions of the camera module 1

| Surface number | Description | Surface type | Curvature radius/(mm) | Thickness/ (mm) | Material | Refractive index | Dispersion coefficient |
|---|---|---|---|---|---|---|---|
| OBJ | Photographed object | Planar surface | Unlimited | Unlimited | | | |
| STO | STO | Aspheric surface | Unlimited | -0.28 | | | |
| S1 | L1 | Aspheric surface | 5.760 | 1.099 | Glass | 1.810 | 41.000 |
| S2 | | Aspheric surface | 29.797 | 0.070 | | | |
| S3 | L2 | Aspheric surface | 11.356 | 0.442 | Resin | 1.677 | 19.235 |
| S4 | | Aspheric surface | 5.721 | 1.007 | | | |
| S5 | L3 | Aspheric surface | -28.003 | 0.917 | Resin | 1.546 | 55.953 |
| S6 | | Aspheric surface | -6.699 | 0.050 | | | |
| S7 | L4 | Aspheric surface | -53.328 | 0.400 | Resin | 1.677 | 19.235 |
| S8 | | Aspheric surface | 25.647 | 0.829 | | | |
| S9 | L5 | Aspheric surface | -3.913 | 0.877 | Resin | 1.569 | 37.518 |
| S10 | | Aspheric surface | -7.182 | 0.054 | | | |
| S11 | L6 | Aspheric surface | 5.017 | 0.845 | Resin | 1.537 | 55.704 |
| S12 | | Aspheric surface | -59.252 | 3.102 | | | |
| S13 | L7 | Aspheric surface | 7.496 | 0.910 | Resin | 1.537 | 55.704 |
| S14 | | Aspheric surface | 3.173 | 0.516 | | | |
| S15 | Infrared filter | Planar surface | Unlimited | 0.300 | Glass | 1.518 | 64.197 |
| S16 | | Planar surface | Unlimited | 0.684 | | | |
| S17 | Imaging plane | Planar surface | Unlimited | 0.03 | | | |

Table 12 shows aspheric coefficients of the optical lens 10 in this implementation. A quantity of aspheric surfaces in the optical lens 10 in this embodiment is 14. Details are shown in Table 12.

**Table 12 Aspheric coefficients of the optical lens 10 in the fourth implementation**

| Surface number | K | A4 | A6 | A8 | A10 |
|---|---|---|---|---|---|
| S1 | -6.97E-01 | 5.48E-04 | 3.03E-04 | -2.05E-04 | 8.62E-05 |
| S2 | 3.63E+01 | -4.12E-05 | 1.10E-03 | -8.30E-04 | 3.67E-04 |
| S3 | 9.81E+00 | -5.48E-03 | 2.07E-03 | -1.18E-03 | 5.03E-04 |
| S4 | 3.45E+00 | -7.59E-03 | 6.26E-04 | -3.13E-04 | 2.06E-04 |
| S5 | 0.00E+00 | -1.92E-03 | -1.45E-03 | 8.27E-04 | -4.60E-04 |
| S6 | -2.25E+00 | 9.61E-03 | -1.89E-02 | 1.41E-02 | -6.44E-03 |
| S7 | 0.00E+00 | 1.09E-03 | -1.83E-02 | 1.30E-02 | -5.27E-03 |
| S8 | 0.00E+00 | -4.15E-03 | -7.25E-03 | 4.70E-03 | -1.69E-03 |
| S9 | -1.15E-01 | 2.46E-02 | -9.74E-03 | 2.88E-03 | -5.13E-04 |
| S10 | 4.71E-01 | -4. 97E-03 | -3.11E-04 | -4.00E-04 | 3.15E-04 |
| S11 | -7.02E-01 | -2.31E-02 | 6.41E-03 | -2.45E-03 | 6.40E-04 |
| S12 | 0.00E+00 | -1.44E-03 | 9.76E-04 | -6. 86E-04 | 1.69E-04 |
| S13 | 1.86E-01 | -2. 34E-02 | 2.39E-03 | -2.09E-04 | 1.41E-05 |
| S14 | -5.44E+00 | -9.48E-03 | 9.44E-04 | -6.55E-05 | 3.00E-06 |
| Surface number | A12 | A14 | A16 | A18 | A20 |
| S1 | -2.21E-05 | 3.46E-06 | -3.28E-07 | 1.69E-08 | -3.66E-10 |
| S2 | -1.04E-04 | 1.81E-05 | -1.88E-06 | 1.07E-07 | -2.54E-09 |
| S3 | -1.40E-04 | 2.45E-05 | -2.49E-06 | 1.34E-07 | -2.87E-09 |
| S4 | -1.03E-04 | 3.27E-05 | -6.08E-06 | 6.19E-07 | -2.66E-08 |
| S5 | 1.62E-04 | -3.66E-05 | 5.27E-06 | -4.29E-07 | 1.45E-08 |
| S6 | 1.84E-03 | -3.31E-04 | 3.71E-05 | -2.37E-06 | 6.64E-08 |
| S7 | 1.29E-03 | -1.95E-04 | 1.76E-05 | -8.72E-07 | 1.83E-08 |
| S8 | 3.80E-04 | -5.48E-05 | 5.00E-06 | -2.65E-07 | 6.26E-09 |
| S9 | 5.13E-05 | -2.11E-06 | -6.54E-08 | 9.58E-09 | -2.68E-10 |
| S10 | -8.93E-05 | 1.37E-05 | -1.22E-06 | 5.89E-08 | -1.20E-09 |
| S11 | -1.09E-04 | 1.19E-05 | -7.97E-07 | 2.99E-08 | -4.78E-10 |
| S12 | -2.36E-05 | 1.97E-06 | -9.59E-08 | 2.49E-09 | -2.66E-11 |
| S13 | -6.43E-07 | 1.88E-08 | -3.37E-10 | 3.40E-12 | -1.48E-14 |
| S14 | -9.11E-08 | 1.85E-09 | -2.44E-11 | 1.90E-13 | -6.68E-16 |

The foregoing parameters are substituted into the following formula:

$$z = \frac{cr^2}{1 + \sqrt{1 - (1 + k)c^2 r^2}} + \sum_{i=1}^{N} \alpha_i \rho^{2i}$$

In this way, the lenses of the optical lens 10 in this implementation can be designed, where z is a relative distance from a point that is on an aspheric surface and whose distance from the optical axis is r to a tangent plane corresponding to an intersection point between the aspheric surface and the optical axis, r is a vertical distance between a point on an aspheric curve and the optical axis, c is a curvature, k is a conic coefficient, and $a_i$ is an $i$th-order aspheric coefficient.

In this implementation, different lenses of the optical lens 10 that are designed based on the foregoing parameters can perform different functions, so that the optical lens 10 with good imaging quality is obtained through cooperation between the lenses.

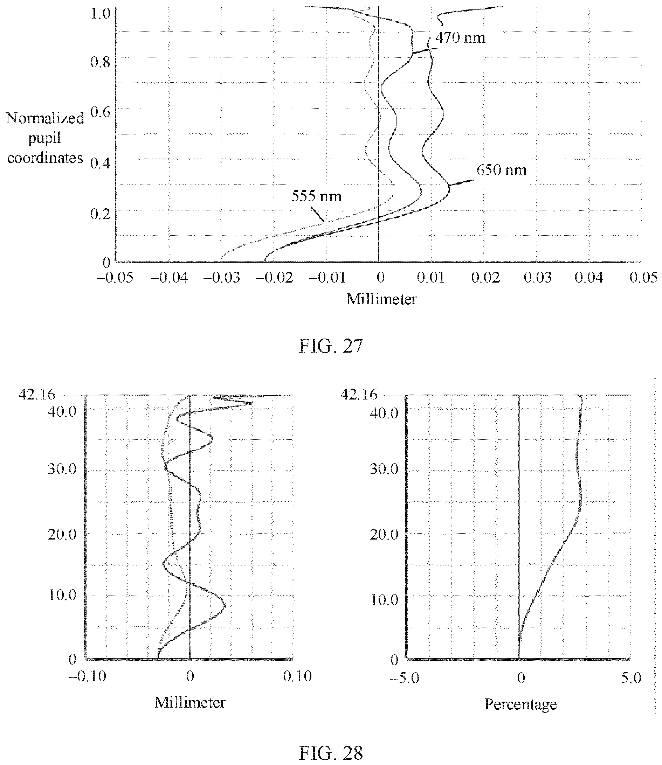

FIG. 27 and FIG. 28 are diagrams representing optical performance of the optical lens 10 in the fourth implementation.

Specifically, FIG. 27 shows axial chromatic aberration of light with wavelengths of 650 nm, 555 nm, and 470 nm for the optical lens 10 after the light passes through the optical lens 10 in the fourth implementation. In FIG. 27, vertical coordinates represent normalized pupil coordinates, and horizontal coordinates represent axial chromatic aberration measured in millimeters. It can be learned from FIG. 27 that, in this implementation, axial chromatic aberration of the optical lens 10 in each state is controlled within a quite small range.

In FIG. 28, a diagram on the left is a schematic diagram of field curvature of the optical lens 10, and a diagram on the right is a schematic diagram of optical distortion of the optical lens 10. In the diagram on the left, a solid line is a schematic diagram of field curvature in a meridional direction after the 555-nm light passes through the optical lens 10, and a dashed line is a schematic diagram of field curvature in a sagittal direction after the 555-nm light passes through the optical lens 10. The diagram on the right is a schematic diagram of optical distortion of the 555-nm light after the 555-nm light passes through the optical lens 10 in the fourth implementation. Vertical coordinates in both diagrams indicate object angles. Horizontal coordinates in the diagram on the left represent astigmatism values, measured in millimeters, in the meridional direction (the dashed line) and the sagittal direction (the solid line). The diagram on the right shows optical distortion values that correspond to different fields of view and that are measured in percentages. It can be learned from FIG. 28 that, in this implementation, an optical system controls distortion within a range that cannot be clearly identified by naked eyes.

In the optical lens 10 provided in this implementation, a configuration mode for lenses in lens groups is combined with lenses with specific optical designs, so that the camera module 1 can be miniaturized, the optical lens 10 has good imaging effect, and thinning of the electronic device 100 is implemented.

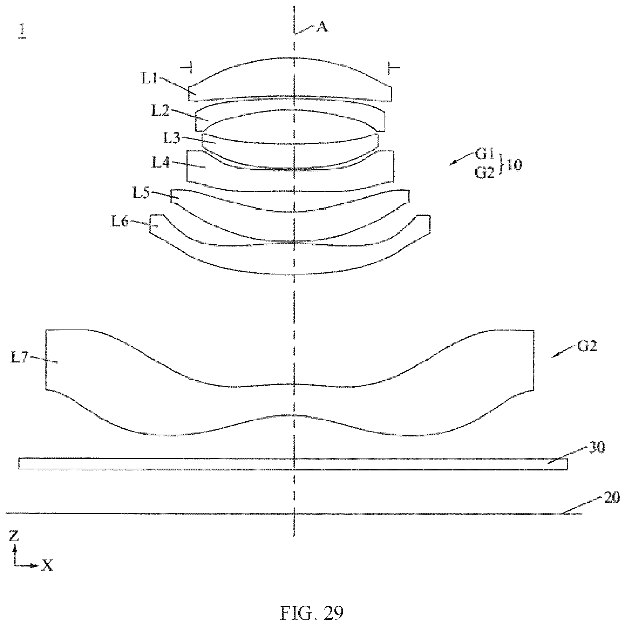

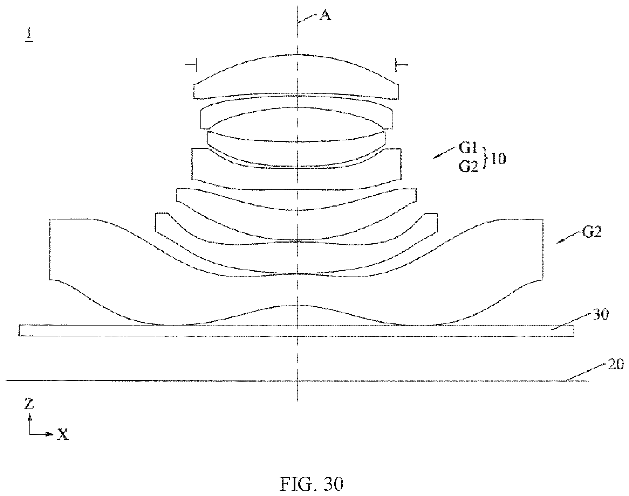

FIG. 29 is a schematic diagram of a structure of a camera module 1 according to a fifth implementation of this application. FIG. 30 is a schematic diagram of a structure of the camera module shown in FIG. 29 in another state. An optical lens of the camera module shown in FIG. 29 is in an operating state, and the optical lens of the camera module shown in FIG. 30 is in a non-operating state.

In this implementation, the optical lens 10 includes two lens groups: a first lens group G1 and a second lens group G2. The first lens group G1 and the second lens group G2 are sequentially disposed from an object side to an image side. Both the first lens group G1 and the second lens group G2 are capable of moving along an optical axis A of the optical lens 10.

When the optical lens 10 switches from the operating state to the non-operating state, or switches from the non-operating state to the operating state, a distance between the first lens group G1 and the second lens group G2 changes. For example, when the optical lens 10 is in the operating state (used for imaging), the distance (Tv) between the first lens group G1 and the second lens group G2 is maximized, and the first lens group G1 and the second lens group G2 form a first spacing. In this case, a total track length of the optical lens 10 is TTLmax, and the first lens group G1 and the second lens group G2 implement focusing. When the optical lens 10 is in the non-operating state (not used for imaging), a spacing between the first lens group G1 and the second lens group G2 is less than the first spacing, and the distance (Tv) between the first lens group G1 and the second lens group G2 is minimized. In this case, a total track length of the optical lens 10 is TTLmin, and a compact lens structure is implemented. This facilitates miniaturization of the electronic device 100. In some implementations, when the optical lens 10 is in the non-operating state, a distance between the second lens group G2 and the photosensitive element 20 may also be minimized, to effectively implement miniaturization of the electronic device.

In some implementations, when the optical lens 10 is in the non-operating state, the distance (Tv) between the first lens group G1 and the second lens group G2 is greater than or equal to 0.00 mm and less than or equal to 10 mm. The foregoing limit values ensure that, when the optical lens 10 is in the non-operating state, there is no spacing or a quite small spacing between the first lens group G1 and the second lens group G2. This effectively reduces space occupied by the optical lens 10 in the electronic device 100, and helps implement miniaturization of the electronic device 100 and improve user experience.

A ratio (TTLmax/TTLmin) of the total track length of the optical lens 10 in the operating state to the total track length of the optical lens 10 in the non-operating state is 1.44. A ratio (TTLmax/(2 × ImgH)) of the total track length of the optical lens 10 in the operating state to twice a diagonal half-length of an effective pixel area of an imaging plane is 0.72. A ratio (TTLmin/(2 × ImgH)) of the total track length of the optical lens 10 in the non-operating state to twice the diagonal half-length of the effective pixel area of the imaging plane is 0.50. The foregoing limit values ensure that a thickness of the optical lens 10 in the non-operating state is sufficiently small. This effectively reduces space occupied by the optical lens 10 in the electronic device 100, and helps implement miniaturization of the electronic device 100 and improve user experience. In addition, this ensures that the total track length of the optical lens 10 in the operating state is sufficiently large, to achieve good imaging quality.

A ratio ($TTLmax^2/(ImgH \times EPD)$) of a square of the total track length of the optical lens 10 in the operating state to a product of the diagonal half-length of the effective pixel area of the imaging plane and an entrance pupil diameter of a lens group of the optical lens 10 is 2.99. A ratio ($TTLmin^2/(ImgH \times EPD)$) of a square of the total track length of the optical lens 10 in the non-operating state to the product of the diagonal half-length of the effective pixel area of the imaging plane and the entrance pupil diameter of the lens group of the optical lens 10 is 1.44. The foregoing limit values ensure that a thickness of the optical lens 10 on a Z axis is minimized, and an aperture is maximized, to improve imaging quality of the optical lens 10.

When the optical lens 10 is in the operating state, in other words, when the optical lens 10 has a largest total track length, a ratio (EFL/EPD) of a focal length of the optical lens 10 to the entrance pupil diameter of the lens group of the optical lens 10 is 1.54. The foregoing limit value ensures that the optical lens 10 can achieve better imaging effect. A ratio (|Fg2/Fg1|) of a focal length of the second lens group G2 to a focal length of the first lens group G1 is 1.56. The foregoing limit value ensures a focal length of the entire optical lens 10, and ensures optical performance of the optical lens 10, so that the optical lens 10 achieves better imaging effect.

The optical lens 10 includes seven lenses. Specifically, the first lens group G1 includes a first lens L1, a second lens L2, a third lens L3, a fourth lens L4, a fifth lens L5, and a sixth lens L6, and the second lens group G2 includes a seventh lens L7. In this implementation, a refractive index (Nmax) of a lens with a largest refractive index among all lenses of the optical lens 10 is 1.81, and a refractive index (Nmin) of a lens with a smallest refractive index among all the lenses is 1.54. The foregoing limit values ensure that a sufficiently wide range of materials can be used for the lenses. For example, the lenses may be made of a glass material, a resin material, or another material. The lenses are properly made of different materials to facilitate miniaturization of the optical lens 10 and thinning of the electronic device 100. Certainly, in another implementation, a quantity of lenses of the optical lens 10 may alternatively be a quantity other than seven.

The first lens L1 has positive refractive power, and a part, near the optical axis, of an object-side surface of the first lens L1 is a convex surface, to improve a light convergence capability of the optical lens 10 on the object side, and reduce a total length of the optical lens 10. This facilitates miniaturization of the optical lens 10. Apart, near the optical axis, of an image-side surface of the first lens L1 is a concave surface, so that spherical aberration and axial chromatic aberration can be corrected.

The second lens L2 has negative refractive power. A part, near the optical axis, of an object-side surface of the second lens L2 is a convex surface. A part, near the optical axis, of an image-side surface of the second lens L2 is a concave surface. The second lens L2 helps correct aberration of the optical lens 10, to further balance spherical aberration and chromatic aberration caused by the first lens L1.

The third lens L3 has positive refractive power. A part, near the optical axis, of an object-side surface of the third lens L3 is a concave surface. A part, near the optical axis, of an image-side surface of the third lens L3 is a convex surface. The third lens L3 helps correct aberration of the optical lens 10, to further balance spherical aberration and chromatic aberration caused by the first lens L1.

The fourth lens L4 has negative refractive power. A part, near the optical axis, of an object-side surface of the fourth lens L4 is a concave surface. A part, near the optical axis, of an image-side surface of the fourth lens L4 is a concave surface. The fourth lens L4 can balance distribution of negative refractive power of the optical lens 10, reduce sensitivity of the optical lens 10, and reduce coma, to effectively shorten a back focal length and a total length.

The fifth lens L5 has negative refractive power. A part, near the optical axis, of an object-side surface of the fifth lens L5 is a concave surface. A part, near the optical axis, of an image-side surface of the fifth lens L5 is a convex surface. The fifth lens L5 can balance distribution of negative refractive power of the optical lens 10, reduce sensitivity of the optical lens 10, and reduce spherical aberration.

The sixth lens L6 has positive refractive power. A part, near the optical axis, of an object-side surface of the sixth lens L6 is a convex surface. A part, near the optical axis, of an image-side surface of the sixth lens L6 is a convex surface. The sixth lens L6 helps correct distortion, astigmatism, and coma, to effectively shorten a back focal length and a total track length.

The seventh lens L7 has negative refractive power. A part, near the optical axis, of an object-side surface of the seventh lens L7 is a convex surface. A part, near the optical axis, of an image-side surface of the seventh lens L7 is a concave surface. The seventh lens L7 helps move a principal point of the optical lens 10 toward a side of a photographed object, to effectively shorten a back focal length and a total track length, and help correct aberration of an off-axis field of view. In this implementation, an off-axis part of the object-side surface of the first lens L1 includes at least one concave surface, and an off-axis part of the image-side surface of the seventh lens L7 includes at least one convex surface. To be specific, both the object-side surface and the image-side surface of the seventh lens L7 include at least one inflection point, to correct the aberration of the off-axis field of view.

In this implementation, different lenses cooperate with each other, so that the optical lens 10 has good imaging effect, and thinning of the electronic device 100 is implemented.

In this implementation, all surfaces of the lenses of the optical lens 10 are aspheric surfaces. To be specific, the image-side surfaces and the object-side surfaces of the first lens L1, the second lens L2, the third lens L3, the fourth lens L4, the fifth lens L5, the sixth lens L6, and the seventh lens L7 are all aspheric surfaces. The aspheric surfaces have higher configuration flexibility and good aberration elimination effect. This reduces a total length of the optical lens 10 and facilitates miniaturization of the optical lens 10.

A dispersion coefficient (Vmax) of a lens with a largest dispersion coefficient among all the lenses is 55.95, and a dispersion coefficient (Vmin) of a lens with a smallest dispersion coefficient among all the lenses is 19.23. The foregoing limit values ensure a capability of eliminating chromatic aberration by the optical lens 10, and improve imaging quality of the optical lens 10.

A thickness of the first lens L1 on the optical axis is CT1, a thickness of the second lens L2 on the optical axis is CT2, a thickness of the third lens L3 on the optical axis is CT3, a thickness of the fourth lens L4 on the optical axis is CT4, a thickness of the fifth lens L5 on the optical axis is CT5, a thickness of the sixth lens L6 on the optical axis is CT6, and a thickness of the seventh lens L7 on the optical axis is CT7. CTmax is a maximum value of a thickness of a lens of the optical lens 10 on the optical axis, where |CTmax/CT1| = 1.0, |CTmax/CT2| = 3.34, |CTmax/CT3| = 1.54, |CTmax/CT4| = 1.81, |CTmax/CT5| = 1.3, |CTmax/CT6| = 1.22, and |CTmax/CT7| = 1.23.

In this implementation, the thickness of the first lens L1 on the optical axis is a lens with a largest thickness among all the lenses. Therefore, a ratio of the thickness of the first lens L1 to a thickness of another lens on the optical axis is limited. It can be understood that a larger ratio indicates a smaller thickness of the another lens. The foregoing limit values ensure that a thickness of the optical lens 10 on the optical axis is sufficiently small. Certainly, in some other implementations, a lens, in the optical lens 10, that has a largest thickness on the optical axis may alternatively be another lens, and a ratio of the thickness of the lens on the optical axis to a thickness of another lens on the optical axis may be limited.

A focal length of the first lens L1 is f1, a focal length of the second lens L2 is f2, a focal length of the third lens L3 is f3, a focal length of the fourth lens L4 is f4, a focal length of the fifth lens L5 is f5, a focal length of the sixth lens L6 is f6, and a focal length of the seventh lens L7 is f7. When the optical lens 10 has a maximum total track length, in other words, when the optical lens 10 is in the operating state, |f1/f2| = 0.49, |f2/f3| = 0.74, |f3/f4| = 0.76, |f4/f5| = 1.63, |f5/f6| = 2.22, and |f6/f7| = 0.65. It can be understood that the ratio being closer to 1.0 indicates the focal lengths of the lenses being closer to each other. The foregoing limit values ensure that the focal lengths of the lenses are allocated as evenly as possible, and ensure imaging quality of the optical lens 10.

A curvature radius of the object-side surface of the first lens L1 is R1, a curvature radius of the image-side surface of the first lens L1 is R2, a curvature radius of the object-side surface of the second lens L2 is R3, a curvature radius of the image-side surface of the second lens L2 is R4, a curvature radius of the object-side surface of the third lens L3 is R5, a curvature radius of the image-side surface of the third lens L3 is R6, a curvature radius of the object-side surface of the fourth lens L4 is R7, a curvature radius of the image-side surface of the fourth lens L4 is R8, a curvature radius of the object-side surface of the fifth lens L5 is R9, a curvature radius of the image-side surface of the fifth lens L5 is R10, a curvature radius of the object-side surface of the sixth lens L6 is R11, a curvature radius of the image-side surface of the sixth lens L6 is R12, a curvature radius of the object-side surface of the seventh lens L7 is R13, and a curvature radius of the image-side surface of the seventh lens L7 is R14, where |R14/R13| = 0.46, |R12/R11| = 1.46, |R10/R9| = 1.75, |R8/R7| = 0.16, |R6/R5| = 0.37, |R4/R3| = 0.52, and |R2/R1| = 4.33. The foregoing limit values ensure that the optical lens 10 can achieve better imaging effect.

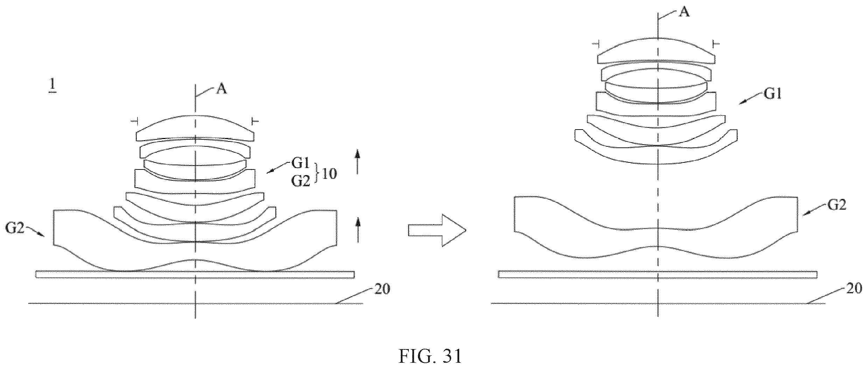

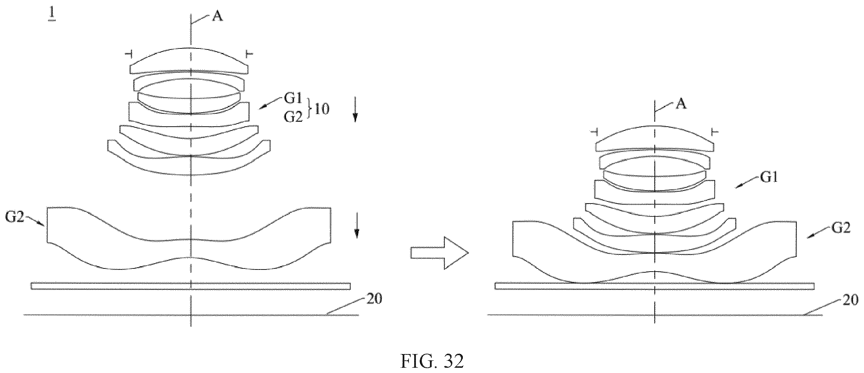

As shown in FIG. 31 and FIG. 32, when the optical lens 10 changes from the non-operating state to the operating state, in other words, when the optical lens 10 changes from a compact state to an expanded state, the first lens group G1 moves toward the object side and extends out of the housing 3 through the through hole and the light transmission hole 31 sequentially, a distance between the first lens group G1 and the second lens group G2 increases to the first spacing, and then the first lens group G1 and the second lens group G2 simultaneously move toward the object side to a target imaging location. When the optical lens 10 is in the operating state, a design spacing (the first spacing) at which imaging can be performed is maintained between the first lens group G1 and the second lens group G2. When focusing is performed at different object distances, a relative distance (the first spacing) between the two lens groups remains unchanged, and the two lens groups simultaneously move forward and backward to optimal locations to focus on the imaging plane (the photosensitive element 20). When the optical lens 10 changes from the operating state to the non-operating state, the first lens group G1 moves toward the second lens group G2 and is close to the second lens group G2, and the second lens group G2 may move toward the photosensitive element 20, so that the camera module 1 is compressed and accommodated in the enclosure. This ensures that the camera module 1 occupies a sufficiently small internal volume of the electronic device 100, and facilitates thinning of the electronic device 100. Certainly, in another embodiment, when the optical lens 10 changes from the compact state to the expanded state, the first lens group G1 and the second lens group G2 may alternatively simultaneously move toward the object side at the beginning. Alternatively, only the first lens group G1 moves toward the object side, and the second lens group G2 may alternatively remain stationary according to a requirement.

Based on the foregoing relational expressions, basic parameters of the optical lens 10 in the operating state in the fifth implementation of this application are shown in Table 13.

**Table 13 Basic parameters of the optical lens 10 in the operating state in the fifth implementation**

| Param eter (mm) | TTL | ImgH | EFL | f1 | f2 | f3 | f4 | f5 | f6 | f7 | Fg1 | Fg2 |
|---|---|---|---|---|---|---|---|---|---|---|---|---|
| Value | 11.536 | 8.000 | 8.568 | 7.912 | - 16.288 | 22.091 | - 29.155 | - 17.912 | 8.074 | - 12.481 | 8.01 | -12.48 |

Detailed structural data of compositions of the camera module 1 in the fifth implementation of this application is shown in Table 14.

**Table 14 Detailed structural data of compositions of the camera module 1**

| Surface number | Description | Surface type | Curvature radius/(mm) | Thickness/ (mm) | Material | Refractive index | Dispersion coefficient |
|---|---|---|---|---|---|---|---|
| OBJ | Photographed object | Planar surface | Unlimited | Unlimited | | | |
| STO | STO | Aspheric surface | Unlimited | -0.28 | | | |
| S1 | L1 | Aspheric surface | 5.069 | 1.07 | Glass | 1.810 | 41.000 |
| S2 | | Aspheric surface | 21.962 | 0.07 | | | |
| S3 | L2 | Aspheric surface | 9.828 | 0.32 | Resin | 1.677 | 19.235 |
| S4 | | Aspheric surface | 5.128 | 0.96 | | | |
| S5 | L3 | Aspheric surface | -20.618 | 0.69 | Resin | 1.546 | 55.953 |
| S6 | | Aspheric surface | -7.701 | 0.05 | | | |
| S7 | L4 | Aspheric surface | -144.170 | 0.59 | Resin | 1.677 | 19.235 |
| S8 | | Aspheric surface | 22.905 | 0.58 | | | |
| S9 | L5 | Aspheric surface | -3.934 | 0.82 | Resin | 1.569 | 37.518 |
| S10 | | Aspheric surface | -6.890 | 0.05 | | | |
| S11 | L6 | Aspheric surface | 7.180 | 0.87 | Resin | 1.537 | 55.704 |
| S12 | | Aspheric surface | -10.458 | 3.09 | | | |
| S13 | L7 | Aspheric surface | 7.173 | 0.87 | Resin | 1.537 | 55.704 |
| S14 | | Aspheric surface | 3.317 | 0.56 | | | |
| S15 | Infrared filter | Planar surface | Unlimited | 0.30 | Glass | 1.518 | 64.197 |
| S16 | | Planar surface | Unlimited | 0.63 | | | |
| S17 | Imaging plane | Planar surface | Unlimited | 0.02 | | | |

Table 15 shows aspheric coefficients of the optical lens 10 in this implementation. A quantity of aspheric surfaces in the optical lens 10 in this embodiment is 14. Details are shown in Table 15.

**Table 15 Aspheric coefficients of the optical lens 10 in the fifth implementation**

| Surface number | K | A4 | A6 | A8 | A10 |
|---|---|---|---|---|---|
| S1 | -4.30E-01 | 6.43E-04 | 3.13E-04 | -2.17E-04 | 1.03E-04 |
| S2 | 4.24E+01 | -6.03E-03 | 5.70E-03 | -3.31E-03 | 1.33E-03 |
| S3 | 9.01E+00 | -1.80E-02 | 1.11E-02 | -5.67E-03 | 2.18E-03 |
| S4 | 3.05E+00 | -1.41E-02 | 4.53E-03 | -2.08E-03 | 7.21E-04 |
| S5 | 0.00E+00 | -9. 92E-04 | -1.50E-03 | 9.40E-04 | -6.19E-04 |
| S6 | -1.29E+00 | 4.52E-03 | -1.32E-02 | 1.06E-02 | -5.42E-03 |
| S7 | 0.00E+00 | -7.75E-03 | -1.06E-02 | 7.63E-03 | -3.28E-03 |
| S8 | 0.00E+00 | -6.19E-03 | -4.74E-03 | 3.06E-03 | -1.17E-03 |
| S9 | -2.91E-03 | 2.10E-02 | -8.64E-03 | 3.20E-03 | -6.58E-04 |
| S10 | -6.48E-01 | -8.41E-03 | -1.20E-03 | 1.06E-03 | -2.54E-04 |
| S11 | 1.20E+00 | -2.10E-02 | 3.54E-03 | -8.88E-04 | 2.00E-04 |
| S12 | 0.00E+00 | 1.31E-03 | -4.77E-04 | -1.95E-04 | 7. 85E-05 |
| S13 | 1.59E-01 | -1.89E-02 | 1.19E-03 | -5.12E-05 | 2.17E-06 |
| S14 | -3.88E+00 | -9.22E-03 | 7.24E-04 | -3.85E-05 | 1.20E-06 |
| Surface number | A12 | A14 | A16 | A18 | A20 |
| S1 | -3.06E-05 | 5.78E-06 | -6.88E-07 | 4.75E-08 | -1.48E-09 |
| S2 | -3.63E-04 | 6.47E-05 | -7.09E-06 | 4.30E-07 | -1.10E-08 |
| S3 | -5.82E-04 | 1.03E-04 | -1.11E-O5 | 6. 62E-07 | -1.65E-08 |
| S4 | -1.82E-04 | 3.18E-05 | -3.64E-06 | 2.63E-07 | -9.62E-09 |
| S5 | 2.44E-04 | -5.99E-05 | 9.24E-06 | -8.02E-07 | 2.92E-08 |
| S6 | 1.72E-03 | -3.46E-04 | 4.31E-05 | -3.08E-06 | 9.72E-08 |
| S7 | 8.24E-04 | -1.16E-04 | 8.04E-06 | -1.51E-07 | -5.49E-09 |
| S8 | 2.91E-04 | -4. 74E-05 | 4.91E-06 | -2.92E-07 | 7.52E-09 |
| S9 | 7.24E-05 | -3.34E-06 | -6.09E-08 | 1.14E-08 | -2.95E-10 |
| S10 | 3.60E-05 | -3.50E-06 | 2.37E-07 | -1.03E-08 | 2.21E-10 |
| S11 | -3.33E-05 | 3.49E-06 | -2.14E-07 | 6.79E-09 | -8.00E-11 |
| S12 | -1.29E-05 | 1.13E-06 | -5.09E-08 | 1.03E-09 | -5.16E-12 |
| S13 | -1.03E-07 | 4.06E-09 | -1.02E-10 | 1.39E-12 | -7.88E-15 |
| S14 | -1.62E-08 | -2.19E-10 | 1.22E-11 | -1.77E-13 | 8.98E-16 |

The foregoing parameters are substituted into the following formula:

$$z = \frac{cr^2}{1 + \sqrt{1 - (1+k)c^2 r^2}} + \sum_{i=1}^{N} \alpha_i \rho^{2i}$$

In this way, the lenses of the optical lens 10 in this implementation can be designed, where z is a relative distance from a point that is on an aspheric surface and whose distance from the optical axis is r to a tangent plane corresponding to an intersection point between the aspheric surface and the optical axis, r is a vertical distance between a point on an aspheric curve and the optical axis, c is a curvature, k is a conic coefficient, and $a_i$ is an ith-order aspheric coefficient.

In this implementation, different lenses of the optical lens 10 that are designed based on the foregoing parameters can perform different functions, so that the optical lens 10 with good imaging quality is obtained through cooperation between the lenses.

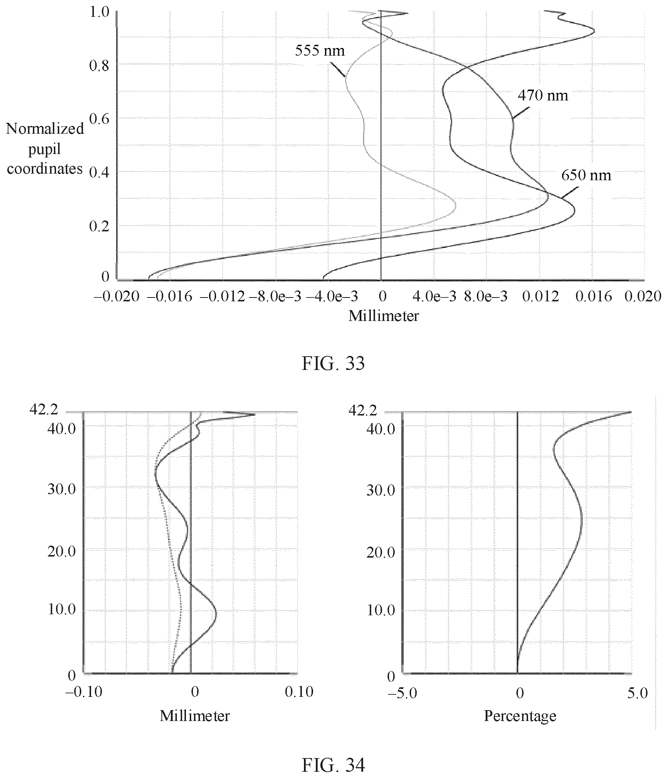

FIG. 33 and FIG. 34 are diagrams representing optical performance of the optical lens 10 in the fifth implementation.

Specifically, FIG. 33 shows axial chromatic aberration of light with wavelengths of 650 nm, 555 nm, and 470 nm for the optical lens 10 after the light passes through the optical lens 10 in the fifth implementation. In FIG. 33, vertical coordinates represent normalized pupil coordinates, and horizontal coordinates represent axial chromatic aberration measured in millimeters. It can be learned from FIG. 33 that, in this implementation, axial chromatic aberration of the optical lens 10 in each state is controlled within a quite small range.

In FIG. 34, a diagram on the left is a schematic diagram of field curvature of the optical lens 10, and a diagram on the right is a schematic diagram of optical distortion of the optical lens 10. In the diagram on the left, a solid line is a schematic diagram of field curvature in a meridional direction after the 555-nm light passes through the optical lens 10, and a dashed line is a schematic diagram of field curvature in a sagittal direction after the 555-nm light passes through the optical lens 10. The diagram on the right is a schematic diagram of optical distortion of the 555-nm light after the 555-nm light passes through the optical lens 10 in the fifth implementation. Vertical coordinates in both diagrams indicate object angles. Horizontal coordinates in the diagram on the left represent astigmatism values, measured in millimeters, in the meridional direction (the dashed line) and the sagittal direction (the solid line). The diagram on the right shows optical distortion values that correspond to different fields of view and that are measured in percentages. It can be learned from FIG. 34 that, in this implementation, an optical system controls distortion within a range that cannot be clearly identified by naked eyes.

In the optical lens 10 provided in this implementation, a configuration mode for lenses in lens groups is combined with lenses with specific optical designs, so that the camera module 1 can be miniaturized, the optical lens 10 has good imaging effect, and thinning of the electronic device 100 is implemented.

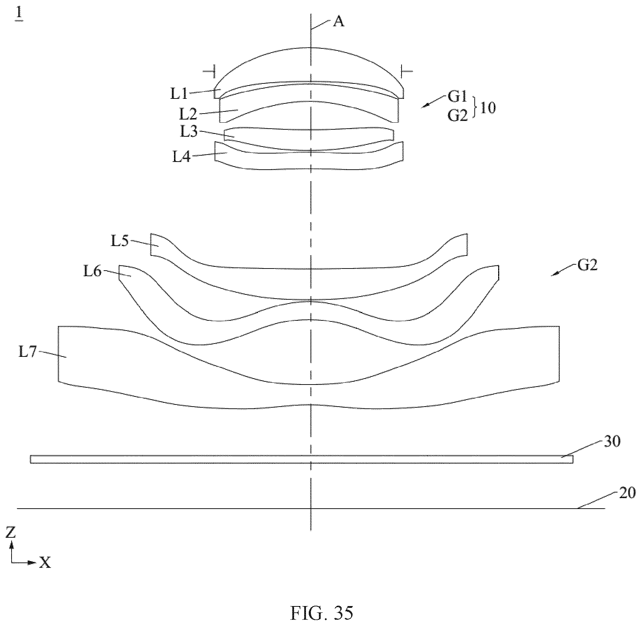

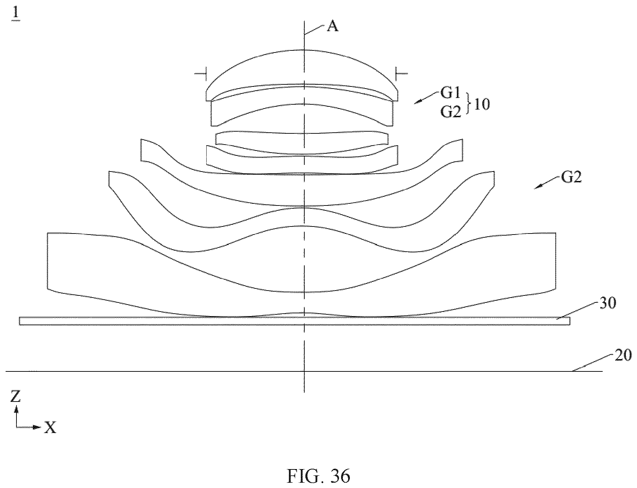

FIG. 35 is a schematic diagram of a structure of a camera module 1 according to a sixth implementation of this application. FIG. 36 is a schematic diagram of a structure of the camera module shown in FIG. 35 in another state. An optical lens of the camera module shown in FIG. 35 is in an operating state, and the optical lens of the camera module shown in FIG. 36 is in a non-operating state.

In this implementation, the optical lens 10 includes two lens groups: a first lens group G1 and a second lens group G2. The first lens group G1 and the second lens group G2 are sequentially disposed from an object side to an image side. Both the first lens group G1 and the second lens group G2 are capable of moving along an optical axis A of the optical lens 10.

When the optical lens 10 switches from the operating state to the non-operating state, or switches from the non-operating state to the operating state, a distance between the first lens group G1 and the second lens group G2 changes. For example, when the optical lens 10 is in the operating state (used for imaging), the distance (Tv) between the first lens group G1 and the second lens group G2 is maximized, and the first lens group G1 and the second lens group G2 form a first spacing. In this case, a total track length of the optical lens 10 is TTLmax, and the first lens group G1 and the second lens group G2 implement focusing. When the optical lens 10 is in the non-operating state (not used for imaging), a spacing between the first lens group G1 and the second lens group G2 is less than the first spacing, and the distance (Tv) between the first lens group G1 and the second lens group G2 is minimized. In this case, a total track length of the optical lens 10 is TTLmin, and a compact lens structure is implemented. This facilitates miniaturization of the electronic device 100. In some implementations, when the optical lens 10 is in the non-operating state, a distance between the second lens group G2 and the photosensitive element 20 may also be minimized, to effectively implement miniaturization of the electronic device.

In some implementations, when the optical lens 10 is in the non-operating state, the distance (Tv) between the first lens group G1 and the second lens group G2 is greater than or equal to 0.00 mm and less than or equal to 10 mm. The foregoing limit values ensure that, when the optical lens 10 is in the non-operating state, there is no spacing or a quite small spacing between the first lens group G1 and the second lens group G2. This effectively reduces space occupied by the optical lens 10 in the electronic device 100, and helps implement miniaturization of the electronic device 100 and improve user experience.

A ratio (TTLmax/TTLmin) of the total track length of the optical lens 10 in the operating state to the total track length of the optical lens 10 in the non-operating state is 1.41. A ratio (TTLmax/(2 × ImgH)) of the total track length of the optical lens 10 in the operating state to twice a diagonal half-length of an effective pixel area of an imaging plane is 0.69. A ratio (TTLmin/(2 × ImgH)) of the total track length of the optical lens 10 in the non-operating state to twice the diagonal half-length of the effective pixel area of the imaging plane is 0.49. The foregoing limit values ensure that a thickness of the optical lens 10 in the non-operating state is sufficiently small. This effectively reduces space occupied

56

by the optical lens 10 in the electronic device 100, and helps implement miniaturization of the electronic device 100 and improve user experience. In addition, this ensures that the total track length of the optical lens 10 in the operating state is sufficiently large, to achieve good imaging quality.

A ratio ($TTLmax^2/(ImgH \times EPD)$) of a square of the total track length of the optical lens 10 in the operating state to a product of the diagonal half-length of the effective pixel area of the imaging plane and an entrance pupil diameter of a lens group of the optical lens 10 is 3.03. A ratio ($TTLmin^2/(ImgH \times EPD)$) of a square of the total track length of the optical lens 10 in the non-operating state to the product of the diagonal half-length of the effective pixel area of the imaging plane and the entrance pupil diameter of the lens group of the optical lens 10 is 1.53. The foregoing limit values ensure that a thickness of the optical lens 10 on a Z axis is minimized, and an aperture is maximized, to improve imaging quality of the optical lens 10.

When the optical lens 10 is in the operating state, in other words, when the optical lens 10 has a largest total track length, a ratio (EFL/EPD) of a focal length of the optical lens 10 to the entrance pupil diameter of the lens group of the optical lens 10 is 1.80. The foregoing limit value ensures that the optical lens 10 can achieve better imaging effect. A ratio (|Fg2/Fg1|) of a focal length of the second lens group G2 to a focal length of the first lens group G1 is 1.53. The foregoing limit value ensures a focal length of the entire optical lens 10, and ensures optical performance of the optical lens 10, so that the optical lens 10 achieves better imaging effect.

The optical lens 10 includes seven lenses. Specifically, the first lens group G1 includes a first lens L1, a second lens L2, a third lens L3, and a fourth lens L4, and the second lens group G2 includes a fifth lens L5, a sixth lens L6, and a seventh lens L7. In this implementation, a refractive index (Nmax) of a lens with a largest refractive index among all lenses of the optical lens 10 is 1.68, and a refractive index (Nmin) of a lens with a smallest refractive index among all the lenses is 1.52. The foregoing limit values ensure that a sufficiently wide range of materials can be used for the lenses. For example, the lenses may be made of a glass material, a resin material, or another material. The lenses are properly made of different materials to facilitate miniaturization of the optical lens 10 and thinning of the electronic device 100. Certainly, in another implementation, a quantity of lenses of the optical lens 10 may alternatively be a quantity other than seven.

The first lens L1 has positive refractive power, and a part, near the optical axis, of an object-side surface of the first lens L1 is a convex surface, to improve a light convergence capability of the optical lens 10 on the object side, and reduce a total length of the optical lens 10. This facilitates miniaturization of the optical lens 10. Apart, near the optical axis, of an image-side surface of the first lens L1 is a concave surface, so that spherical aberration and axial chromatic aberration can be corrected.

The second lens L2 has negative refractive power. A part, near the optical axis, of an object-side surface of the second lens L2 is a convex surface. A part, near the optical axis, of an image-side surface of the second lens L2 is a concave surface. The second lens L2 helps correct aberration of the optical lens 10, to further balance spherical aberration and chromatic aberration caused by the first lens L1.

The third lens L3 has positive refractive power. A part, near the optical axis, of an object-side surface of the third lens L3 is a concave surface. A part, near the optical axis, of an image-side surface of the third lens L3 is a convex surface. The third lens L3 helps correct aberration of the optical lens 10, to further balance spherical aberration and chromatic aberration caused by the first lens L1.

The fourth lens L4 has positive refractive power. A part, near the optical axis, of an object-side surface of the fourth lens L4 is a convex surface. A part, near the optical axis, of an image-side surface of the fourth lens L4 is a concave surface. The fourth lens L4 can balance distribution of negative refractive power of the optical lens 10, reduce sensitivity of the optical lens 10, and reduce coma, to effectively shorten a back focal length and a total length.

The fifth lens L5 has positive refractive power. A part, near the optical axis, of an object-side surface of the fifth lens L5 is a concave surface. A part, near the optical axis, of an image-side surface of the fifth lens L5 is a convex surface. The fifth lens L5 can balance distribution of negative refractive power of the optical lens 10, reduce sensitivity of the optical lens 10, and reduce spherical aberration.

The sixth lens L6 has positive refractive power. A part, near the optical axis, of an object-side surface of the sixth lens L6 is a convex surface. A part, near the optical axis, of an image-side surface of the sixth lens L6 is a concave surface. The sixth lens L6 helps correct distortion, astigmatism, and coma, to effectively shorten a back focal length and a total track length.

The seventh lens L7 has negative refractive power. A part, near the optical axis, of an object-side surface of the seventh lens L7 is a concave surface. Apart, near the optical axis, of an image-side surface of the seventh lens L7 is a concave surface. The seventh lens L7 helps move a principal point of the optical lens 10 toward a side of a photographed object, to effectively shorten a back focal length and a total track length, and help correct aberration of an off-axis field of view. In this implementation, an off-axis part of the object-side surface of the first lens L1 includes at least one concave surface, and an off-axis part of the image-side surface of the seventh lens L7 includes at least one convex surface. To be specific, both the object-side surface and the image-side surface of the seventh lens L7 include at least one inflection point, to correct the aberration of the off-axis field of view.

In this implementation, different lenses cooperate with each other, so that the optical lens 10 has good imaging effect, and thinning of the electronic device 100 is implemented.

In this implementation, all surfaces of the lenses of the optical lens 10 are aspheric surfaces. To be specific, the image-side surfaces and the object-side surfaces of the first lens L1, the second lens L2, the third lens L3, the fourth lens L4, the fifth lens L5, the sixth lens L6, and the seventh lens L7 are all aspheric surfaces. The aspheric surfaces have higher configuration flexibility and good aberration elimination effect. This reduces a total length of the optical lens 10 and facilitates miniaturization of the optical lens 10.

A dispersion coefficient (Vmax) of a lens with a largest dispersion coefficient among all the lenses is 55.95, and a dispersion coefficient (Vmin) of a lens with a smallest dispersion coefficient among all the lenses is 19.23. The foregoing limit values ensure a capability of eliminating chromatic aberration by the optical lens 10, and improve imaging quality of the optical lens 10.

A thickness of the first lens L1 on the optical axis is CT1, a thickness of the second lens L2 on the optical axis is CT2, a thickness of the third lens L3 on the optical axis is CT3, a thickness of the fourth lens L4 on the optical axis is CT4, a thickness of the fifth lens L5 on the optical axis is CT5, a thickness of the sixth lens L6 on the optical axis is CT6, and a thickness of the seventh lens L7 on the optical axis is CT7. CTmax is a maximum value of a thickness of a lens of the optical lens 10 on the optical axis, where $|CTmax/CT1| = 1.0$, $|CTmax/CT2| = 1.94$, $|CTmax/CT3| = 1.64$, $|CTmax/CT4| = 2.04$, $|CTmax/CT5| = 1.10$, $|CTmax/CT6| = 1.89$, and $|CTmax/CT7| = 1.67$.

In this implementation, the thickness of the first lens L1 on the optical axis is a lens with a largest thickness among all the lenses. Therefore, a ratio of the thickness of the first lens L1 to a thickness of another lens on the optical axis is limited. It can be understood that a larger ratio indicates a smaller thickness of the another lens. The foregoing limit values ensure that a thickness of the optical lens 10 on the optical axis is sufficiently small. Certainly, in some other implementations, a lens, in the optical lens 10, that has a largest thickness on the optical axis may alternatively be another lens, and a ratio of the thickness of the lens on the optical axis to a thickness of another lens on the optical axis may be limited.

A focal length of the first lens L1 is f1, a focal length of the second lens L2 is f2, a focal length of the third lens L3 is f3, a focal length of the fourth lens L4 is f4, a focal length of the fifth lens L5 is f5, a focal length of the sixth lens L6 is f6, and a focal length of the seventh lens L7 is f7. When the optical lens 10 has a maximum total track length, in other words, when the optical lens 10 is in the operating state, $|f1/f2| = 0.56$, $|f2/f3| = 0.50$, $|f3/f4| = 0.56$, $|f4/f5| = 0.70$, $|f5/f6| = 3.59$, and $|f6/f7| = 3.31$. It can be understood that the ratio being closer to 1.0 indicates the focal lengths of the lenses being closer to each other. The foregoing limit values ensure that the focal lengths of the lenses are allocated as evenly as possible, and ensure imaging quality of the optical lens 10.

A curvature radius of the object-side surface of the first lens L1 is R1, a curvature radius of the image-side surface of the first lens L1 is R2, a curvature radius of the object-side surface of the second lens L2 is R3, a curvature radius of the image-side surface of the second lens L2 is R4, a curvature radius of the object-side surface of the third lens L3 is R5, a curvature radius of the image-side surface of the third lens L3 is R6, a curvature radius of the object-side surface of the fourth lens L4 is R7, a curvature radius of the image-side surface of the fourth lens L4 is R8, a curvature radius of the object-side surface of the fifth lens L5 is R9, a curvature radius of the image-side surface of the fifth lens L5 is R10, a curvature radius of the object-side surface of the sixth lens L6 is R11, a curvature radius of the image-side surface of the sixth lens L6 is R12, a curvature radius of the object-side surface of the seventh lens L7 is R13, and a curvature radius of the image-side surface of the seventh lens L7 is R14, where $|R14/R13| = 0.35$, $|R12/R11| = 1.26$, $|R10/R9| = 0.56$, $|R8/R7| = 1.30$, $|R6/R5| = 0.53$, $|R4/R3| = 0.60$, and $|R2/R1| = 4.98$. The foregoing limit values ensure that the optical lens 10 can achieve better imaging effect.

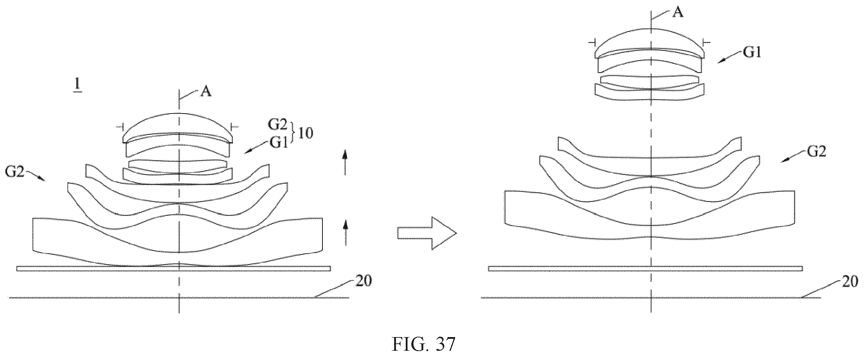

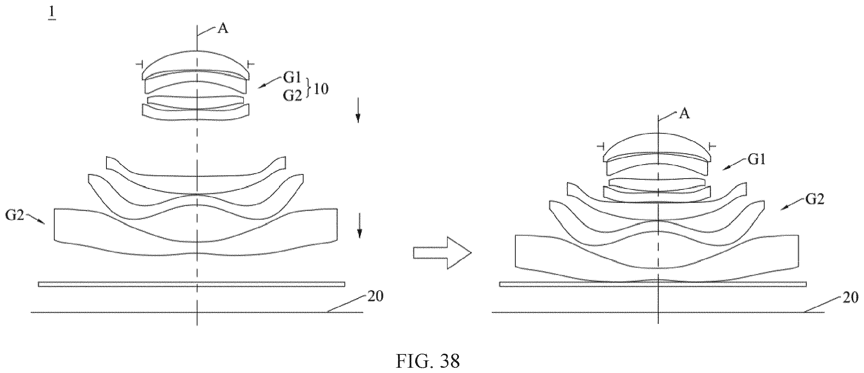

As shown in FIG. 37 and FIG. 38, when the optical lens 10 changes from the non-operating state to the operating state, in other words, when the optical lens 10 changes from a compact state to an expanded state, the first lens group G1 moves toward the object side and extends out of the housing 3 through the through hole and the light transmission hole 31 sequentially, a distance between the first lens group G1 and the second lens group G2 increases to the first spacing, and then the first lens group G1 and the second lens group G2 simultaneously move toward the object side to a target imaging location. When the optical lens 10 is in the operating state, a design spacing (the first spacing) at which imaging can be performed is maintained between the first lens group G1 and the second lens group G2. When focusing is performed at different object distances, a relative distance (the first spacing) between the two lens groups remains unchanged, and the two lens groups simultaneously move forward and backward to optimal locations to focus on the imaging plane (the photosensitive element 20). When the optical lens 10 changes from the operating state to the non-operating state, the first lens group G1 moves toward the second lens group G2 and is close to the second lens group G2, and the second lens group G2 may move toward the photosensitive element 20, so that the camera module 1 is compressed and accommodated in the enclosure. This ensures that the camera module 1 occupies a sufficiently small internal volume of the electronic device 100, and facilitates thinning of the electronic device 100. Certainly, in another embodiment, when the optical lens 10 changes from the compact state to the expanded state, the first lens group G1 and the second lens group G2 may alternatively simultaneously move toward the object side at the beginning. Alternatively, only the first lens group G1 moves toward the object side, and the second lens group G2 may alternatively remain stationary according to a requirement.

Based on the foregoing relational expressions, basic parameters of the optical lens 10 in the operating state in the sixth implementation of this application are shown in Table 16.

**Table 16 Basic parameters of the optical lens 10 in the operating state in the sixth implementation**

| Parameter (mm) | TTL | ImgH | EFL | f1 | f2 | f3 | f4 | f5 | f6 | f7 | Fg1 | Fg2 |
|---|---|---|---|---|---|---|---|---|---|---|---|---|
| Value | 11.035 | 7.874 | 9.044 | 8.979 | - 15.947 | 31.644 | 56.278 | 80.123 | 22.334 | - 6.754 | 10.1072 | 15.485 |

Detailed structural data of compositions of the camera module 1 in the sixth implementation of this application is shown in Table 17.

**Table 17 Detailed structural data of compositions of the camera module 1**

| Surface number | Description | Surface type | Curvature radius/(mm) | Thickness/ (mm) | Material | Refractive index | Dispersion coefficient |
|---|---|---|---|---|---|---|---|
| OBJ | Photographed object | Planar surface | Unlimited | Unlimited | | | |
| STO | STO | Aspheric surface | Unlimited | -1.008 | | | |
| S1 | L1 | Aspheric surface | 3.998 | 0.920 | Resin | 1.546 | 55.953 |
| S2 | | Aspheric surface | 19.901 | 0.067 | | | |
| S3 | L2 | Aspheric surface | 6.677 | 0.473 | Resin | 1.677 | 19.235 |
| S4 | | Aspheric surface | 4.007 | 0.778 | | | |
| S5 | L3 | Aspheric surface | -15.615 | 0.562 | Resin | 1.546 | 55.953 |
| S6 | | Aspheric surface | -8.307 | 0.050 | | | |
| S7 | L4 | Aspheric surface | 9.427 | 0.450 | Resin | 1.677 | 19.235 |
| S8 | | Aspheric surface | 12.285 | 2.735 | | | |
| S9 | L5 | Aspheric surface | -34.792 | 0.840 | Resin | 1.546 | 55.953 |
| S10 | | Aspheric surface | -19.546 | 0.050 | | | |
| S11 | L6 | Aspheric surface | 3.022 | 0.485 | Resin | 1.537 | 55.704 |
| S12 | | Aspheric surface | 3.814 | 1.775 | | | |
| S13 | L7 | Aspheric surface | -14.101 | 0.550 | Resin | 1.537 | 55.704 |
| S14 | | Aspheric surface | 4.943 | 0.200 | | | |
| S15 | Infrared filter | Planar surface | Unlimited | 0.300 | Glass | 1.518 | 64.197 |
| S16 | | Planar surface | Unlimited | 0.633 | | | |
| S17 | Imaging plane | Planar surface | Unlimited | 0.017 | | | |

Table 18 shows aspheric coefficients of the optical lens 10 in this implementation. A quantity of aspheric surfaces in the optical lens 10 in this embodiment is 14. Details are shown in Table 18.

**Table 18 Aspheric coefficients of the optical lens 10 in the sixth implementation**

| Surface number | K | A4 | A6 | A8 | A10 |
|---|---|---|---|---|---|
| S1 | 2.08E-01 | 3.58E-04 | 1.10E-04 | -7.57E-05 | 4.17E-05 |
| S2 | 4.90E+01 | 1.66E-02 | -2.49E-02 | 2.56E-02 | -1.59E-02 |
| S3 | 4.97E+00 | 1.24E-03 | -1.16E-02 | 1.11E-02 | -6.64E-03 |
| S4 | 1.17E+00 | -2.84E-03 | -1.27E-02 | 1.32E-02 | -8.07E-03 |
| S5 | 0.00E+00 | 2.88E-03 | 4.96E-03 | -6.13E-03 | 3.56E-03 |
| S6 | 5.52E+00 | -7.54E-03 | 9.36E-03 | -7.97E-03 | 4.49E-03 |
| S7 | 0.00E+00 | -3.43E-02 | 2.35E-02 | -2.11E-02 | 1.22E-02 |
| S8 | 0.00E+00 | -1.52E-02 | -1.15E-03 | 3.10E-03 | -2.46E-03 |
| S9 | 0.00E+00 | 2.80E-03 | 1.23E-03 | -1.15E-03 | 3.67E-04 |
| S10 | 1.31E+01 | -1.68E-02 | 6.57E-03 | -2.03E-03 | 4.25E-04 |
| S11 | -1.37E+00 | -1.57E-03 | -3.29E-03 | 2.24E-04 | 3.65E-05 |
| S12 | -1.42E+00 | 2.04E-02 | -1.00E-02 | 1.82E-03 | -2.01E-04 |
| S13 | 0.00E+00 | -2. 89E-02 | 6.83E-03 | -8.01E-04 | 5.33E-05 |
| S14 | -2.60E+01 | -1.74E-02 | 3.16E-03 | -3.17E-04 | 1.90E-05 |
| Surface number | A12 | A14 | A16 | A18 | A20 |
| S1 | -7.14E-06 | 2.65E-07 | 7.33E-08 | -5.42E-09 | 2.59E-10 |
| S2 | 6.16E-03 | -1.51E-03 | 2.25E-04 | -1.87E-05 | 6.63E-07 |
| S3 | 2.60E-03 | -6.59E-04 | 1.04E-04 | -9.23E-06 | 3.50E-07 |
| S4 | 3.15E-03 | -7.98E-04 | 1.27E-04 | -1.16E-05 | 4.60E-07 |
| S5 | -1.11E-03 | 1.87E-04 | -1.32E-05 | -2.46E-07 | 5.97E-08 |
| S6 | -1.56E-03 | 3.31E-04 | -4.04E-05 | 2.41E-06 | -4.02E-08 |
| S7 | -4.52E-03 | 1.06E-03 | -1.52E-04 | 1.21E-05 | -4.05E-07 |
| S8 | 1.06E-03 | -2.67E-04 | 3.96E-05 | -3.19E-06 | 1.08E-07 |
| S9 | -6.51E-05 | 6.86E-06 | -4.30E-07 | 1.48E-08 | -2.16E-10 |
| S10 | -5.57E-05 | 4.44E-06 | -2.10E-07 | 5.41E-09 | -5.89E-11 |
| S11 | -7.36E-06 | 5.45E-07 | -2.05E-08 | 3.90E-10 | -2.99E-12 |
| S12 | 1.46E-05 | -7.08E-07 | 2.18E-08 | -3.87E-10 | 2.99E-12 |
| S13 | -2.10E-06 | 4.86E-08 | -6.04E-10 | 2.92E-12 | 3.52E-15 |
| S14 | -7.09E-07 | 1.66E-08 | -2.35E-10 | 1.85E-12 | -6.11E-15 |

The foregoing parameters are substituted into the following formula:

$$z = \frac{cr^2}{1 + \sqrt{1 - (1+k)c^2 r^2}} + \sum_{i=1}^{N} \alpha_i \rho^{2i}$$

In this way, the lenses of the optical lens 10 in this implementation can be designed, where z is a relative distance from a point that is on an aspheric surface and whose distance from the optical axis is r to a tangent plane corresponding to an intersection point between the aspheric surface and the optical axis, r is a vertical distance between a point on an aspheric curve and the optical axis, c is a curvature, k is a conic coefficient, and $a_i$ is an $i$th-order aspheric coefficient.

In this implementation, different lenses of the optical lens 10 that are designed based on the foregoing parameters can perform different functions, so that the optical lens 10 with good imaging quality is obtained through cooperation between the lenses.

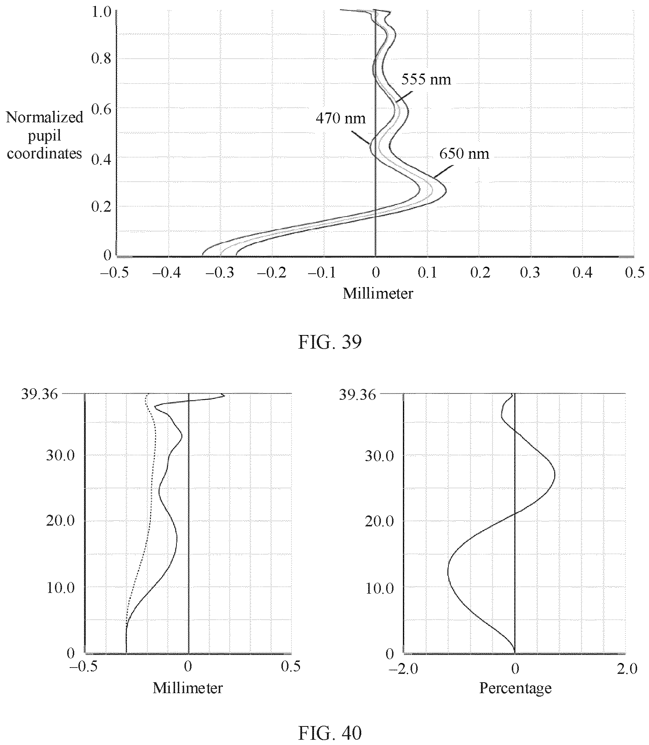

FIG. 39 and FIG. 40 are diagrams representing optical performance of the optical lens 10 in the sixth implementation.

Specifically, FIG. 39 shows axial chromatic aberration of light with wavelengths of 650 nm, 555 nm, and 470 nm for the optical lens 10 after the light passes through the optical lens 10 in the sixth implementation. In FIG. 39, vertical coordinates represent normalized pupil coordinates, and horizontal coordinates represent axial chromatic aberration measured in millimeters. It can be learned from FIG. 39 that, in this implementation, axial chromatic aberration of the optical lens 10 in each state is controlled within a quite small range.

In FIG. 40, a diagram on the left is a schematic diagram of field curvature of the optical lens 10, and a diagram on the right is a schematic diagram of optical distortion of the optical lens 10. In the diagram on the left, a solid line is a schematic diagram of field curvature in a meridional direction after the 555-nm light passes through the optical lens 10, and a dashed line is a schematic diagram of field curvature in a sagittal direction after the 555-nm light passes through the optical lens 10. The diagram on the right is a schematic diagram of optical distortion of the 555-nm light after the 555-nm light passes through the optical lens 10 in the sixth implementation. Vertical coordinates in both diagrams indicate object angles. Horizontal coordinates in the diagram on the left represent astigmatism values, measured in millimeters, in the meridional direction (the dashed line) and the sagittal direction (the solid line). The diagram on the right shows optical distortion values that correspond to different fields of view and that are measured in percentages. It can be learned from FIG. 40 that, in this implementation, an optical system controls distortion within a range that cannot be clearly identified by naked eyes.

In the optical lens 10 provided in this implementation, a configuration mode for lenses in lens groups is combined with lenses with specific optical designs, so that the camera module 1 can be miniaturized, the optical lens 10 has good imaging effect, and thinning of the electronic device 100 is implemented.

The foregoing descriptions are merely some embodiments and implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. An optical lens (10), wherein the optical lens (10) comprises a first lens group (G1) and a second lens group (G2) that are sequentially arranged from an object side to an image side, the first lens group (G1) and the second lens group (G2) each comprise at least one lens, and both the first lens group (G1) and the second lens group (G2) are capable of moving along an optical axis (A) of the optical lens (10);

   when the optical lens (10) is in an operating state, the first lens group (G1) and the second lens group (G2) form a first spacing;
   when the optical lens (10) switches from the operating state to a non-operating state, the first lens group (G1) moves in a direction toward the second lens group (G2), and a spacing between the first lens group (G1) and the second lens group (G2) is less than the first spacing; and
   when the optical lens (10) is in the non-operating state, the optical lens (10) meets the following relational expression:

$$0.00 \text{ mm} \leq Tv \leq 10.0 \text{ mm},$$

   wherein
   Tv is the spacing between the first lens group (G1) and the second lens group (G2).

2. The optical lens (10) according to claim 1, wherein when the optical lens (10) is in the non-operating state, the optical lens (10) meets the following relational expression:

$$0.00 \text{ mm} \leq Tv \leq 0.10 \text{ mm}.$$

3. The optical lens (10) according to claim 1, wherein when the optical lens (10) is in the non-operating state, the optical lens (10) meets the following relational expression:

$$0.15 \text{ mm} \leq \text{Tv} \leq 10.0 \text{ mm}.$$

4. The optical lens (10) according to any one of claims 1 to 3, wherein the optical lens (10) comprises a first lens tube, the first lens group (G1) is fastened to the first lens tube, and the first lens group (G1) partially protrudes from a side, on an image side of the first lens group (G1), of the first lens tube.

5. The optical lens (10) according to any one of claims 1 to 4, wherein when the optical lens (10) switches from the operating state to the non-operating state, the second lens group (G2) moves toward an imaging plane of the optical lens (10).

6. The optical lens (10) according to any one of claims 1 to 5, wherein when the optical lens (10) is in the operating state, for different object distances, a distance between the first lens group (G1) and the second lens group (G2) remains unchanged, and focusing is performed based on a change of a distance from the first lens group (G1) and the second lens group (G2) to the imaging plane of the optical lens (10).

7. The optical lens (10) according to any one of claims 1 to 6, wherein the optical lens (10) meets the following relational expression:

$$1.0 \leq \text{TTLmax/TTLmin} \leq 10.0,$$

wherein
TTL is a total track length of the optical lens (10), TTLmax is a maximum value of the total track length, and TTLmin is a minimum value of the total track length.

8. The optical lens (10) according to any one of claims 1 to 7, wherein the optical lens (10) meets the following relational expression:

$$0.60 \leq \text{TTLmax}/(2 \times \text{ImgH}) \leq 10,$$

wherein
ImgH is a diagonal half-length of an effective pixel area of the imaging plane of the optical lens (10).

9. The optical lens (10) according to claim 8, wherein the optical lens (10) meets the following relational expression:

$$0.30 \leq \text{TTLmin}/(2 \times \text{ImgH}) \leq 0.60.$$

10. The optical lens (10) according to any one of claims 1 to 9, wherein the optical lens (10) meets the following relational expression:

$$2.0 \leq \text{TTLmax}^2/(\text{ImgH} \times \text{EPD}) \leq 20,$$

wherein
EPD is an entrance pupil diameter of a lens group of the optical lens (10).

11. The optical lens (10) according to claim 10, wherein the optical lens (10) meets the following relational expression:

$$1.0 \leq \text{TTLmin}^2/(\text{ImgH} \times \text{EPD}) \leq 2.0.$$

12. The optical lens (10) according to any one of claims 1 to 11, wherein when the optical lens (10) has a maximum total track length, the optical lens (10) meets the following relational expression:

$$1.0 \leq \text{EFL/EPD} \leq 5.0,$$

wherein
EFL is a focal length of the optical lens (10), and EPD is an entrance pupil diameter of a lens group of the optical lens (10).

13. The optical lens (10) according to any one of claims 1 to 12, wherein the optical lens (10) meets the following relational expression:

$$0.5 < |\text{Fg2/Fg1}| < 5.0,$$

wherein
Fg1 is a focal length of the first lens group (G1), and Fg2 is a focal length of the second lens group (G2).

14. The optical lens (10) according to any one of claims 1 to 13, wherein the first lens group (G1) comprises a first lens (L1), a second lens (L2), a third lens (L3), and a fourth lens (L4), and the second lens group (G2) comprises a fifth lens (L5), a sixth lens (L6), and a seventh lens (L7); or the first lens group (G1) comprises a first lens (L1), a second lens (L2), a third lens (L3), a fourth lens (L4), a fifth lens (L5), and a sixth lens (L6), and the second lens group (G2) comprises a seventh lens (L7).

15. The optical lens (10) according to claim 14, wherein the optical lens (10) meets the following relational expressions:

$$1.65 \leq \text{Nmax} < 1.85;$$

and

$$1.40 \leq \text{Nmin} < 1.58,$$

wherein
Nmax is a maximum refractive index of all lenses of the optical lens (10), and Nmin is a minimum refractive index of all the lenses of the optical lens (10).

16. The optical lens (10) according to claim 1 or 15, wherein the optical lens (10) meets the following relational expressions:

$$\text{Vmin} > 15, \text{ and Vmax} < 100,$$

wherein
Vmin is a minimum dispersion coefficient of all the lenses of the optical lens (10), and Vmax is a maximum dispersion coefficient of all the lenses of the optical lens (10).

17. The optical lens (10) according to any one of claims 14 to 16, wherein the optical lens (10) meets the following relational expressions:

$$1.0 \leq |\text{CTmax/CT1}| \leq 4.0;$$

$$1.0 \leq |\text{CTmax/CT2}| \leq 4.0;$$

$$1.0 \leq |CTmax/CT3| \leq 3.0;$$

$$1.0 \leq |CTmax/CT4| \leq 3.0;$$

$$1.0 \leq |CTmax/CT5| \leq 3.0;$$

$$1.0 \leq |CTmax/CT6| \leq 3.0;$$

and

$$1.0 \leq |CTmax/CT7| \leq 3.0,$$

wherein
CTmax is a maximum value of a thickness of a lens of the optical lens (10) on the optical axis (A), CT1 is a thickness of the first lens (L1) on the optical axis (A), CT2 is a thickness of the second lens (L2) on the optical axis (A), CT3 is a thickness of the third lens (L3) on the optical axis (A), CT4 is a thickness of the fourth lens (L4) on the optical axis (A), CT5 is a thickness of the fifth lens (L5) on the optical axis (A), CT6 is a thickness of the sixth lens (L6) on the optical axis (A), and CT7 is a thickness of the seventh lens (L7) on the optical axis (A).

18. The optical lens (10) according to any one of claims 14 to 17, wherein when the optical lens (10) has the maximum total track length, the optical lens (10) meets the following relational expressions:

$$|f1/f2| < 1.0;$$

$$|f2/f3| < 2.5;$$

$$|f3/f4| < 1.6;$$

$$|f4/f5| < 3.0;$$

$$|f5/f6| < 4.0;$$

and

$$|f6/f7| < 2.0,$$

wherein
f1 is a focal length of the first lens (L1), f2 is a focal length of the second lens (L2), f3 is a focal length of the third lens (L3), f4 is a focal length of the fourth lens (L4), f5 is a focal length of the fifth lens (L5), f6 is a focal length of the sixth lens (L6), and f7 is a focal length of the seventh lens (L7).

19. The optical lens (10) according to any one of claims 14 to 18, wherein the optical lens (10) meets the following relational expressions:

$$0.2 < |R14/R13| < 1.0;$$

$$1.0 < |R12/R11| < 18.0;$$

$$0.1 < |R10/R9| < 4.0;$$

$$0.1 < |R8/R7| < 1.5;$$

$$0.2 < |R6/R5| < 0.8;$$

$$0.3 < |R4/R3| < 1.0;$$

and

$$3.0 < |R2/R1| < 8.0,$$

wherein
R1 is a curvature radius of an object-side surface of the first lens (L1), R2 is a curvature radius of an image-side surface of the first lens (L1), R3 is a curvature radius of an object-side surface of the second lens (L2), R4 is a curvature radius of an image-side surface of the second lens (L2), R5 is a curvature radius of an object-side surface of the third lens (L3), R6 is a curvature radius of an image-side surface of the third lens (L3), R7 is a curvature radius of an object-side surface of the fourth lens (L4), R8 is a curvature radius of an image-side surface of the fourth lens (L4), R9 is a curvature radius of an object-side surface of the fifth lens (L5), R10 is a curvature radius of an image-side surface of the fifth lens (L5), R11 is a curvature radius of an object-side surface of the sixth lens (L6), R12 is a curvature radius of an image-side surface of the sixth lens (L6), R13 is a curvature radius of an object-side surface of the seventh lens (L7), and R14 is a curvature radius of an image-side surface of the seventh lens (L7).

20. The optical lens (10) according to any one of claims 1 to 19, wherein the optical lens (10) further comprises a stop (STO), and the stop (STO) is disposed on an object side or an image side of any lens.

21. The optical lens (10) according to claim 20, wherein an f-number of the stop (STO) is adjustable within a range of 1.0 to 4.5.

22. The optical lens (10) according to any one of claims 1 to 21, wherein all surfaces of all the lenses of the optical lens (10) are aspheric surfaces.

23. A camera module (1), comprising a photosensitive element (20), an actuator, and the optical lens (10) according to any one of claims 1 to 22, wherein the photosensitive element (20) is located on an image side of the optical lens (10) and is located on an imaging plane of the optical lens (10), and the actuator is configured to drive the first lens group (G1) and the second lens group (G2) to move.

24. An electronic device (100), comprising an image processor (2) and the camera module (1) according to claim 23, wherein the image processor (2) is communicatively connected to the camera module (1), the camera module (1) is configured to obtain image data and input the image data to the image processor (2), and the image processor (2) is configured to process the image data output to the image processor (2).

25. The electronic device (100) according to claim 24, wherein the electronic device (100) further comprises a housing (3), both the camera module (1) and the image processor (2) are accommodated in the housing (3), a light transmission hole (31) provided on the housing (3), the first lens group (G1) of the camera module (1) faces the light transmission hole (31), and when the actuator drives the first lens group (G1) away from the second lens group (G2), the first lens group (G1) is capable of extending out of the housing (3) through the light transmission hole (31).

FIG. 1

FIG. 2

FIG. 3

FIG. 4

FIG. 5

FIG. 6A

FIG. 6B

FIG. 6C

FIG. 6D

FIG. 7

FIG. 8

FIG. 9A

FIG. 9B

FIG. 10

FIG. 11

FIG. 12

FIG. 13

EP 4 361 697 A1

FIG. 14

EP 4 361 697 A1

FIG. 15

FIG. 16

82

FIG. 17

FIG. 18

FIG. 19

FIG. 20

EP 4 361 697 A1

FIG. 21

FIG. 22

FIG. 23

FIG. 24

FIG. 25

FIG. 26

EP 4 361 697 A1

FIG. 27

FIG. 28

FIG. 29

FIG. 30

EP 4 361 697 A1

FIG. 31

FIG. 32

FIG. 33

FIG. 34

FIG. 35

FIG. 36

FIG. 37

FIG. 38

EP 4 361 697 A1

FIG. 39

FIG. 40

**EP 4 361 697 A1**

# INTERNATIONAL SEARCH REPORT

| International application No. |
|---|
| **PCT/CN2022/111865** |

**A.    CLASSIFICATION OF SUBJECT MATTER**

G02B 7/00(2021.01)i；  G02B 7/04(2021.01)i；  G03B 17/12(2021.01)i；  G03B 13/32(2021.01)i

According to International Patent Classification (IPC) or to both national classification and IPC

**B.    FIELDS SEARCHED**

Minimum documentation searched (classification system followed by classification symbols)

G02B,G03B

Documentation searched other than minimum documentation to the extent that such documents are included in the fields searched

Electronic data base consulted during the international search (name of data base and, where practicable, search terms used)

CNPAT, CNKI, WPI, EPODOC: 镜头, 透镜, 直径, 第七透镜, 第7透镜, 不工作, 非工作, 不拍, 非拍, 不摄, 非摄, 距离, 间距, module, lens, mov+, camera, focal length, lens group?, distance, unwork, holder

**C.    DOCUMENTS CONSIDERED TO BE RELEVANT**

| Category* | Citation of document, with indication, where appropriate, of the relevant passages | Relevant to claim No. |
|---|---|---|
| X | JP H08220410 A (CANON K. K.) 30 August 1996 (1996-08-30) description, paragraphs [0011]-[0037], and figures 1-8 | 1-7, 20-25 |
| Y | JP H08220410 A (CANON K. K.) 30 August 1996 (1996-08-30) description, paragraphs [0011]-[0037], and figures 1-8 | 8-19 |
| Y | CN 112946853 A (HUAWEI TECHNOLOGIES CO., LTD.) 11 June 2021 (2021-06-11) description, paragraphs [0133]-[0415], and figures 1-37 | 8-19 |
| A | JP 2004252366 A (OLYMPUS CORP.) 09 September 2004 (2004-09-09) entire document | 1-25 |
| A | JP 2003177297 A (MATSUSHITA ELECTRIC INDUSTRIAL CO., LTD.) 27 June 2003 (2003-06-27) entire document | 1-25 |
| A | JP 2009216946 A (OLYMPUS IMAGING CORP.) 24 September 2009 (2009-09-24) entire document | 1-25 |
| A | US 2015092282 A1 (OLYMPUS IMAGING CORP.) 02 April 2015 (2015-04-02) entire document | 1-25 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **09 September 2022** | **27 September 2022** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

103

## INTERNATIONAL SEARCH REPORT
### Information on patent family members

International application No.

**PCT/CN2022/111865**

| Patent document cited in search report | | | Publication date (day/month/year) | Patent family member(s) | | | Publication date (day/month/year) |
|---|---|---|---|---|---|---|---|
| JP | H08220410 | A | 30 August 1996 | None | | | |
| JP | H08220410 | A | 30 August 1996 | None | | | |
| CN | 112946853 | A | 11 June 2021 | None | | | |
| JP | 2004252366 | A | 09 September 2004 | None | | | |
| JP | 2003177297 | A | 27 June 2003 | None | | | |
| JP | 2009216946 | A | 24 September 2009 | None | | | |
| US | 2015092282 | A1 | 02 April 2015 | JP | 2015072295 | A | 16 April 2015 |
| | | | | US | 9568706 | B2 | 14 February 2017 |

Form PCT/ISA/210 (patent family annex) (January 2015)

**REFERENCES CITED IN THE DESCRIPTION**

**Patent documents cited in the description**

- CN 202110939346